# EUROPÄISCHE PATENTSCHRIFT

(11) **EP 4 133 768 B1**
(45) Veröffentlichungstag und Bekanntmachung des Hinweises auf die Patenterteilung: **15.01.2025**
(21) Anmeldenummer: 21717435.8
(22) Anmeldetag: 08.04.2021
(51) Int. Cl.: H04L 9/40, H04W 12/069, H04W 12/125

(54) **MIKROCONTROLLER- ODER MIKROPROZESSOR-BASIERTES SYSTEM MIT BERECHTIGUNGSPRÜFUNG FÜR ANFRAGEN**
MICROCONTROLLER- OR MICROPROCESSOR-BASED SYSTEM WITH AUTHORIZATION VERIFICATION FOR REQUESTS
SYSTÈME À BASE DE MICROCONTRÔLEUR OU DE MICROPROCESSEUR, À CONTRÔLE D'AUTORISATION POUR DES DEMANDES

(30) Priorität: 09.04.2020 DE 102020110035
(43) Veröffentlichungstag der Anmeldung: 15.02.2023
(73) Patentinhaber: Bundesdruckerei GmbH, 10969 Berlin (DE)
(72) Erfinder: WILKE, Andreas, 13509 Berlin (DE); KOMAROV, Ilya, 13507 Berlin (DE); PAESCHKE, Manfred, 16348 Wandlitz (DE)
(74) Vertreter: Richardt Patentanwälte PartG mbB
(86) Internationale Anmeldenummer: PCT/EP2021/059184
(87) Internationale Veröffentlichungsnummer: WO 2021/204945

(56) Entgegenhaltungen:
- DE-A1- 102016 221 959
- US-A1- 2004 215 771
- US-A1- 2018 109 554
- PORAMBAGE PAWANI ET AL: "Two-phase authentication protocol for wireless sensor networks in distributed IoT applications", 2014 IEEE WIRELESS COMMUNICATIONS AND NETWORKING CONFERENCE (WCNC), IEEE, 6 April 2014 (2014-04-06), pages 2728 - 2733, XP032682950, DOI: 10.1109/WCNC.2014.6952860

## Beschreibung

### Technisches Gebiet

Die vorliegenden Darstellungen betreffen Mikrocontroller- oder Mikroprozessorbasierte Datenverarbeitungssysteme und insbesondere die Zugriffskontrolle auf deren Funktionalität durch externe Systeme.

### Stand der Technik

Mikroprozessoren und insb. Mikrocontroller sind wichtige Komponente der meisten verbundenen Geräte. Diese Bauteile unterstützen die Implementierung von Millionen von "Endknoten" für das Internet der Dinge (Internet of Things, IoT). Das IoT bezieht sich auf Technologien einer globalen IT-Infrastruktur, die es ermöglicht, physische und virtuelle Gegenstände miteinander zu vernetzen und sie durch Informations- und Kommunikationstechniken zusammenarbeiten zu lassen. Das Internet der Dinge bezeichnet die Verknüpfung eindeutig identifizierbarer physischer Objekte (things) mit einer virtuellen Repräsentation in einer Internet-ähnlichen Struktur. Die IoT-Endknoten können ganz verschiedene Elemente sein, wie z.B. Messgeräte, Sensoren, Wearable-Geräte, Displays und Preprozessoren sowie komplexe Geräte, Vorrichtungen, Fahrzeuge und Gebäudekomponenten, die mehrere Funktionen in einem einzelnen Gerät kombinieren. IoT-Endknoten dürfen aufgrund ihrer Funktion und/oder Verwendung oftmals nur eine geringe Größe und Gewicht aufweisen. Beispielsweise werden die immer kleineren eingebetteten Computer oftmals dazu verwendet, Menschen zu unterstützen, ohne abzulenken oder überhaupt aufzufallen. So werden z. B. miniaturisierte Computer, sogenannte Wearables, mit unterschiedlichen Sensoren direkt in Kleidungsstücke eingearbeitet.

Angesichts der oftmals geringen Größe von IoT-Endknoten ist in der Regel auch die Rechenkapazität und/oder Speicherkapazität von IoT Endknoten sehr begrenzt. Außerdem sind IoT Endknoten oftmals batteriebetrieben, sodass sehr energiesparende Prozessoren zum Einsatz kommen, was ebenfalls auf Kosten der Rechenleistung geht.

Beim Betrieb am weltweiten Internet müssen IoT-Geräte die Sicherheit von auf diesen Geräten gespeicherten, oftmals sensiblen Daten, gewährleisten. Ein IoT Gerät muss also in der Lage sein, die auf ihm gespeicherten sensiblen Daten vor Angriffen zu schützen und sie nur an berechtigte Instanzen auszugeben.

Ein Problem hierbei ist, dass die Prüfung von Zugriffsrechten oft erhebliche rechnerische Ressourcen erfordert, die IoT-Endknoten in der Regel nicht besitzen. IoT Mikrocontroller wurden für Geräte entwickelt, die entweder für niedrigen Energiebedarf oder hohe Leistung optimiert wurden, jedoch nicht für beides.

Diese Problematik ist über die Jahre stetig größer geworden, denn mit zunehmender Bedeutung des Internets der Dinge werden IoT-Endknoten auch für verschiedene Arten von Angriffen interessant. Beispielsweise wurden bereits Angriffe auf Internet-fähige Fernseher, Set-Top-Boxen, Babyphones, Überwachungskameras oder Uhren beobachtet. Die Geräte werden oft mit Standard-Passwörtern ausgeliefert und ihre Firmware selten aktualisiert, was sie zu attraktiven Zielen für automatisierte Angriffe aus dem Internet macht. Einmal infiziert können sie ähnlich wie Rechner eines Botnetzes orchestriert werden.

Eine bestimmte Form des Angriffs, der Denial of Service (DoS; engl. für "Verweigerung des Dienstes") Angriff, hat sich dabei als besonders problematisch erwiesen. Unter einem DoS Angriff wird ein Angriff auf eine Recheneinheit mittels einer großen Menge an Anfragen innerhalb eines kurzen Zeitfensters verstanden, welcher die Nichtverfügbarkeit der Recheneinheit aufgrund Überlastung des Datennetzes bzw. der CPUs der Recheneinheit zum Ziel hat. Im Fall einer durch eine Vielzahl von gezielten Anfragen verursachten, mutwilligen Dienstblockade spricht man von einer Denial-of-Service Attacke und, wenn die Anfragen von einer großen Zahl an Rechnern aus durchgeführt werden, von einer Distributed-Denial-of-Service attack (DDoS-Attacke, deutsch wörtlich verteilte-Verweigerung-des-Dienstes-Angriff). Da beim DDoS-Angriff die Anfragen von einer Vielzahl von Quellen ausgehen, ist es nicht möglich, den Angreifer zu blockieren, ohne die Kommunikation mit dem Netzwerk komplett einzustellen.

DoS Angriffe sind technisch vergleichsweise simpel, da sie nicht das Eindringen in das IoT-Gerät zum Ziel hat, sondern dessen Lahmlegung. Ein Schutz vor derartigen Angriffen ist für internetfähige IoT-Geräte aber auch besonders schwierig, da ein Trennen der Netzwerkverbindung oftmals einem funktionalen Ausfall des IoT-Endknotens gleichkommt. Zudem sind IoT-Endknoten aufgrund ihrer geringen Rechenkapazität im Hinblick auf DoS-Angriffe besonders vulnerabel.

Die Offenlegungsschrift DE102016221959 A1 offenbart ein Verfahren zur Zugriffskontrolle auf Datensätze. Es umfasst die Verknüpfung eines ersten Eigner-Zertifikats, das einer Nutzdaten-Datenbank zugeordnet ist, mit einem ersten Nutzer sowie die Bereitstellung einer ersten und einer zweiten Schnittstelle. Über die erste Schnittstelle kann der erste Nutzer ein zweites Eigner-Zertifikat für die Nutzdaten-Datenbank erstellen und dieses mit einem zweiten Nutzer verknüpfen um diesem zu ermöglichen, Datensätze in der Nutzdaten-Datenbank anzulegen. Über die zweite Schnittstelle kann der zweite Nutzer, der einen Datensatz in der Nutzdaten-Datenbank erstellt hat, ein Zugriffs-Zertifikat, erstellen und mit dem Nutzer-Zertifikat eines Nutzers, dem Zugriff auf diesen Datensatz gewährt werden soll, verknüpfen. Die Nutzdaten-Datenbank gewährt dem ersten Nutzer nur dann Zugriff auf einen von dem zweiten Nutzer angelegten Datensatz, wenn dem ersten Nutzer sowohl ein Eigner-Zertifikat für die Nutzdaten-Datenbank als auch ein Zugriffs-Zertifikat für den Zugriff auf den Datensatz zugeordnet ist. Die Offenlegungsschrift US2004215771 A1 offenbart ein Verfahren und Vorrichtungen zum Verbergen einer Vorrichtung eines Netzwerks. In einer bevorzugten Ausführungsform der Erfindung fügt ein Netzwerk-Client einen Validierungsschlüssel in die SEQ- und ACK-Felder einer TCP-Verbindungsanforderung (TCP-SYN) ein. Die TCP-Verbindungsanforderung wird an einen validierenden Server gesendet. Der Validierungsserver extrahiert den Validierungsschlüssel und verwendet ihn, mit anderen impliziten und expliziten Daten, die in der TCP-Verbindungsanforderung enthalten sind, um die Verbindungsaufbauanforderung zu validieren. Wenn die Verbindungsanforderung validiert wird, antwortet der validierende Server mit einem TCP-SYN/ACK, wie in der TCP-Protokollspezifikation beschrieben. Wenn die TCP-Verbindungsanforderung verweigert wird, wird die Anforderung verworfen und nichts wird an den Anforderer, in diesem Fall den Netzwerk-Client, zurück gesendet.

### Technisches Problem und grundlegende Lösungen

Mit den bekannten IoT-Endgeräten und anderen Formen von mikrocontrollerbasierten oder mikroprozessorbasierten Datenverwaltungssystemen besteht die technische Herausforderung, nur vertrauenswürdigen Personen oder Geräten Zugriff auf sensible Daten oder Funktionen des Geräts bzw. Systems zu gewähren, wobei gleichzeitig für die ggf. komplexe Zugriffskontrolle nur begrenzte Rechenkapazitäten zur Verfügung stehen. Zudem sollen die knappen Ressourcen robust gegenüber DoS-Angriffen sein.

Vor diesem Hintergrund besteht ein Bedarf an verbesserten mikrocontrollerbasierten und mikroprozessorbasierten Datenverarbeitungssystemen und entsprechenden Verfahren zur Kontrolle des Zugriffs auf Daten oder Funktionen eines solchen Systems insofern, dass die vorangehend erwähnten Nachteile damit zumindest teilweise vermeidbar sind.

Der Erfindung liegt demgegenüber die Aufgabe zugrunde, ein verbessertes Verfahren zum Betrieb eines mikrocontrollerbasierten oder mikroprozessorbasierten Datenverarbeitungssystems zu schaffen, sowie ein entsprechendes Datenverarbeitungssystem.

Die der Erfindung zugrundeliegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein Datenverarbeitungssystem, hier als "DV-System" bezeichnet. Das DV-System umfasst zumindest eine Recheneinheit, die als Mikroprozessor und/oder Mikrocontroller ausgebildet ist, ein nicht-flüchtiges Speichermedium mit einem oder mehreren Referenzberechtigungsnachweisen und eine Schnittstelle zum Empfang von Anfragen über ein Netzwerk. Das Netzwerk kann insbesondere das Internet sein. Jeder Referenzberechtigungsnachweis ist in Form eines numerischen Datenwerts ausgebildet.

Das DV-System ist dazu ausgebildet, das folgende Verfahren durchzuführen:
- Empfang einer Anfrage über die Schnittstelle von einer Anfrageeinheit;
- Prüfen, ob die Anfrage einen Berechtigungsnachweis enthält, der identisch ist zu einem der Referenzberechtigungsnachweise, durch die zumindest eine Recheneinheit;
- Falls die Prüfung ergibt, dass die Anfrage diesen Berechtigungsnachweis nicht enthält, Abbruch der Prüfung, ohne eine Antwort irgendeiner Form an die Anfrageeinheit zurückzugeben, und Trennung der Netzwerkverbindung zu der Anfrageeinheit durch das DV- System.

Ausführungsformen der Erfindung können den Vorteil aufweisen, dass diese erste Prüfung auf eine sehr ressourcenschonende Weise durchgeführt werden kann. Bei dem Referenzberechtigungsnachweis handelt es sich um einen numerischen Wert. Eine Prüfung auf Identität zweier Werte kann von Prozessoren und insb. auch Mikroprozessoren auf höchst effiziente, ressourcenschonende Weise durchgeführt werden. Somit kann das DV-System durch einen Vergleich eines mit der Anfrage erhaltenen Wertes mit einigen im DV-System hinterlegten Referenzberechtigungsnachweisen bereits Angreifer und eine Vielzahl sonstiger unberechtigter Systeme erkennen, denn diesen ist der Referenzberechtigungsnachweis nicht bekannt. Auch ein leistungsschwacher Mikroprozessor kann mehrere dieser Zahlenwertvergleiche in kurzer Zeit durchführen.

Ausführungsformen der Erfindung können zudem den Vorteil aufweisen, dass das DV-System dann, wenn die erste Prüfung negativ ausfällt, keine Antwort zurückgibt, noch nicht einmal eine Fehlermeldung. Dadurch kann verhindert werden, dass ein potentieller Angreifer anhand der Fehlermeldung Rückschlüsse auf das Authentifizierungsverfahren machen kann. In jedem Fall erfährt der Angreifer durch die Antwort, dass unter der vom Angreifer benutzten Adresse auch tatsächlich ein DV-System erreichbar ist. Dadurch, dass das DV-System keinerlei Antwort zurückgibt, wird der Angreifer darüber im Unklaren gelassen, ob sein Angriff überhaupt ein real existierendes DV-System getroffen hat. Dies erhöht die Sicherheit, denn dem Angreifer wird die Motivation und die Möglichkeit genommen, sich näher mit einer Antwort des DV-Systems auseinanderzusetzen und den nächsten Angriff entsprechend anzupassen.

Nach der Erfindung trennt das DV-System die Netzwerkverbindung zu der Anfrageeinheit falls die Prüfung ergibt, dass die Anfrage diesen Berechtigungsnachweis nicht enthält. Die Netzwerkverbindung zwischen dem DV-System und der Anfrageeinheit kann z.B. auf einer höheren Ebene des OSI-Modells bestehen, insbesondere der Applikationsebene.

Die Erfindung hat den Vorteil, dass die Verbindungstrennung sicher stellt, dass zumindest zunächst von der Anfrageeinheit keine weiteren Anfragen mehr gesendet werden können, die ggf. Schadcode enthalten könnten. Erst muss wieder eine Netzwerkverbindung, z.B. eine SSH-Verbindung oder eine Verbindung gemäß eines anderen Datenaustauschprotokolls re-etabliert werden. Beispielsweise kann das DV-System aber so konfiguriert sein, dass es einen erneuten Aufbau einer Datenübertragungsverbindung zu der gleichen Anfrageeinheit nur nach einem zeitlichen Mindestabstand, z.B. von 5 Minuten oder einer Stunde, erlaubt. Somit kann sichergestellt werden, dass der Mikroprozessor bzw. Mikrocontroller des DV-Systems nicht durch wiederholtes Schließen und Neuaufbau einer Datenaustauschverbindung zu der Anfrageeinheit blockiert wird.

Beispielsweise kann das DV-System über eine Netzwerkverbindung mit anderen DV-Systemen und/oder der Anfrageeinheit verbunden sein. Die Netzwerkverbindung kann z.B. als eine Funkverbindung ausgebildet sein. Zusätzlich oder alternativ dazu kann die Netzwerkverbindung auch über z.B. Bluetooth Low Energy (BLE) und WiFi aufgebaut werden.

Nach Ausführungsformen der Erfindung handelt es sich bei dem DV-System um ein eingebettetes System.

Ein eingebettetes System (auch englisch embedded system) ist ein elektronischer Computer, der in einen technischen Kontext eingebunden (eingebettet) ist, wobei der Computer entweder Überwachungs-, Steuerungs- oder Regelfunktionen übernimmt und/oder für eine Form der Daten- bzw. Signalverarbeitung zuständig ist. Bei dieser Daten- bzw. Signalverarbeitung kann es sich z.B. um das Ver- bzw. Entschlüsseln, Codieren bzw. Decodieren oder Filtern von Daten, insbesondere Messdaten, handeln. Ein eingebettetes System kann z.B. ein Gerät der Medizintechnik, ein Haushaltsgerät wie z.B. eine Waschmaschine, ein Fahrzeug oder Flugzeug, ein Fernsehgerät, einen Router, ein Mobiltelefon oder allgemein ein Gerät der Unterhaltungselektronik sein.

Oft werden eingebettete Systeme speziell an eine Aufgabe angepasst. Aus Kostengründen wird eine optimierte, gemischte Hardware-Software-Implementierung gewählt. Dabei vereinigt eine solche Konstruktion die große Flexibilität von Software mit der Leistungsfähigkeit der Hardware. Die Software dient dabei sowohl zur Steuerung des Systems selbst als auch zur Interaktion des Systems mit der Außenwelt über definierte Schnittstellen oder Protokolle (z. B. LIN-Bus, CAN-Bus, ZigBee für drahtlose Kommunikation oder IP über Ethernet).

Nach Ausführungsformen ist eine Vielzahl von ansonsten autonomen, eingebetteten Systemen miteinander vernetzt um ein komplexes Gesamtsystem bereitzustellen (so im Fahrzeug oder Flugzeug).

Nach Ausführungsformen umfasst das DV-System ferner eine software- oder hardwarebasierte Funktionalität. Das DV-System ist dazu konfiguriert, nur dann falls die Prüfung ergibt, dass die Anfrage diesen Berechtigungsnachweis enthält, eine weitere Berechtigungsprüfung durchzuführen. Das DV-System ist dazu konfiguriert, die Funktionalität nur dann auszuführen, wenn die weitere Berechtigungsprüfung ergibt, dass die Anfrageeinheit zur Veranlassung der Ausführung der Funktionalität berechtigt ist.

Eine softwarebasierte Funktionalität kann z.B. in von der zumindest einen Recheneinheit ausführbaren Instruktionen ("Software") implementiert sein. Beispielsweise kann die softwarebasierte Funktionalität vorsehen, dass die Anfrageeinheit Daten von dem DV-System empfängt, z.B. Sensordaten, die ein oder mehrere Sensoren des DV-Systems erfasst und lokal gespeichert haben, oder ein trainiertes ML-Modell, das auf lokal erfassten Daten des DV-Systems trainiert wurde, oder eine Vorhersage, die eine Software des DV-Systems z.B. auf Basis von in der Anfrage enthaltenen Daten und/oder lokal auf dem DV-System vorhandenen berechnet hat. Bei der softwarebasierten Funktionalität kann es sich aber auch um die Funktionalität handeln, Daten in den Speicher des DV-Systems zu schreiben. Bei den Daten kann es sich z.B. um Daten handeln, die in der Anfrage enthalten sind. Beispielsweise kann es sich bei den in der Anfrage enthaltenen Daten um ein trainiertes ML-Modell eines anderen DV-Systems oder der Anfrageeinheit handeln, wobei die Anfrage z.B. der Synchronisation mehrerer ML-Modelle zwischen den DV-Systemen und/oder zwischen dem DV-System und der Anfrageeinheit dient.

Eine hardwarebasierte Funktionalität kann z.B. in dem Beginn der Erfassung von Sensordaten durch einen Sensor des DV-Systems und/oder in einer von dem DV-System veranlassten Zustandsveränderung einer Hardwarekomponente des DV-Systems oder eines von diesem gesteuerten Objekts bestehen. Beispielsweise kann die Zustandsänderung eine mechanische Änderung sein, z.B. das Öffnen eines Tores, das Schließen einer Schließanlage, etc.

Ausführungsformen können den Vorteil haben, dass die weitere Prüfung nur dann durchgeführt wird, wenn die erste Prüfung ergab, dass der Berechtigungsnachweis der Anzeige dem DV-System bekannt ist und in Form eines identischen Referenzberechtigungsnachweis im DV-System gespeichert ist. Dies schont die Rechenkapazität des DV-Systems. Während die erste Prüfung nur einen oder mehrere Vergleiche numerischer Werte auf Identität beinhaltete, kann die nachfolgende Prüfung durchaus komplexer und damit vergleichsweise rechenintensiv sein. Da die weitere Prüfung aber nur durchgeführt wird, wenn die erste Prüfung bereits positiv verlief, fällt dieser Aufwand nur für Anfragen von Anfrageeinheiten an, die mit einiger Wahrscheinlichkeit auch hinreichend berechtigt sind, die gewünschte Funktion durch das DV-System ausführen zu lassen. Somit kann ein guter Kompromiss zwischen dem Wunsch nach geringer Rechenlast einerseits und dem Wunsch zur Durchführung komplexer und entsprechend sicherer Authentifizierungsverfahren.

Gemäß Ausführungsformen der Erfindung ist das DV-System dazu konfiguriert, Ergebnisses der Ausführung der Funktionalität an die Anfrageeinheit zurückzugeben.

Beispielsweise können von einem Sensor des DV-Systems erfasste Messwerte, von einer Software des DV-Systems berechnete Vorhersagen, Ergebnisse eines Kontrollbefehls zum Öffnen oder Schließen von Türen oder Toren an die Anfrageeinheit zurückgegeben werden.

Nach Ausführungsformen beinhaltet das Speichermedium des DV-Systems eine Nutzdaten-Datenbank. Die Nutzdaten-Datenbank beinhaltet mehrere Datensätze. Ein Zugriff auf zumindest einen der Datensätze ist zur Durchführung der Funktion erforderlich ist; In manchen Ausführungsformen kann das Speichermedium auch mehrere derartiger Nutzdaten-Datenbanken beinhalten.

Das Speichermedium des DV-Systems umfasst ferner eine ID-Datenbank. In der ID-Datenbank sind eine Vielzahl von Nutzer-Zertifikaten und eine Vielzahl von Zugriffs-Zertifikaten gespeichert.

Ein Nutzer-Zertifikat ist ein einem Nutzer eindeutig zugewiesener Datenwert. Beispielsweise kann es sich bei dem Nutzer-Zertifikat um eine Zahl oder vorzugsweise um ein von einer Zertifizierungsstelle ausgestelltes Zertifikat handeln, z.B. um ein X.509 Zertifikat.

Ein Zugriffs-Zertifikat ist ein numerischer Datenwert, der einem Nutzer durch Zuweisung dieses Zugriffs-Zertifikat an dessen Nutzer-Zertifikat in der ID-Datenbank eine bestimmte Art des Datensatzzugriffs auf Datensätze der Nutzdaten-Datenbank gewährt.

Ausführungsformen können vorteilhaft sein, das die Trennung von Nutzdaten und Nutzer-Zertifikaten sowie assoziierten Zugriffsrechten ein sehr komplexes, flexibles und feingranulares Zugriffsrechtemanagement ermöglichen kann.

Beispielsweise können eine bestimmten Nutzer bzw. dessen Nutzer-Zertifikat in der ID-Datenbank drei unterschiedliche Zugriffs-Zertifikate in Form von drei unterschiedlichen numerischen Werten zugewiesen sein. Das erste Zugriffszertifikat berechtigt zum Lesen auf Datensätze, die von diesem Nutzer erstellt wurden. Das zweite Zugriffszertifikat berechtigt zum Schreiben bzw. Modifizieren des von diesem Nutzer erstellten Datensatzes. Und das dritte Zugriffszertifikat erlaubt es, auf einen Index zuzugreifen, der Feldwerte dieses Datensatzes enthält.

Die weitere Berechtigungsprüfung umfasst eine Prüfung, ob die Anfrage ein Nutzer-Zertifikat enthält, dem in der ID-Datenbank eines der Zugriffs-Zertifikate zugeordnet ist, welches die Anfrageeinheit zur Veranlassung der Ausführung der Funktionalität berechtigt. Das DV-System ist dazu konfiguriert, die Ausführung dieser Funktionalität nur dann zu veranlassen, wenn die Anfrage ein solches Nutzer-Zertifikat enthält.

Ausführungsformen können vorteilhaft sein, da die Verwendung verschiedener Zugriffs-Zertifikate für unterschiedliche Zugriffsformen ein höchst feingranulares Zugriffsmanagement ermöglichen kann. Beispielsweise kann das DV-System drei unterschiedliche Typen von Zugriffsrechten unterscheiden, die jeweils als einzigartiger numerischer Wert ausgebildet sein kann. Die Art des Zugriffs der durch das entsprechende Zugriffszertifikat gewährt wird kann z.B. durch die Speicherposition bzw. das Feld dieses Zugriffs-Zertifikats in der ID-Datenbank und/oder in Metadaten der Zugriffs-Zertifikate und/oder durch numerische Prefixes oder Suffixes spezifiziert sein.

Nach Ausführungsformen ist jeder der Referenzberechtigungsnachweise eines der Zugriffs-Zertifikate der ID-Datenbank.

Beispielsweise können sämtliche Zugriffs-Zertifikate als rein numerische Werte ausgebildet sein. Jedem Nutzer können dabei so viele DV-Systemweit einmalige numerische Werte als Zugriffszertifikate zugewiesen sein wie es Zugriffsarten gibt, die individuell erlaubt oder verhindert werden sollen. Die Verwendung numerischer Werte hat den Vorteil, dass eine Prüfung ob ein Zugriffsrecht vorliegt sehr schnell und unter geringem rechnerischen Aufwand durch Vergleich zweiter Zahlen durchgeführt werden kann.

Nach Ausführungsformen ist das Zugriffs-Zertifikat ausgewählt aus einer Gruppe umfassend:
- ein Lesezugriffs-Zertifikat, welches einem Nutzer einen lesenden Zugriff auf den zumindest einen Datensatz ermöglicht;
- ein Schreibzugriffs-Zertifikat, welches einem Nutzer einen modifizierenden Zugriff auf den zumindest einen Datensatzes ermöglicht; der Schreibzugriff kann z.B. das Löschen (DELETE) oder Ändern (UPDATE) eines Datensatzes beinhalten;
- ein Indexzugriffs-Zertifikat, welches einem Nutzer Kenntnis der Existenz des zumindest einen Datensatzes in der Nutzdaten-Datenbank und einen lesenden Zugriff auf Metadaten des zumindest einen Datensatzes ermöglicht.

Beispielsweise ermöglicht ein Indexzugriffs-Zertifikat es einem Nutzer oder einem anfragenden System, eine statistische Auswertung mehrerer Datensätze zu erhalten, etwa bezüglich der Frage, auf wie viele Datensätze einer Nutzdaten-Datenbank ein bestimmter Nutzer Lesezugriff oder Schreibzugriff besitzt oder wie viele Datensätze in dem Nutzdatenfeld die Wörter "Kalibrierungsfehler" beinhalten.

Unter einem "Nutzer" kann hier eine Person aber auch ein weiteres DV-System und/oder die Anfrageeinheit bezeichnet sein, da ein solches DV-System als ein "virtueller Nutzer" angesehen werden kann.

Die Verwendung mehrerer unterschiedlicher Typen von Zugriffs-Zertifikaten für unterschiedliche Zugriffsarten und die individuelle Zuweisung dieser Zertifikatstypen an einzelne Nutzer um diesen den Zugriff auf die von einem Nutzer erstellte Daten zu ermöglichen, kann vorteilhaft sein, da dadurch eine besonders feingranulare Kontrolle des Zugriffs auf die Daten ermöglicht wird.

Nach Ausführungsformen beinhaltet die Anfrage ein Nutzer-Zertifikat, hier als Anfragenutzer-Zertifikat bezeichnet. Die Datensätze der Nutzdatenbank beinhalten jeweils das Zugriffs-Zertifikat desjenigen Nutzers, welcher den Datensatz erstellt hat, als Bestandteil des Datensatzes in einem eigenen Feld des Datensatzes.

Vorzugsweise handelt es sich bei den in den entsprechenden Feldern des Datensatz gespeicherten Zugriffs-Zertifikaten um reine Zahlenwerte, nicht um komplexe x509 Zertifikate. Metadaten bezüglich der Gültigkeit und andere Aspekte können getrennt von dem eigentlichen Zugriffs-Zertifikat in der ID-Datenbank gespeichert sein. Vorzugsweise enthält jeder von einem bestimmten Nutzer in einer Nutzdaten-Datenbank erstellte Datensatz in seinen entsprechenden Feldern sämtliche Zugriffs-Zertifikate des diesen Datensatz erstellenden Nutzers. Wird beispielsweise ein Datensatz DS von Nutzer (z.B. Nutzer, lokaler Prozess oder externes DV-System) "U1" erstellt und der Nutzer-U1 hat gemäß dem Inhalt der ID-Datenbank genau 3 Typen von Zertifikaten (ein Lesezugriffs-Zertifikat "U1.Z-Zert[R]", ein Schreibzugriffs-Zertifikat "U1.Z-Zert[W]" und ein Indexzugriffs-Zertifikat "U1.Z-Zert[S]"), so werden Kopien genau dieser 3 Zugriffs-Zertifikate im Zuge der Speicherung des Datensatzes DS aus der ID-Datenbank erstellt und die in die entsprechenden Felder des Datensatzes DS gespeichert. Wenn nun der Nutzer-U1 einem anderen Nutzer U2 Leserechte bezüglich des Datensatzes DS einräumt, bedeutet das, dass in der ID-Datenbank eine Zuordnung dieses Lesezugriffs-Zertifikat "U1.Z-Zert[R]" des Nutzers U1 und des Nutzer-Zertifikats des Nutzers U2 gespeichert wird. Falls der Nutzer (z.B. Nutzer, lokaler Prozess oder externes DV-System) "U2" nun zu einem späteren Zeitpunkt auf den Datensatz DS zugreifen will, sendet die Nutzdaten-Datenbank, die den Datensatz DS beinhaltet, in Antwort auf die Zugriffsanfrage des Nutzers U2 automatisch eine Berechtigungsanfrage an die ID-Datenbank zusammen mit den in dem Datensatz DS gespeicherten Zugriffsrechten des Erstellers U1. Die ID-Datenbank prüft daraufhin, ob ein dem Nutzer U2 zugeordnetes Nutzer-Zertifikat in der ID-Datenbank mit ein oder mehreren der in dem Datensatz DS gespeicherten Zugriffsrechte des Erstellers U1 verknüpft gespeichert ist. Nur falls dies der Fall ist, darf er auf den Datensatz zugreifen.

Nach Ausführungsformen umfasst das zumindest eine Zugriffs-Zertifikat, dass vorzugsweise als Bestandteil des erstellten Datensatzes gespeichert ist, mehrere Zugriffs-Zertifikate für jeweils andere Zugriffsarten. Die mehreren Zugriffs-Zertifikate umfassen zum Beispiel ein Schreibzugriffs-Zertifikat Z.Zert_U2[W] des erstellenden Nutzers, und/oder ein Lesezugriffs-Zertifikat Z.Zert_U2[R] des erstellenden Nutzers und/oder ein Indexzugriffs-Zertifikat Z.Zert_U2[S].

Nach Ausführungsformen wird die Prüfung und/oder Verwaltung der Zugriffsberechtigungen, also z.B. die Erzeugung und Prüfung von Nutzer-Zertifikaten, Eigner-Zertifikaten, Zugriffs-Zertifikaten und/oder entsprechenden Kettenobjekten von einem auf dem DV-System instanziierten Zugriffs-Verwaltungssystem, das z.B. als Zugriffs-Verwaltungsprogramm ausgebildet sein kann, implementiert.

Das Zugriffs-Verwaltungssystem erzeugt gemäß Ausführungsformen der Erfindung automatisch für jede der Zugriffsarten eine Indexstruktur aus den Zugriffs-Zertifikaten sämtlicher Datensätze, die diese Zugriffsart spezifiziert. So kann zum Beispiel ein erster Index für die Schreibzugriffs-Zertifikate, ein zweiter Index für die Lesezugriffs-Zertifikate und ein dritter Index für die Index Zugriffs-Zertifikate sowie ein weiterer Index für die Nutzdaten selbst erstellt werden. In Antwort auf eine Datenbankfrage eines Nutzers, die auf einen oder mehrere der für die Nutzdaten-Datenbank erstellten Indices der Zugriffs-Zertifikate zugreift, prüft das Zugriffs-Verwaltungssystem, ob dem Nutzer ein Indexzugriffs-Zertifikat (Z.Zert_U2[S]), welches einem Nutzer Kenntnis der Existenz des Datensatzes in der Nutzdaten-Datenbank und einen lesenden Zugriff auf Metadaten des Datensatzes ermöglicht, zugewiesen ist. Diese Prüfung kann insbesondere durch die Nutzdaten-Datenbank in Interoperation mit der ID-Datenbank und gegebenenfalls weiteren Modulen, zum Beispiel dem ID-Management-Modul, erfolgen. Die Nutzdaten-Datenbank ermöglicht dem anfragenden Nutzer die Verwendung der ein oder mehreren Indices zur Ausführung der Datenbankabfrage nur dann, wenn dem anfragenden Nutzer das Indexzugriffs-Zertifikat zugewiesen ist.

Dies kann vorteilhaft sein, da über den Index eine schnelle Abfrage einer Zugriffsberechtigungsstatistik über die Datensätze einer Datenbank im Hinblick auf mehrere verschiedene Nutzer durchgeführt werden kann. Aus dieser geht dann zum Beispiel hervor, welche der bei dem Zugriffs-Verwaltungssystem registrierten Nutzer im Hinblick auf welche Datensätze zum Lesen, Schreiben und oder Indexzugriff berechtigt ist. Allerdings wird über eine Anfrage, die durch das Indexzugriffs-Zertifikat ermöglicht wird, nur eine statistische Auskunft über mehrere Datensätze gegeben, ein lesender oder schreibenden Zugriff auf die Nutzdaten der Datensätze ist in den Rechten, die einen Indexzugriffs-Zertifikat gewährt, nicht umfasst.

Ausführungsformen können den Vorteil haben, dass das Zugriffs-Zertifikat getrennt von den übrigen Nutzdaten indiziert werden kann, sodass über den Index eine schnelle Suche nach Datensätzen, die ein bestimmter Nutzer erstellt hat, möglich ist.

In der ID-Datenbank sind eine Vielzahl Zugriffsermächtigungskettenobjekten gespeichert. Jedes Zugriffsermächtigungskettenobjekt beinhaltet eines der Zugriffs-Zertifikate und ein oder mehrere der Nutzer-Zertifikate, wobei die Reihung der Nutzer-Zertifikate in dem Zugriffsermächtigungskettenobjekt die Sequenz der Nutzer widergibt, die dieses Zugriffs-Zertifikat einem jeweils anderen Nutzer, dessen Nutzer-Zertifikat in dem Zugriffsermächtigungskettenobjekt enthalten ist, zugewiesen haben. Die Reihung der Nutzer-Zertifikate in dem Zugriffsermächtigungskettenobjekt gibt die Sequenz der Gewährung des in dem Zugriffs-Zertifikat spezifizierten Rechtes ausgehend von dem durch das erste Nutzer-Zertifikat in dem Zugriffsermächtigungskettenobjekt repräsentierten Nutzers an.

Die weitere Berechtigungsprüfung umfasst eine Prüfung, ob in der ID-Datenbank ein Zugriffsermächtigungskettenobjekt existiert, das ein Zugriffs-Zertifikat beinhaltet, das identisch ist zu dem in der Anfrage enthaltene Berechtigungsnachweis, wobei dieses Zugriffsermächtigungskettenobjekt dieses Zugriffs-Zertifikat dem Anfragenutzer-Zertifikat direkt oder über eine Kette aus ein oder mehreren weiteren Nutzer-Zertifikaten zuweist, wobei diese Zuweisung die Gewährung des in dem Zugriffs-Zertifikat spezifizierten Rechtes an den durch das Anfragenutzer-Zertifikat repräsentierten Anfrage-Nutzers belegt.

Die weitere Berechtigungsprüfung ergibt nur dann, wenn die ID-Datenbank ein solches Zugriffsermächtigungskettenobjekt enthält, dass die Anfrageeinheit zur Veranlassung der Ausführung der Funktionalität berechtigt ist.

Ausführungsformen der Erfindung können den Vorteil haben, dass einzelnen Nutzern bzw. DV-Systemen die Möglichkeit gegeben werden kann, mittels Zugriffsermächtigungskettenobjekten Zugriffsrechte auf eigene (selbst erstellte) Datensätze an weitere Nutzer in delegierbarer oder nicht-delegierbarer Form anderen Nutzern bzw. DV-Systemen einzuräumen.

Nach Ausführungsformen beinhaltet die Ausführung der Funktionalität eine Erzeugung von einem oder mehreren neuen Datensätzen in der Nutzdaten-Datenbank. Der Nutzdaten-Datenbank ist ein Eigner-Zertifikat zugeordnet. Das Eigner-Zertifikat in der ID-Datenbank einem Nutzer-Zertifikat eines Nutzers zugeordnet. Ein Eigner-Zertifikat ist ein Zertifikat, das einer oder mehreren Nutzdaten-Datenbanken zugeordnet ist und jedem Nutzer, dem es zugeordnet ist, das Recht gewährt, Datensätze in dieser Nutzdaten-Datenbank anzulegen.

Die weitere Berechtigungsprüfung umfasst eine Prüfung, ob die Anfrage ein Nutzer-Zertifikat enthält, welches in der ID-Datenbank dem Eigner-Zertifikat der Nutzdaten-Datenbank zugeordnet ist, wobei die weitere Berechtigungsprüfung nur dann, wenn dies der Fall ist, ergibt, dass die Anfrageeinheit zur Veranlassung der Ausführung der Funktionalität berechtigt ist.

Dies kann vorteilhaft sein, da jeder Nutzer bzw. jedes DV-System, dem ein Nutzer-Zertifikat in der ID-Datenbank zugewiesen ist, auch auf der untersten "Rechte-Ebene", volle Kontrolle über die von ihm erstellten Datensätze der Nutzdaten-Datenbank erlangt: auch wenn ein anderer Nutzer, z.B. ein anderes DV-System, dem Nutzer, dem das DV-System zugewiesen ist, zunächst einmal durch Ausstellung eines Eigner-Zertifikats erlauben muss, überhaupt Daten in einer Nutzdaten-Datenbank anzulegen, so bedeutet dies nicht, dass dadurch automatisch auch lesenden oder manipulierenden Zugriff auf die von diesem Nutzer erstellten Daten haben. Damit wird der Datenschutz enorm erhöht, denn bei dem die Daten erzeugenden Nutzer bzw. externen DV-System kann es sich um externe Systeme handeln, welchen nicht komplett vertraut wird. Beispielsweise kann das erste Eigner-Zertifikat für eine Nutzdaten-Datenbank an einen Besitzer des DV-Systems ausgestellt werden, welcher dann wiederum weitere Eigner-Zertifikate an das mit der technischen Wartung des DV-Systems betrauten Personal und/oder an ein externes DV-System ausstellt. Dies bedeutet aber nicht automatisch, dass dieser Besitzer auf die Daten, die das technische Personal oder das externe DV-System dann in dieser Nutzdaten-Datenbank erstellt, auch lesen können. Dies ist vielmehr nur möglich, wenn ein Nutzer, der einen bestimmten Datensatz anlegt, ein oder mehreren Zugriffsrechte bezüglich der von diesem Nutzer erstellten Datensätzen explizit an den Besitzer zuweist. In einem vorteilhaften Aspekt können manche Ausführungsformen also ein hohes Maß an Datenschutz gewährleisten, da eine Prüfung zweier unabhängiger Parameter vor Zugriffsgewährung erfolgt (sowohl bezüglich der Eignerschaft als auch bezüglich der Zugriffsberechtigung).

In einem weiteren Aspekt können Ausführungsformen der Erfindung sicherstellen, dass technische Administratoren, die z.B. das DV-System bereitstellen und administrieren, im Hinblick auf die Zugriffsrechte auf die in diesen Datenbanken gespeicherten Informationen keine besonderen Zugriffsrechte besitzen.

Nach Ausführungsformen ist die Nutzdaten-Datenbank des DV-Systems frei von Zugriffsermächtigungskettenobjekten und die Datensätze der Nutzdaten-Datenbank neben den Nutzdaten nur die Zugriffs-Zertifikate beinhalten, die dem Nutzer, welcher diesen Datensatz erstellt hat, Zugriff auf diesen Datensatz gewähren.

Nach Ausführungsformen ist die ID-Datenbank dazu ausgebildet, auf Anfrage Berechtigungstoken für einen anfragenden Nutzer (z.B. für ein anfragendes DV-System, dem ein Nutzer-Zertifikat zugewiesen ist) zu erzeugen. Die Nutzdaten-Datenbank ist dazu ausgebildet, die Berechtigung auf Basis des Berechtigungstokens zu prüfen.

Ausführungsformen können den Vorteil haben, dass die Trennung von Nutzdatenhaltung in einer Datenbank und die Speicherung von Zugriffs- und Nutzer-Zertifikaten in einer anderen Datenbank in Kombination mit der Ausstellung und Prüfung von Berechtigungstoken im Zusammenwirken der beiden Datenbanken eine sehr feingranulare Zugriffskontrolle ermöglicht. Die damit einhergehenden Rechenoperationen werden erst im Zuge der weiteren Berechtigungsprüfung durchgeführt, also nur dann wenn die initiale Prüfung erfolgreich beendet wurde. Zudem können Ausführungsformen den Vorteil haben, dass ein Export von Nutzdaten in andere DV-Systeme möglich ist, ohne das gesamte in einem bestimmten DV-System verwendete Zugriffsrechtemanagement, das im Wesentlichen in der ID-Datenbank gespeichert ist, ebenfalls auf das andere DV-System zu übertragen, sodass hier jedes DV-System weiterhin sein eigenes Rechtemanagement aufrechterhalten kann.

Nach Ausführungsformen umfasst die Anfrage eine Zugriffsanfrage eines Anfrage-Nutzers (Anfrageeinheit oder ein Nutzer, dem diese zugeordnet ist) auf einen Datensatz, den ein Ersteller-Nutzer in der Nutzdaten-datenbank angelegt hat. Das DV-System ist konfiguriert zum:
- Ermitteln der Zugriffs-Zertifikate des Ersteller-Nutzers (also eines Nutzers oder DV-Systems, welches diesen Datensatz initial erzeugt und in der Nutzdaten-Datenbank gespeichert hat), die in der Nutzdaten-Datenbank als Bestandteil des einen Datensatzes gespeichert sind, durch die Nutzdaten-Datenbank;
- Senden des Anfrage-Nutzer-Zertifikats, das dem Nutzer der Anfrageeinheit zugeordnet ist, und der ermittelten Zugriffs-Zertifikate, an die ID-Datenbank;
- In Antwort auf den Empfang des Anfrage-Nutzer-Zertifikats und der ermittelten Zugriffs-Zertifikate, Generierung eines Berechtigungstokens durch die ID-Datenbank, wobei der Berechtigungstoken angibt, ob der Anfrage-Nutzer dem einen Datensatz durch zumindest eines der Zugriffsermächtigungskettenobjekte zugewiesen ist;
- Übermittlung des Berechtigungstokens von der ID-Datenbank an die Nutzdaten-Datenbank;
- Prüfung, durch die Nutzdaten-Datenbank, anhand des Berechtigungstoken, ob dem Anfrage-Nutzer ob dem Anfrage-Nutzer die erforderlichen Zugriffsrechte in Form von Zugriffs-Zertifikate in Bezug auf den einen Datensatz zugewiesen sind;

Die Nutzdaten-Datenbank ist dazu konfiguriert, dem Anfrage-Nutzer Zugriff auf den einen Datensatz nur in dem Umfang der Zugriffs-Zertifikate zu gewähren, welche dem Anfrage-Nutzer in dem Berechtigungstoken zugewiesenen sind.

Nach manchen Ausführungsformen wird zusätzlich noch das Vorliegen eines Eigner-Zertifikats in die Prüfung einbezogen. Beispielsweise umfasst die Anfrage eine Zugriffsanfrage eines Anfrage-Nutzers auf einen Datensatz, den ein Ersteller-Nutzer in der Nutzdaten-datenbank angelegt hat. Das DV-System ist konfiguriert zum:
- Ermitteln der Zugriffs-Zertifikate des Ersteller-Nutzers (also eines Nutzers oder DV-Systems, welches diesen Datensatz initial erzeugt und in der Nutzdaten-Datenbank gespeichert hat), die in der Nutzdaten-Datenbank als Bestandteil des einen Datensatzes gespeichert sind, durch die Nutzdaten-Datenbank;
- Senden des Anfrage-Nutzer-Zertifikats, das dem Nutzer der Anfrageeinheit zugeordnet ist, und der ermittelten Zugriffs-Zertifikate, an die ID-Datenbank;
- In Antwort auf den Empfang des Anfrage-Nutzer-Zertifikats und der ermittelten Zugriffs-Zertifikate, Generierung eines Berechtigungstoken durch die ID-Datenbank, wobei der Berechtigungstoken angibt, ob der Anfrage-Nutzer einem Eigner-Zertifikat der Nutzdaten-Datenbank durch zumindest eines der Eignerschaftsermächtigungskettenobjekte zugewiesen ist und ob der Anfrage-Nutzer dem einen Datensatz durch zumindest eines der Zugriffsermächtigungskettenobjekte zugewiesen ist;
- Übermittlung des Berechtigungstoken von der ID-Datenbank an die Nutzdaten-Datenbank;
- Prüfung, durch die Nutzdaten-Datenbank, anhand des Berechtigungstoken, ob dem Anfrage-Nutzer ein Eigner-Zertifikat für die Nutzdaten-Datenbank zugewiesen ist und ob dem Anfrage-Nutzer die erforderlichen Zugriffsrechte in Form von Zugriffs-Zertifikate in Bezug auf den einen Datensatz zugewiesen sind;

Die Nutzdaten-Datenbank ist dazu konfiguriert, dem Anfrage-Nutzer einen Aufbau einer Datenbankverbindung zu der Nutzdaten-Datenbank nur dann zu gewähren, wenn diesem ein Eigner-Zertifikat für die Nutzdaten-Datenbank zugewiesen ist und dem Anfrage-Nutzer Zugriff auf den einen Datensatz nur in dem Umfang zu gewähren, welche dem Anfrage-Nutzer die diesem in dem Berechtigungstoken zugewiesenen Zugriffs-Zertifikate einräumen.

Dies kann vorteilhaft sein, da einem Nutzer, der kein Eigner-Zertifikat hat, von vorneherein schon der Verbindungsaufbau zu der Datenbank verwehrt wird. Somit kann auf einfache Weise global sichergestellt werden (z.B. durch Entzug des Eigner-Zertifikats), dass ein bestimmter Nutzer (bzw. bestimmter lokaler Prozess oder bestimmtes externes DV-System oder Anfrageeinheit) auf keinerlei Daten einer bestimmten Nutzdaten-Datenbank mehr zugreifen kann, ohne dass hierfür ggf. eine große Zahl an Nutzern, die diesem Nutzer ein Zugriffsrecht für die von ihnen jeweils erstellte Daten eingeräumt haben, diesem einen Nutzer die Zugriffsrechte einzeln entziehen müssten. Durch Zuweisung oder Entziehung (z.B. Invalidierung oder Verweigerung einer erneuten Ausstellung nach dem Ablauf eines aktuellen Eigner-Zertifikats (typische Validitätsdauer z.B. innerhalb einiger Tage, Wochen oder Monate)) kann also ein relativ weitreichender, global gut kontrollierbarer Zugriffsschutz für sämtliche in einer Datenbank gespeicherte Daten bereitgestellt werden.

Beispielsweise kann es sich bei der Anfrage um eine Anfrage handeln, einen künftigen technischen Parameterwert vorherzusagen und zurückzugeben. Bei dem Datensatz, auf den Zugriff begehrt wird, kann es sich z.B. um ein Machine-Learning Modell handeln, welches in einem Trainingsprozess auf lokalen Trainingsdaten gelernt hat, diesen künftigen Parameterwert auf Basis anderer Parameterwerte vorherzusagen. Beispielsweise könnte der vorherzusagende Parameterwert der voraussichtliche Zeitpunkt sein, wann ein bestimmtes Bauteil, das als DV-System fungiert, aufgrund von Materialermüdung ausgetauscht werden muss, wobei die Parameterwerte auf deren Basis diese Vorhersage berechnet wird aktuelle Schwingungsparameterwerte sind, die von Sensoren dieses Bauteils erfasst werden.

Nach Ausführungsformen beinhaltet jedes der Eigner-Zertifikate einen Delegierbarkeitsparameter, welcher entweder den Datenwert "DELEGIERBAR" oder den Datenwert "NICHT DELEGIERBAR" annehmen kann. Eine zur Erstellung der Eigner-Zertifikate verwendete Programmlogik, z.B. ein ID-Management Modul, ist so konfiguriert, dass
- ein Nutzer, dem ein Eigner-Zertifikat für die Nutzdaten-Datenbank zugeordnet ist und welcher ein Eigner-Zertifikat für einen anderen Nutzer für diese Nutzdaten-Datenbank erstellt, den Delegierbarkeitsparameter des erstellten Eigner-Zertifikats unabhängig vom Delegierbarkeitsparameter des ihm zugeordneten Eigner-Zertifikats auf "NICHT DELEGIERBAR" setzen kann, den Delegierbarkeitsparameter des erstellten Eigner-Zertifikats jedoch nur dann auf "DELEGIERBAR" setzen kann, wenn der Delegierbarkeitsparameter seines Eigner-Zertifikats den Wert "DELEGIERBAR" hat; und
- ein Nutzer, welchem eine Eigner-Zertifikat für eine Nutzdaten-Datenbank zugeordnet ist, dessen Delegierbarkeitsparameter den Wert "NICHT DELEGIERBAR" hat, keine weiteren Eigner-Zertifikate für andere Nutzer für diese Nutzdaten-Datenbank erstellen kann.

Nach alternativen Ausführungsformen beinhaltet ein Datenobjekt, das ein Eigner-Zertifikat einem bestimmten Nutzer zuweist oder das das Eigner-Zertifikat einer Kette aus zwei oder mehr Nutzern, die sich das Eigner-Recht zugewiesen haben, zuweist, den Delegierbarkeitsparameter. Ein solches Objekt, im Folgenden auch als Eignerschaftermächtigungskettenobjekt bezeichnet, kann z.B. in Form einer neuen Kopie erzeugt und in der ID-Datenbank gespeichert werden sobald eine Kette aus Nutzern, die sich das Eigner-Recht für eine Nutzdaten-Datenbank zugewiesen haben, um ein Kettenglied (also z.B. ein weiteres Nutzer-Zertifikat) erweitert wird. Der Delegierbarkeitsparameter kann entweder den Datenwert "DELEGIERBAR" oder den Datenwert "NICHT DELEGIERBAR" annehmen.

Ausführungsformen können den Vorteil haben, dass ein hoher Grad an Dynamik und Flexibilität im Hinblick auf die Vergabe der Zugriffsrechte ermöglicht werden kann: typischerweise wird einem bestimmten Nutzer, zum Beispiel dem Geschäftsführer, ein Eigner-Zertifikat für eine bestimmte Nutzdaten-Datenbank zugeordnet. Dieses "erste/initiale" Eigner-Zertifikat hat vorzugsweise den Delegierbarkeitsparameterwert "DELEGIERBAR". Dieser Nutzer kann nun über die erste Schnittstelle dieses erste Eigner-Zertifikat in identischer oder modifizierter Kopie ein oder mehreren weiteren Nutzern zuordnen, sodass diese weiteren Nutzer im Hinblick auf die Nutzdaten-Datenbank ebenfalls Eigner-Rechte bekommen und Datensätze anlegen können. Dabei kann der Inhaber des ersten Eigner-Zertifikats entscheiden, ob die den weiteren Nutzern zugeordneten Eigner-Zertifikate für diese Nutzdaten-Datenbank ebenfalls delegierbar sein sollen, diese anderen Nutzer also ebenfalls die Möglichkeit haben sollen, weiteren Nutzern Eigner-Rechte bezüglich dieser Nutzdaten-Datenbank auszustellen. Falls eine modifizierte Kopie des Eigner-Zertifikats für die ein oder mehreren weiteren Nutzer erstellt wird, welches den Delegierbarkeitsparameterwert "NICHT DELEGIERBAR" besitzt, können die weiteren Nutzer zwar eine Datenbankverbindung zu der Nutzdaten-Datenbank erstellen und dort Datensätze erzeugen, jedoch keine weiteren Eigner-Zertifikate für weitere Nutzer bezüglich dieser Nutzdaten-Datenbank ausstellen. Die Kette der ausgestellten Eigner-Zertifikate endet also notwendigerweise mit der Ausstellung von nicht weiter delegierbaren Eigner-Zertifikaten, wobei es natürlich möglich ist, das einen bestimmten Nutzer von einem Datenbank-Eigner ein delegierbares Eigner-Zertifikat ausgestellt wird und von einem anderen Datenbank-Eigner ein nicht-delegierbares Eigner-Zertifikat. In diesem Fall kann der Nutzer weitere Eigner-Zertifikate für Dritte ausstellen, jedoch wird vorzugsweise die chronologische Kette der ein Eigner-Zertifikat ausstellen Nutzer gespeichert, zum Beispiel in Form von Ermächtigungsobjekten und/oder Logeinträgen, sodass der Pfad der Verantwortungskette dokumentiert ist. Vorzugsweise erfolgt die Speicherung dieser chronologischen Kette in einer speziellen Datenbank, im folgenden "ID- Datenbank" genannt. In analoger Weise kann der Delegierbarkeitsparameter innerhalb eines Zuweisungsobjekts, also z.B. eines Eignerschaftsermächtigungskettenobjekts, gespeichert sein und vorgeben, ob ein Nutzer weitere Zuweisungsobjekte (weitere Eignerschaftsermächtigungskettenobjekte) erstellen darf um ein Eigner-Zertifikat anderen Nutzern zuzuweisen).

Nach Ausführungsformen umfasst die ID-Datenbank einen privaten Signierschlüssel. Die Nutzdaten-Datenbank umfasst einen öffentlichen Signaturprüfschlüssel, welcher zur Prüfung der mit dem Signierschlüssel erstellten Signaturen ausgebildet ist. Das DV-System ist konfiguriert zum:
- Signierung des Berechtigungstoken durch die ID-Datenbank mit dem Signierschlüssel, wobei der Berechtigungstoken in signierter Form an die Nutzdaten-Datenbank übermittelt wird; und
- Prüfung, durch die Nutzdaten-Datenbank mittels des Signaturprüfschlüssels, ob die Signatur des Berechtigungstoken valide ist, wobei der Aufbau der Datenbankverbindung zwischen Anfrageeinheit und Nutzdaten-Datenbank und der Datensatzzugriff nur dann gestattet wird, wenn die Signatur valide ist.

Ausführungsformen können den Vorteil haben, dass die Nutzdaten-Datenbank anhand der Signatur prüfen kann, dass ein Berechtigungstoken tatsächlich von der ID-Datenbank erzeugt wurde und nicht von einem nicht vertrauenswürdigen Dritten.

Nach Ausführungsformen führt die ID-Datenbank des DV-Systems im Zuge der Erzeugung des Berechtigungstoken beinhaltend eines der Eigner-Zertifikate eine Zertifikatskettenprüfung durch, um festzustellen, ob dieses Eigner-Zertifikat prüfbar in die Zertifikatskette des Nutzer-Zertifikats, dem dieses Eigner-Zertifikat in einem der Eignerschaftsermächtigungskettenobjekten zugewiesen ist, eingebunden ist. Die Signierung des Berechtigungstoken erfolgt nur im Falle der Feststellung einer erfolgreichen Einbindung.

Zusätzlich oder alternativ dazu führt die ID-Datenbank im Zuge der Erzeugung des Berechtigungstoken beinhaltend ein oder mehrere Zugriffs-Zertifikate eines Erzeuger-Nutzers (Erzeuger eines Datensatzes), eine Zertifikatskettenprüfung durch, um für jedes der Zugriffs-Zertifikate des Nutzers festzustellen, ob dieses Zugriffs-Zertifikat prüfbar in die Zertifikatskette des Nutzer-Zertifikats, dem dieses Zugriffs-Zertifikat in einem der Zugriffsermächtigungskettenobjekten zugewiesen ist, eingebunden ist, wobei die Signierung des Berechtigungstoken nur im Falle der Feststellung einer erfolgreichen Einbindung erfolgt.

Nach Ausführungsformen stellt das Zugriffs-Verwaltungssystem eine grafische Benutzeroberfläche (GUI) bereit, welche es den Nutzern einer Organisation ermöglicht, weitere Eigner-Zertifikate für andere, manuell ausgewählte Nutzer (z.B. DV-Systeme) für eine bestimmte Nutzdaten-Datenbank zu erstellen, sofern dem ausstellenden Nutzer selbst ein entsprechendes Eigner-Zertifikat in der ID-Datenbank zugewiesen ist. Zusätzlich kann es diese Benutzeroberfläche dem Nutzer, der einen bestimmten Datensatz erstellt hat, ermöglichen, ein oder mehreren anderen manuell über die GUI ausgewählten Nutzern, ein oder mehrere ausgewählte Zugriffsrechte auf diesen Datensatz einzuräumen. Beispielsweise kann die GUI mehrere Personen, die der Organisation angehören, in Form einer auswählbaren Personenliste grafisch repräsentieren, sodass ein Nutzer der GUI durch Auswahl von ein oder mehreren Personen aus dieser Personenliste die Empfänger der einzuräumenden Eigner-und Zugriffsrechte spezifizieren kann. Weitere auswählbare GUI Elemente, zum Beispiel Radio-Buttons oder Check-Boxes können es dem Nutzer der GUI ermöglichen, durch Auswahl dieses Elementes den Delegierbarkeitsparameter des ausgestellten Zugriffs-bzw. Eigner-Zertifikats zu bestimmen (delegierbar oder nicht-delegierbar), sofern die Berechtigung des Nutzers hierfür ausreichend ist. Die GUI kann ferner über auswählbare GUI Elemente verfügen, die es einem Nutzer ermöglichen, Zugriffsrechte, die er anderen Nutzern eingeräumt hat, auch wieder zu entziehen. Die GUI ist so konfiguriert, dass sie automatisch im Hintergrund neue Zertifikate und/oder Zuweisungen von Zertifikaten zu nutzen gemäß den Eingaben des Nutzers über die GUI erstellt oder invalidiert und den Inhalt der ID-Datenbank entsprechend aktualisiert.

Nach Ausführungsformen handelt es sich bei den ein oder mehreren Nutzdaten-Datenbanken und der ID-Datenbank jeweils um eine NoSQL-Datenbank. Vorzugsweise handelt es sich bei den NoSQL-Datenbanken jeweils um eine sogenannte "strukturlose" Datenbank, die eine freie Definition der Art und Anzahl der Datenfelder unterstützt. Vorzugsweise ist die NoSQL-Datenbank so konfiguriert, dass der Inhalt sämtlicher Datenfelder eines jeden neuen Datensatzes automatisch indexiert wird und dass Änderungen des Inhalts der Datenbank in Form neuer Versionen gespeichert werden ("versionierte Datenbank"). Vorzugsweise wird die Erzeugung neuer Zugriffs-und/oder Eigner-Zertifikate sowie die chronologische Sequenz der Nutzer, die anderen Nutzern jeweils diese Zertifikate zugewiesen haben, in einer Log (z.B. Log-Datei) der ID-Datenbank gespeichert.

Nach Ausführungsformen handelt es sich bei dem Zugriffs-Verwaltungssystem um ein Datenbanksystem. Es ist jedoch auch möglich, dass das Zugriffsverwaltungssystem in der Firmware oder Software des Microcontrollers, in deren Speicher die Zertifikate und Ermächtigungskettenobjekte sowie die hier beschriebene Programmlogik implementiert sein können, implementiert ist.

Nach Ausführungsformen handelt es sich bei der Nutzdaten-Datenbank und/oder der ID-Datenbank um eine Datenbank eines NoSQL Datenbanksystems.

Nach Ausführungsformen ist dem DV-System, das die Anfrage empfängt, ein erster Nutzer zugeordnet oder das DV-System selbst wird als erster (virtueller) Nutzer behandelt. Dem ersten Nutzer ist ein erstes Nutzer-Zertifikat zugeordnet. Das erste Nutzer-Zertifikat kann zum Beispiel ein Root-Zertifikat, das von einer Zertifizierungsstelle (certifying authority - CA) herausgegeben wird, sein. Das erste Nutzer-Zertifikat ist in eine von einer Zertifizierungsstelle herausgegebene erste Zertifikatskette prüfbar eingeordnet (ist also beispielsweise bis zum Root-Zertifikat der Zertifizierungsstelle prüfbar). Dies kann vorteilhaft sein, da Zertifizierungsstellen als unabhängige Vertrauensgaranten auf breiter Basis bereits akzeptiert sind und bereits von vielen bestehenden technischen Systemen zur Prüfung der Authentizität bestimmter Nutzer und Nutzeraktionen verwendet werden.

Nach Ausführungsformen wird das Eigner-Zertifikat für den ersten Nutzer, das dessen Eignerschaft der Nutzdaten-Datenbank zertifiziert, so erstellt, dass dieses in eine erste Zertifikatskette eingeordnet ist und durch das erste Nutzer-Zertifikat prüfbar ist. Beispielsweise wird das Eigner-Zertifikat von dem Zugriffs-Verwaltungssystem durch den privaten Schlüssel des ersten Nutzer-Zertifikats signiert. In analoger Weise kann der erste Nutzer auch Kopien von Zugriffs-Zertifikates, die anderen Nutzern (z.B. anderen DV-Systemen oder der Anfrageeinheit) Zugriff auf die von dem ersten Nutzer erstellte Datensätze einräumen, mit dem privaten Schlüssel seines Nutzer-Zertifikats (hier also des ersten Nutzer-Zertifikats) signieren.

Nach Ausführungsformen ist einem zweiten Nutzer (auch "Anfrage-Nutzer" genannt, z.B. anderen DV-Systemen oder der Anfrageeinheit) ein zweites Nutzer-Zertifikat zugeordnet, wobei das zweite Nutzer-Zertifikat in eine von einer Zertifizierungsstelle herausgegebene zweite Zertifikatskette prüfbar eingeordnet ist.

Nach Ausführungsformen umfasst das Verfahren eine Erstellung eines dritten Eigner-Zertifikats durch den zweiten Nutzer und Verknüpfung des dritten Eigner-Zertifikats mit einem dritten Nutzer, um diesem zu ermöglichen, Datensätze in der Nutzdaten-Datenbank anzulegen.

Gemäß Ausführungsformen werden auch Zugriffs-Zertifikate oder die Zugriffsermächtigungskettenobjekte, wie bereits für die Eigner-Zertifikate beschrieben, als delegierbare oder als nicht-delegierbare Zugriffs-Zertifikate erstellt und anderen Nutzern zugewiesen werden bzw. die Zuweisung selbst, also die Zugriffsermächtigungskettenobjekte, kann delegierbar oder nicht-delegierbar sein. So kann jeder Ersteller eines Datensatzes und jeder Inhaber eines delegierbaren Zugriffs-Zertifikats eines anderen Nutzers, der einen Datensatz erstellt hat, flexibel selbst entscheiden, ob und inwieweit er die Zugriffs-Verantwortung und damit zusammenhängende Pflichten und Tätigkeiten an andere Nutzer überträgt. Dies kann vorteilhaft sein, da ein hoher Grad an Flexibilität und Komplexität der Zugriffsgewährung ermöglicht wird.

Nach Ausführungsformen sind in einer ID-Datenbank eine Vielzahl von Nutzer-Zertifikaten, eine Vielzahl von Zugriffs-Zertifikaten und eine Vielzahl von Eigner-Zertifikaten gespeichert. Das Verfahren umfasst die Speicherung von Eignerschaftsermächtigungskettenobjekten und/oder Zugriffsermächtigungskettenobjekten in der ID-Datenbank.

Nach Ausführungsformen ist jedes Eignerschaftermächtigungskettenobjekt ein Datenobjekt, welches eines der Eigner-Zertifikate und ein oder mehrere der Nutzer-Zertifikate beinhaltet (und dadurch einander zuweist). Die Reihung der Nutzer-Zertifikate in dem Eignerschaftermächtigungskettenobjekt gibt die Sequenz der Nutzer, die dieses Eignerschafts-Zertifikat für jeweils andere Nutzer, deren Nutzer-Zertifikat in dem Eignerschaftermächtigungskettenobjekt enthalten ist, erstellt haben, wieder.

Jedes Zugriffsermächtigungskettenobjekt ist ein Datenobjekt, welches eines der Zugriffs-Zertifikate und ein oder mehrere der Nutzer-Zertifikate beinhaltet (und dadurch einander zuweist). Die Reihung der Nutzer-Zertifikate in dem Zugriffsermächtigungskettenobjekt gibt die Sequenz der Nutzer, die dieses Zugriffs-Zertifikat für jeweils andere Nutzer, deren Nutzer-Zertifikat in dem Zugriffsermächtigungskettenobjekt enthalten ist, ausgestellt haben, wieder.

Nach Ausführungsformen sind die Nutzdaten-Datenbanken frei von Zugriffsermächtigungskettenobjekten und beinhalten für jeden Datensatz nur die Zugriffs-Zertifikate, die dem Nutzer, welcher diesen Datensatz erstellt hat, Zugriff auf diesen Datensatz gewähren.

Die Verknüpfung dieser Zugriffs-Rechte des Datensatzerstellers mit ein oder mehreren anderen Nutzern um diesen Zugriff auf den Datensatz zu gewähren ist nicht in der Nutzdaten-Datenbank gespeichert, sondern in der ID-Datenbank. Umgekehrt enthält die ID-Datenbank keine Referenz auf einzelne Datensätze der Nutzdaten-Datenbänke. Dies kann vorteilhaft sein, da die Größe und Komplexität der einzelnen Datensätze der Nutzdaten-Datenbank begrenzt und logisch von der Verwaltung der Zugriffsrechte weitgehend entkoppelt wird. Die Größe der Datensätze wird also auch dadurch begrenzt, dass nicht die komplette Kette der Berechtigungsübertragungen als Bestandteil der Datensätze gespeichert werden. Insbesondere bei einer Vielzahl kleiner Datensätze mit identischer Berechtigungsstruktur kann dies den von der Datenbank benötigten Speicherplatz erheblich reduzieren.

Nach Ausführungsformen führt die ID-Datenbank im Zuge der Erzeugung des Berechtigungstoken, der eines der Eigner-Zertifikate beinhaltet, eine Zertifikatskettenprüfung durch. Dies geschieht, um festzustellen, ob dieses Eigner-Zertifikat prüfbar in die Zertifikatskette des Nutzer-Zertifikats, dem dieses Eigner-Zertifikat in einem der Eignerschaftsermächtigungskettenobjekte zugewiesen ist, eingebunden ist. Die ID-Datenbank signiert den Berechtigungstoken nur im Falle der Feststellung einer erfolgreichen Einbindung in die Zertifikatskette des Eigner-Zertifikat. Diese Zertifikatskettenprüfung kann also insbesondere entlang der Zertifikatskette der Zertifizierungsstelle, die das Nutzer-Zertifikat als Root-Zertifikat herausgegeben hat, erfolgen. Zusätzlich oder alternativ dazu führt die ID-Datenbank im Zuge der Erzeugung eines Berechtigungstoken, der ein oder mehrere Zugriffs-Zertifikate eines Nutzers zum Zugriff auf von ihm erstellte Datensätze beinhaltet, eine Zertifikatskettenprüfung durch, um für jedes der Zugriffs-Zertifikate des Nutzers festzustellen, ob dieses Zugriffs-Zertifikat prüfbar in die Zertifikatskette des Nutzer-Zertifikats, dem dieses Zugriffs-Zertifikat in einem der Zugriffsermächtigungskettenobjekten zugewiesen ist, eingebunden ist. Die ID-Datenbank signiert den Berechtigungstoken nur im Falle der Feststellung einer erfolgreichen Einbindung.

Nach Ausführungsformen legt der zweite Nutzer (z.B. die Anfrageeinheit oder ein anderes externes DV-System), der einen bestimmten Datensatz in der Nutzdaten-Datenbank des DV-Systems erstellt hat, oder ein dritter Nutzer, dem über ein Zugriffsermächtigungskettenobjekt ein oder mehrere Zugriffszertifikate des zweiten Datenbank-Nutzers zugewiesen sind, ein weiteres Zugriffsberechtigungskettenobjekt an. In diesem weiteren Zugriffsberechtigungskettenobjekt werden ein oder mehrere Zugriffs-Zertifikate des Erstellers (also des zweiten Nutzers) dem vierten Nutzer zugewiesen. Die Nutzdaten-Datenbank ist dazu konfiguriert, vor der Gewährung des Zugriffs auf den von dem zweiten Nutzer erzeugten Datensatz durch den vierten Nutzer zu prüfen, ob dem vierte Nutzer ein oder mehrere dieser Zugriffs-Zertifikate zugewiesen sind.

Nach einer Ausführungsform ist jedem der Datensätze in der Nutzdaten-Datenbank ein oder mehrere Zugriffs-Zertifikate des den Datensatz erstellenden Nutzers zugeordnet.

Nach Ausführungsformen sind in der Nutzdaten-Datenbank die Datensätze in einem Format gespeichert, welches eine Extraktion der in den Datensätzen enthaltenen Information ohne einen Zugriff über eine Datenbankverbindung zu der Nutzdaten-Datenbank ausschließt. Beispielsweise können die Datensätze als binäre Objekte oder in verschlüsselter Form gespeichert sein. Backups der Nutzdaten-Datenbank führt der Administrator-Nutzer (also die digitale Repräsentanz einer technischadministrativ tätigen Person ohne gesonderte Zugriffsrechte auf die Datensätze) oder das Zugriffs-Verwaltungssystem durch Kopieren der Nutzdaten-Datenbank auf ein anderes Speichermedium aus, wobei der Administrator-Nutzer kein Eigner-Zertifikat für diese Nutzdaten-Datenbank besitzt.

Dies kann vorteilhaft sein, da der Administrator-Nutzer zwar noch die ihm typischerweise zugeordneten Tätigkeiten wie zum Beispiel das Erstellen von Backups durchführen kann, jedoch nicht mehr auf den Inhalt der in der Datenbank gespeicherten Nutzerdaten zugreifen kann. Dies schützt die Organisation durch missbräuchliche Weitergabe sensibler Daten an Dritte durch den Administrator-Nutzer. Der Administrator-Nutzer des Zugriffs-Verwaltungssystems bzw. des DV-Systems hat nach Ausführungsformen der Erfindung also deutlich weniger Zugriffsrechte als dies in herkömmlichen IT-Systemen der Fall ist.

Nach Ausführungsformen repräsentiert jeder oder zumindest einige der Datensätze in der Nutzdaten-Datenbank jeweils eine software- oder hardware- Funktionalität, die das DV-System bereitstellt und/oder steuert. Nur ein Nutzer (z.B. Anfrageeinheit oder sonstiges externes DV-System), dem sowohl ein Eigner-Zertifikat der Nutzdaten-Datenbank als auch ein Zugriffs-Zertifikat für den Zugriff auf das Funktionsobjekt zugewiesen ist, wird von dem Zugriffs-Verwaltungssystem des DV-Systems, das die Anfrage empfängt, gestattet, die Funktionalität durchzuführen bzw. die Ausführung der Funktion zu veranlassen. Bei der Funktion kann es sich beispielsweise um das Starten eines Geräts, die Aktivierung oder Bewegung einer Hardwarekomponente, das Öffnen oder Schließen einer Tür für Gebäude, Räume oder Fahrzeuge, das Öffnen oder Schließen sonstiger Zutrittsbarrieren oder Verschlussvorrichtungen von Behältnissen oder um eine bestimmte Software Funktionalität handeln.

Somit kann die oben beschriebene vorteilhafte, flexible und feingranulare Zugriffskontrolle nicht nur für die Kontrolle des Zugriffs auf Datensätze, sondern auch für die Kontrolle des Zugriffs auf eine Vielzahl anderer Funktionen einschließlich Hardwarefunktionalitäten verwendet werden.

In einem weiteren nicht beanspruchten Aspekt betrifft die Erfindung ein verteiltes System. Das verteilte System umfasst mehrere DV-Systeme nach einer der hier beschriebenen Ausführungsformen und Beispiele. Jedes der DV-Systeme beinhaltet ein Vorhersageprogramm. Jedes der Vorhersageprogramme beinhaltet ein zur Berechnung des gleichen Vorhersagetyps trainiertes Machine-Learning (ML)-Modell. Die trainierten Modelle der Vorhersageprogramme sind unterschiedlich. Jedes der ML-Modelle beinhaltet Paare einander zugeordneter Eingaben und Ausgaben.

Jedes der DV-Systeme ist konfiguriert zum:
- Synchronisation der Eingabe-Ausgabe Paare der Modelle derart, dass jedes Modell nach der Synchronisation den gleichen Satz an Eingabe-Ausgabe Paaren beinhaltet;
- Eingabe von Eingabedaten in eines der Vorhersageprogramme; und
- Berechnung einer Vorhersage auf Basis der Eingabedaten durch das eine Vorhersageprogramm unter Verwendung des synchronisierten Modells dieses einen Vorhersageprogrammes.

In einem weiteren nicht beanspruchten Aspekt betrifft die Erfindung ein System umfassend ein Infrastrukturobjekt und ein Überwachungssystem. Das Überwachungssystem ist an das Infrastrukturobjekt operativ koppelbar und dazu konfigurier, Zustände des Infrastrukturobjekts über eine Netzwerkverbindung zu protokollieren und/oder zu steuern. Das Überwachungssystem ist ein DV-System nach einem der hier beschriebenen Ausführungsformen. Bei dem Infrastrukturobjekt kann es sich insbesondere um ein Gebäude, eine Energieerzeugungsanlage, eine militärische Anlage, eine Vorrichtung, eine Maschine oder Komponente der vorgenannten Infrastrukturobjekte handeln. Ein Überwachungssystem gemäß Ausführungen der Erfindung ist ein DV-System, das Überwachungsfunktionen im Hinblick auf ein überwachtes physisches Objekt, z.B. ein Infrastrukturobjekt, ausübt. Eine Überwachung kann in einem Erfassen von Zustandsdaten des überwachten physischen Objekts, z.B. mittels eines Sensors des Überwachungssystems, und/oder eine Veränderung des Zustands des überwachten Objekts, z.B. mittels einer Steuereinheit des DV-Systems, beinhalten.

Ausführungsformen können den Vorteil haben, dass ein solches System bzw. ein solches Überwachungssystem robust ist gegen DoS Angriffen.

Die operative Koppelbarkeit kann z.B. darin bestehen, dass das DV-System ein oder mehrere Sensoren beinhaltet, die nach einer entsprechenden mechanischen Kopplung oder nach einer rein softwarebasierten Konfiguration dazu ausgebildet ist, Zustände, insbesondere Leistungs- und Fehlerparameter, des Infrastrukturobjekts zu erfassen. Die operative Koppelbarkeit kann zusätzlich oder alternativ bedeuten, dass das Überwachungssystem eine Steuereinheit besitzt, die dazu ausgebildet ist, durch Erzeugung und Senden von Kontrollbefehlen an das Infrastrukturobjekt dieses zu veranlassen, ein oder mehrere Funktionen auszuführen. Die Kopplung kann also in der Etablierung einer Kommunikationsverbindung zum Austausch von Messdaten und/oder Kontrollbefehlen bestehen.

In einem weiteren Aspekt betrifft die Erfindung ein Verfahren zum Betrieb eines Datenverarbeitungssystems, hier als DV-System bezeichnet. Das Verfahren umfasst:
- Bereitstellung des DV-Systems, wobei das DV-System umfasst: zumindest eine Recheneinheit, die als Mikroprozessor und/oder Mikrocontroller ausgebildet ist, ein nicht-flüchtiges Speichermedium mit einem oder mehreren Referenzberechtigungsnachweisen, wobei jeder Referenzberechtigungsnachweis in Form eines numerischen Datenwerts ausgebildet ist, und eine Schnittstelle zum Empfang von Anfragen über ein Netzwerk;
- Empfang einer Anfrage über die Schnittstelle von einer Anfrageeinheit durch das DV-System;
- Prüfen, ob die Anfrage einen Berechtigungsnachweis enthält, der identisch ist zu einem der Referenzberechtigungsnachweise, durch die zumindest eine Recheneinheit;
- Falls die Prüfung ergibt, dass die Anfrage diesen Berechtigungsnachweis nicht enthält, Abbruch der Prüfung durch das DV-System, ohne eine Antwort irgendeiner Form an die Anfrageeinheit zurückzugeben, und Trennung der Netzwerkverbindung zu der Anfrageeinheit durch das DV-System.

Ausführungsformen können den Vorteil haben, dass eine unabhängige Kontrolle und Rechtevergabe bezüglich zweier technischer Funktionalitäten ermöglicht werden kann, nämlich a) der Funktionalität der Datensatzerzeugung in einer Datenbank und b) der Funktionalität des Zugriffs auf Datensätze innerhalb der Datenbank. Eine in hohem Maße flexible und feingranulare Zuweisung von Rechten wird somit ermöglicht. Der initiale Eigner einer Datenbank, z.B. technisches Personal, das das KV-System hergestellt oder beim Kunden installiert hat, kann frei bestimmen, welchen anderen Nutzern Eignerschafts-Rechte zuerkannt werden sollen. In analoger Weise ist jeder Nutzer (bzw. einzelne Prozesse oder Module des DV-Systems, z.B. einzelne Sensoren, die jeweils neue Daten erzeugt oder erfasst haben, frei, beliebigen anderen Nutzern (bzw. lokalen Modulen oder Prozessen oder externen DV-Systemen) Zugriffsrechte auf diese Daten über die Zuweisung entsprechender Zugriffsrechte zu gewähren, ohne dass übergeordnete Personen und/oder das technisch-administrative Personal automatisch Zugriff auf die erstellten Daten haben.

Nach Ausführungsformen umfasst das Verfahren ferner ein Protokollieren und/oder eine Steuerung von Zustände eines Infrastrukturobjekts durch das DV-System über das Netzwerk, z.B. das Internet. Das Infrastrukturobjekt kann insbesondere ein Gebäude, eine Energieerzeugungsanlage, eine militärische Anlage, eine Vorrichtung, eine Maschine oder Komponente der vorgenannten Infrastrukturobjektes sein.

Nach Ausführungsformen wird das Verfahren zum Schutz des DV-Systems gegen Denial-of-Service Angriffe verwendet.

Unter einem **"Datenverarbeitungssystem"** (DV-System) wird hier ein elektronisches System verstanden, das dazu ausgebildet ist, Datenmengen mit dem Ziel zu verarbeiten, Informationen über diese Datenmengen zu gewinnen oder diese Datenmengen zu verändern. Insbesondere kann es sich bei dem DV-System um einen auf einem oder mehreren integrierten Schaltkreisen beruhenden digitalen Computer handeln, insbesondere um einen mikrocontrollerbasiertes oder mikroprozessorbasiertes DV-System.

Unter einem **"Kettenobjekt"** wird hier eine Datenstruktur verstanden, welches mehrere Elemente enthält, die in der Datenstruktur in einer bestimmten Sequenz ("Kette") angeordnet und dadurch dem oder den jeweiligen Nachbarelementen zugeordnet sind. Die Zuordnung kann rein in der Positionierung der Elemente innerhalb der Sequenz als benachbarte Elemente begründet sein. In manchen Ausführungsformen bestehen einige oder alle der Elemente aus Zertifikaten, wobei die Zertifikate innerhalb der Sequenz einander nicht nur auf Basis ihrer Position sondern auch dadurch zugeordnet sind, dass die Zertifikate eine Zertifikatskette bilden, die durch eine sogenannte Zertifikatskettenprüfung entlang der Zertifikatssequenz prüfbar sind. Die Sequenz der Elemente wird vorzugsweise durch einen Nutzer, z.B. einen menschlichen Nutzer oder eine Software, eine Hardware oder einen Software- oder Hardwarebasierten Prozess, der als "Nutzer" fungiert, festgelegt. Beispielsweise können Kettenobjekte ein erstes Element beinhalten, das ein Recht repräsentiert, z.B. ein Zugriffsrecht (das erste Element kann dann z.B. ein Zugriffs-Zertifikat sein) oder ein Eigner-Recht (das erste Element kann dann z.B. ein Eignerschafts-Zertifikat sein). Das Kettenobjekt kann zudem eine Sequenz weiterer Elemente beinhalten, z.B. Elemente, die je einen Nutzer repräsentieren (wobei diese Elemente z.B. als Nutzer-Zertifikat ausgebildet sein können, z.B. als X.509 Zertifikat). Die Sequenz der Nutzer-Zertifikate in dem Kettenobjekt repräsentiert die Sequenz der Nutzer, die jeweils das im ersten Element repräsentierte Recht, das ihnen gehört, auf einen anderen Nutzer übertragen haben. Beispielsweise ist ein "Zugriffsermächtigungskettenobjekt" ein Kettenobjekt, dass ein Zugriffsrecht und eine Sequenz an Nutzern repräsentiert, welche dieses Zugriffsrecht auf jeweils einen der anderen Nutzer gemäß dieser Sequenz übertragen haben. Beispielsweise ist ein "Eignerschaftsermächtigungskettenobjekte" ein Kettenobjekt, dass ein Eignerrecht und eine Sequenz an Nutzern repräsentiert, welche dieses Eignerrecht auf jeweils einen der anderen Nutzer gemäß dieser Sequenz übertragen haben.

Unter einer **"Anfrageeinheit"** wird hier ein physisches Objekt, z.B. ein Datenverarbeitungssystem oder eine Software verstanden, die dazu konfiguriert ist, eine Anfrage über ein Netzwerk an ein DV-System zu senden. Die Anfrage kann z.B. den Zweck haben, das DV-System zur Durchführung einer bestimmten softwarebasierten oder hardwarebasierten Funktionalität zu veranlassen. Bei der Anfrageeinheit kann es sich z.B. um einen Standard-Computer oder ein mikrocontrollerbasiertes und/oder mikroprozessorbasiertes DV-System handeln. Bei letzterem kann es sich um ein DV-System gemäß Ausführungsformen der Erfindung handeln, welches seinerseits Anfragen von anderen als Anfrageeinheit fungierenden DV-Systemen empfangen und wie beschrieben verarbeiten kann. Ausführungsformen der Erfindung können den Vorteil haben, dass ein Netzwerk aus DV-Systemen bereitgestellt wird, die ein Netzwerk aus IoT-Endknoten bilden, wobei jeder Endknoten dynamisch als Anfrageeinheit und Empfänger für die Anfragen anderer DV-Systeme auftreten kann. Beispielweise kann das Netzwerk dazu dienen, lokal von den DV-Systemen erfasste Messwerte auszutauschen und/oder auf Basis dieser Messwerte im Zuge eines lokalen Trainingsprozesses erhaltene ML-Modelle zwischen den DV-Systemen zu synchronisieren.

Unter einem **"Berechtigungsnachweis"** wird hier ein Datenwert, insbesondere ein numerischer Datenwert verstanden, welcher die Funktion hat, den Überbringer dieses Datenwerts gegenüber dem Empfänger als berechtigt auszuweisen, empfängerseitig eine bestimmte Funktion oder einen bestimmten Prozess (z.B. weiteren Prüfschritt) durchzuführen. Vorzugsweise handelt es sich um einen numerischen Wert hinreichender Länge und Komplexität, sodass dieser nicht einfach mit Hilfe eines Zufallsgeneratoren in wenigen Anfragezyklen erraten werden kann. Beispielsweise kann der numerische Wert mindestens 5, vorzugsweise mindestens 8 Ziffern beinhalten.

Gemäß Ausführungsformen blockiert das DV-System nach Erhalt einer Mindestanzahl von Anfragen der gleichen Anfrageeinheit, die alle keinen gültigen Berechtigungsnachweis enthielten, die Anfrageeinheit dauerhaft oder für eine gewisse Mindestdauer, z.B. einige Minuten, einige Stunden oder einige Tage. Ausführungsformen können den Vorteil haben, dass hierdurch einem zufälligen Erraten des Berechtigungsnachweises z.B. mittels Zufallsgeneratoren wirksam vorgebeugt werden kann.

Unter einem **"Referenzberechtigungsnachweis"** wird hier ein Datenwert, insbesondere ein numerischer Datenwert, verstanden, der bei einem Empfänger-DV-System hinterlegt ist und der einen Überbringer eines zu diesem Referenzberechtigungsnachweis identischen Datenwerts als berechtigt legitimiert, empfängerseitig die Durchführung einer bestimmten Funktion oder eines bestimmten Prozesses (z.B. weiteren Prüfschritt) zu veranlassen. Beispielsweise können Referenzberechtigungsnachweise die Summe aller Zugriffs-Zertifikate sein, die im Zuge der Registrierung verschiedener Nutzer (z.B. DV-Systeme) bei dem Empfänger-DV-System oder zu einem späteren Zeitpunkt diesen registrierten Nutzern zugewiesen wurden und im Empfänger-DV-System gespeichert wurden.

Unter einem "Mikrocontroller" (auch µController, µC, MCU) werden hier Halbleiterchips bezeichnet, die zumindest einen Prozessor und zugleich auch Peripheriefunktionen enthalten. Zu diesen Peripheriefunktionen können z. B. Sensoren, Steuerinheiten, CAN- (Controller Area Network), LIN- (Local Interconnect Network), USB-(Universal Serial Bus), I²C- (Inter-Integrated Circuit), SPI- (Serial Peripheral Interface), serielle oder Ethernet-Schnittstellen, PWM-Ausgänge, LCD-Controller und - Treiber sowie Analog-Digital-Umsetzer gehören. Einige Mikrocontroller verfügen auch über programmierbare digitale und/oder analoge bzw. hybride Funktionsblöcke. In vielen Fällen befindet sich auch der Arbeits- und Programmspeicher teilweise oder komplett auf demselben Chip. Ein Mikrocontroller ist ein Ein-Chip-Computersystem. Für manche Mikrocontroller wird auch der Begriff System-on-a-Chip oder SoC verwendet. Mikrocontroller sind in Leistung und Ausstattung gemäß Ausführungsformen auf die jeweilige Anwendung angepasst. Daher haben sie gegenüber "normalen"" Computern Vorteile bei den Kosten und der Leistungsaufnahme. Kleine Mikrocontroller sind in höheren Stückzahlen für wenige Cent verfügbar.

Beispiele für derzeit oder in der Vergangenheit auf dem Markt befindliche Mikrocontroller sind z. B. der Intel 80186 (vom 8086 abgeleitet), die XScale-Familie (ARM) sowie ColdFire (MC680xx) von Freescale (vormals Motorola). Ein Mikrocontroller kann z.B. auf 8-Bit-Prozessoren basieren, es gibt jedoch auch 4-, 16- und 32-Bit-Mikrocontroller.

Unter einem **"Mikrocontroller-basierten DV-System"** wird hier ein Datenverarbeitungssystem verstanden, dessen Funktionalität im Wesentlichen oder vollständig auf einem oder mehreren Mikrocontrollern beruht.

Teilweise werden Mikrocontroller als Bestandteil eines Multi Chip Modules (MCM) verwendet, wobei das MCM das DV-System darstellt oder einen wesentlichen Teil des DV-Systems stellt. Beispielsweise können derartige MCM basierte DV-Systeme dazu verwendet werden, verschiedene Halbleiterprozesse zu kombinieren, die sich schlecht oder gar nicht auf einem Chip kombinieren lassen. Beispiele dafür sind Kombinationen von Mikrocontrollern mit Hochfrequenzschaltungen für Funkverbindungen (z. B. Atmel, Cypress, Microchip stellen solche MCMs her), mit Leistungselektronik (z. B. Freescale, ST) oder mit Flash-ROM in dessen Anfangszeiten (z. B. Micronas Intermetall). Teilweise wird die Lösung mit einem MCM auch benutzt, wenn bereits vorhandene Chips miteinander kombiniert werden sollen, aber der Aufwand für einen Neuentwurf vermieden werden soll. Beispiele dafür sind Kombinationen mit Netzwerkcontrollern, bzw. den Anschlusstreibern für Netzwerke (PHY) oder LCD-Controllern.

Demgegenüber kann ein DV-System gemäß Ausführungsformen auch auf einer "klassischen" Mikrocontrollerarchitektur beruhen, die von Anfang an nicht als reines Mikroprozessorsystem gedacht war, sondern primär auf Steuerungsaufgaben zielt. Eine solche Architektur zeichnet sich z. B. dadurch aus, dass mit ihr auch ein Single-Chip-Betrieb völlig ohne externe Speicherbausteine möglich ist, ebenso wie der Befehlssatz der CPU meist spezialisierte Befehle für das Steuern einzelner Signalleitungen (mittels sogenannter Bitmanipulationen) bietet. Derartige mikrocontroller-basierte DV-Systeme zeichnen sich oftmals durch eine sehr kurze Interrupt-Latenzzeit, also die Zeitspanne, die der Controller braucht, um auf die Unterbrechungsanforderung einer Signalquelle (Zeitgeber, Peripheriebaustein etc.) zu reagieren, aus. Typische Vertreter dieser Gattung sind z. B. der 8051 von Intel sowie der C166 von Siemens (heute Infineon) und Infineon TriCore. Zur Funktionsüberwachung von Mikrocontrollersteuerungen können z.B. sogenannte Watchdog-Schaltungen eingesetzt werden, die teilweise aber auch schon in den Mikrocontroller integriert sind.

Unter einem **"Mikroprozessor"** (auch µProzessor) wird hier ein Prozessor (typischerweise in sehr kleinem Maßstab) verstanden, bei dem alle Bausteine des Prozessors auf einem Mikrochip (integrierter Schaltkreis, IC) vereinigt sind. Weitere Bausteine, z.B. Peripheriekomponenten, können bei einem mikroprozessorbasierten DV-System auch außerhalb des Chips liegen.

In manchen Ausführungsformen beinhaltet der Chip neben dem Mikroprozessor auch zusätzliche Peripheriekomponenten. Ein solcher Chip mit einem oder mehreren Mikroprozessoren und ein oder mehreren Peripheriekomponenten (wie z.B.

Sensoren und/oder Steuereinheiten für chip-interne oder chip-externe Funktionen) wird als Mikrocontroller, auch "System-on-a-Chip (SoC)", bezeichnet.

Unter einem **"Mikroprozessor-basierten DV-System"** wird hier ein Datenverarbeitungssystem verstanden, der einen oder mehrere Mikroprozessoren beinhaltet und diese nutzt, um weitere Komponenten des DV-Systems wie z.B. Sensoren und/oder Steuereinheiten für überwachungssystem-interne und/oder externe Funktionen, anzusteuern.

Unter einem **""eingebetteten System"** (auch "embedded system") wird hier ein mikrocontrollerbasiertes und/oder mikroprozessorbasiertes DV-System verstanden, welches in ein physisches Objekt mit einer bestimmten Funktion integriert ist. Beispielswiese kann das DV-System in Gestalt eines eingebetteten Systems in Form eines technischen Gebrauchsartikeln, Fahrzeugen, Gebäudekomponenten, Maschinen, Maschinenkomponenten, insbesondere Sensoren oder Steuereinheiten realisiert sein. Waschmaschinen, Chipkarten (Geld-, Telefonkarten), Unterhaltungselektronik (Videorekordern, CD-/DVD-Spieler, Radios, Fernsehgeräten, Fernbedienungen), Büroelektronik, Segways, Kraftfahrzeugen (Steuergeräte für z. B. ABS, Airbag, Motor, Kombiinstrument, ESP usw.), Mobiltelefonen sowie Uhren und Armbanduhren sind Beispiele für eingebettete Systeme. Darüber hinaus sind eingebbettete Systeme in praktisch allen Computer-Peripheriegeräten enthalten (Tastatur, Maus, Drucker, Monitor, Scanner uvm.).

Unter einem **"Infrastrukturobjekt"** wird hier ein physisches Objekt verstanden, welches Bestandteil der Infrastruktur eines menschlichen Kollektivs (z.B. Organisation, Firma, Dorf, Stadt, Nation, etc.) ist. Bei dem physischen Objekt kann es sich z.B. um ein Gebäude, Gebäudetechnikkomponenten, eine Energieerzeugungsanlage, eine militärische Anlage, eine Vorrichtung, eine Maschine, ein Gerät oder um eine Komponente der vorgenannten Infrastrukturobjekte handeln. Ein Infrastrukturobjekt implementiert typischerweise eine oder mehrere Funktionen, die für das Funktionieren der jeweiligen Infrastruktur notwendig oder förderlich ist. Bei dieser Funktion kann es sich z.B. um Steuerungsfunktionen, Monitoringfunktionen, Datenaustauschfunktionen und sonstige Berechnungsfunktionen handeln.

Unter **"Nutzdaten"** werden hier Daten verstanden, die für einen Nutzer, für einen Arbeitsablauf oder für eine Hardware- oder Softwarefunktionalität außerhalb des sie beinhaltenden Zugriffs-Verwaltungssystems relevant sind und welche nicht der Zugriffsverwaltung von Zugriffsrechten verschiedener Nutzer eines Zugriffs-Verwaltungssystems dienen. Nutzdaten können insbesondere Messwerte, Text, Zeichen, Bilder und Töne umfassen.

Eine **"NoSQL"** (englisch für Not only SQL) Datenbank ist eine Datenbank, die einen nicht-relationalen Ansatz verfolgt und keine festgelegten Tabellenschemata benötigt. Zu den NoSQL Datenbanken gehören insbesondere dokumentenorientierte Datenbanken wie Apache Jackrabbit, BaseX, CouchDB, IBM Notes, MongoDB, Graphdatenbanken wie Neo4j, OrientDB, InfoGrid, HyperGraphDB, Core Data, DEX, AllegroGraph, und 4store, verteilte ACID-Datenbanken wie MySQL Cluster, Key-Value-Datenbanken wie Chordless, Google BigTable, GT.M, InterSystems Caché, Membase, Redis, sortierte Key-Value-Speicher, Multivalue-Datenbanken, Objektdatenbanken wie Db4o, ZODB, spaltenorientierte Datenbanken und temporale Datenbanken wie Cortex DB.

Unter einem **"Zugriffs-Verwaltungssystem"** wird im Folgenden ein elektronisches System oder eine Software zur Speicherung und Wiedergewinnung von Daten verstanden. Beispielsweise kann es sich bei dem Zugriffs-Verwaltungssystem um ein "Datenbankmanagementsystem" (DBMS) handeln. In manchen Ausführungsformen ist das Zugriffs-Verwaltungssystem in einem Programmspeicher eines DV-Systems gespeichert. Vorzugsweise werden die Daten in dem Zugriffs-Verwaltungssystem widerspruchsfrei und dauerhaft gespeichert und verschiedenen Anwendungsprogrammen und Nutzern in bedarfsgerechter Form effizient zur Verfügung gestellt. Ein Datenbankmanagementsystem kann typischerweise ein oder mehrere Datenbanken beinhalten und die darin enthaltenen Datensätze verwalten.

Unter einem **"Datensatz"** wird im Folgenden eine inhaltlich zusammenhängende und gemeinsam von einem Datenbankmanagementsystem verwaltete Menge an Daten verstanden. Ein Datensatz stellt typischerweise die kleinste strukturelle Einheit des Datenbestandes einer bestimmten Datenbank dar.

Unter einer **"Datenbank"** wird im Folgenden eine (typischerweise große) Menge von Daten verstanden, die in einem Computersystem von einem Zugriffs-Verwaltungssystem nach bestimmten Kriterien verwaltet werden.

Unter einer **"ID-Datenbank"** wird im Folgenden eine Datenbank verstanden, welche nutzerbezogene Informationen wie zum Beispiel Nutzer-Zertifikate sowie diesen Nutzern zugewiesene Rechte in Form von weiteren Zertifikaten enthält und verwaltet. In Abgrenzung zu Nutzdaten-Datenbanken, welche vorwiegend der Speicherung von Nutzdaten dienen, dient die ID-Datenbank vorwiegend der Verwaltung der den Nutzern im Hinblick auf die Nutzdaten zugewiesenen Eigner- und Zugriffsrechte.

Unter einem **"Nutzer"** wird im Folgenden die digitale Repräsentanz einer menschlichen Person oder eines physischen Objekts, insbesondere eines Softwareprogramms oder eines Datenverarbeitungssystems, insbesondere eines mikrocontrollerbasierten und/oder mikroprozessorbasierten Datenverarbeitungssystems, verstanden. Beispielsweise kann ein Nutzer eine Anfrage an ein DV-System senden, wobei die weitere Verarbeitung der Anfrage durch das DV-System davon abhängen kann, ob der Absende-Nutzer dem empfangenden DV-System "bekannt" ist, also der Absender-Nutzer bei dem DV-System, das die Anfrage empfängt, registriert ist. Die digitale Repräsentanz kann z.B. bei einem Zugriffs-Verwaltungssystem registriert sein, das auf diesem DV-System instanziiert ist.

Unter einem **"Zertifikat"** wird hier im Folgenden ein Datenwert verstanden, welcher eine Eigenschaft (z.B. Identität eines Nutzers) oder ein Recht (z.B. Zugriffsrecht) repräsentiert und gegenüber Dritten beglaubigt ("zertifiziert"). Das Zertifikat enthält die zu seiner Prüfung erforderlichen Daten entweder selbst oder ist mit zertifikatsbezogenen Metadaten verknüpft gespeichert, sodass die zu seiner Prüfung erforderlichen Daten aus den Metadaten bezogen werden können.

Bei einem Zertifikat kann es sich um einen einfachen Datenwert, insbesondere einen numerischen Wert handeln. Insbesondere ein Zugriffs-Zertifikat kann als einfacher numerischer Wert repräsentiert sein.

Beispielsweise kann das Zertifikat als Zahlenwert ausgebildet sein, welchem in der ID-Datenbank Metadaten zugeordnet sind. Die Verwendung von Zahlwerten kann vorteilhaft sein, da diese sich gut indexieren lassen und nicht einer Variation durch leicht modifizierte Metadaten unterworfen sind. Vorzugsweise sind die Zugriffs-Zertifikate einzelner Nutzer als Attributzertifikate, insbesondere als Zahlwerte ausgebildet. Attributzertifikate enthalten keinen öffentlichen Schlüssel, sondern verweisen auf ein Public-Key-Zertifikat und legen dessen Geltungsbereich genauer fest.

Alternativ dazu kann es sich bei einem Zertifikat aber auch um einen komplexeren digitalen Datensatz handeln, der bestimmte Eigenschaften von Nutzern oder anderen Objekten bestätigt und dessen Authentizität und Integrität durch kryptografische Verfahren prüfbar macht. Das Zertifikat kann z.B. nach dem Standard X.509 ausgebildet sein, also einen öffentlichen Schlüssel beinhalten und die Identität des Inhabers sowie weitere Eigenschaften des öffentlichen kryptographischen Schlüssels des Zertifikats bestätigen.

Die Ausstellung des Zertifikats kann - z.B. bei Nutzer-Zertifikaten - durch eine offizielle Zertifizierungsstelle, die Certification Authority (CA), erfolgen.

Ein Zertifikat kann sich, muss sich aber nicht notwendigerweise auf einen kryptographischen Schlüssel beziehen, sondern kann allgemein Daten zur Prüfung einer elektronischen Signatur enthalten oder mit diesen Daten verknüpft gespeichert sein.

Unter einem **"Root-Zertifikat"** oder "Wurzel-Zertifikat" wird im Folgenden dasjenige Zertifikat bezeichnet, das den Vertrauensanker einer PKI darstellt. Da das Wurzel-zertifikat und damit die gesamte Zertifikatshierarchie nur vertrauenswürdig bleibt, solange dessen privater Schlüssel ausschließlich der ausstellenden Partei bekannt ist, kommt dem Schutz der Root-CA höchste Bedeutung zu.

Gemäß manchen Ausführungsformen stellt das Nutzer-Zertifikat desjenigen Nutzers, der in der Hierarchie einer Organisation ganz oben angesiedelt ist, das Root-Zertifikat der PKI dieser Organisation dar. Die Nutzer-Zertifikate aller anderen Mitglieder dieser Organisation sind von dem privaten Schlüssel dieses Root-Zertifikats signiert und damit von diesem gemäß einer Zertifikatskettenhierarchie abhängig.

Aufgrund des hohen Schutzbedürfnisses des Root-Zertifikats erfolgt die automatische Verarbeitung von Signatur- oder Verschlüsselungsanforderungen mit Unterzertifikaten, die mit dem Root-Zertifikat signiert wurden und eine kürzere Gültigkeit (meist wenige Monate bis Jahre) als das Root-Zertifikat (das in der Regel mehrere Jahre oder Jahrzehnte gilt) aufweisen. Beispielsweise können die Nutzer-Zertifikate anderer Nutzer und/oder die von einzelnen Nutzern ausgestellten oder übertragenen Eigner-Zertifikate, Zugriffs-Zertifikate und/oder Attribut-Zertifikate eine begrenzte Gültigkeitsdauer von wenigen Tagen oder Monaten haben. Die Gültigkeit der Unterzertifikate wird so gewählt, dass es als unwahrscheinlich angesehen werden kann, dass die zu den Unterzertifikaten gehörenden privaten Schlüssel innerhalb des gewählten Gültigkeitszeitraums mit derzeit verfügbarer Rechenkapazität berechnet werden können. Auf diese Weise entsteht eine Zertifikatskette, bei der jeweils auf das unterzeichnende Zertifikat als ausgebende Stelle verwiesen wird. Diese Kette wird in der Regel als Teil eines Zertifikats mitgeliefert, um eine Prüfung bezüglich Vertrauenswürdigkeit, Gültigkeit und ggf. vorhandenem Zertifikatswiderruf entlang der gesamten Zertifikatskette zu ermöglichen.

Unter einem "Eigner" oder "Eigentümer" wird im Folgenden ein Nutzer verstanden, dem durch Zuweisung eines Eigner-Zertifikats das Recht im Hinblick auf eine bestimmte Nutzdaten-Datenbank eingeräumt wurde, in dieser Datensätze zu erstellen und eine Datenbankverbindung mit dieser Datenbank aufzubauen. Nach ausführungsformen leiten sich alle Eigner-Zertifikate, die für die Nutzdaten-Datenbanken des DV-Systems ausgestellt wurden, vom Nutzer-Zertifikat ("CEO-Zertifikat") desjenigen Nutzers ab, der die höchste Position innerhalb der Organisation, die das DV-System betreibt, innehat. Die Ableitung aus diesem Nutzer-Zertifikat bedeutet, dass jede Kopie dieses Eigner-Zertifikats per Zertifikatskettenprüfung auf Validität überprüft werden kann, wobei die für die Zertifikatskettenprüfung verwendete Zertifikatskette das "CEO-Nutzer-Zertifikat" beinhaltet.

Unter einem im Hinblick auf einen bestimmten Datensatz **"zugriffsberechtigten Nutzer"** wird im Folgenden ein Nutzer verstanden, dem durch Zuweisung eines Zugriffs-Zertifikats das Recht eingeräumt wurde, auf einen Datensatz, der dieses Zugriffs-Zertifikat beinhaltet, auf die Weise zuzugreifen, die in diesem Zugriffs-Zertifikat oder in Metadaten dieses Zugriffs-Zertifikats spezifiziert ist, sofern optional ggf. weitere notwendige Kriterien, wie z.B. die Eignerschaft bezüglich der den Datensatz enthaltenden Datenbank, erfüllt sind.

Die Verwendung von Ordinalzahlen wie erstes, zweites, drittes etc. dient hier, allein der Unterscheidung voneinander Elemente und/oder Personen mit ansonsten gleicher Bezeichnung und soll keine bestimmte Reihenfolge implizieren. Ferner kann es sich bei Elemente und/oder Personen, deren Bezeichnung sich allein durch eine Ordinalzahl unterscheidet, soweit sich aus dem konkreten Zusammenhang nicht eindeutig etwas anderes ergibt, um identische oder voneinander verschiedene Elemente bzw. Personen handeln.

### Kurzbeschreibung der Figuren

Verschiedene Ausführungsformen eines erfinderischen DV-Systems sowie eines entsprechenden Verfahrens zum Betrieb eines solchen DV-Systems sind in den nachfolgend beschriebenen Zeichnungen veranschaulicht. Darin zeigen:
- Figur 1: ein Blockdiagramm einer Ausführungsform eines erfindungsgemäßen DV-Systems;
- Figur 2: ein Flussdiagramm einer Ausführungsform eines erfindungsgemäßen Verfahrens;
- Figur 3: ein Blockdiagramm eines Systems mit einem kritischen Infrastrukturgebäude gemäß einer Ausführungsform, das von einem DV-System gesteuert wird;
- Figur 4: ein Blockdiagramm eines verteilten Systems mit mehreren DV-Systemen gemäß einer Ausführungsform, die ML-Modelle von Vorhersageprogramme synchronisieren;
- Figur 5: ein Blockdiagramm eines DV-Systems mit mehreren Datenbanken,
- Figur 6: den Vorgang der Erstellung von Berechtigungstoken für zwei Nutzer gemäß einer Ausführungsform,
- Figur 7: den Ablauf der Einräumung von Zugriffsrechten über eine Sequenz von Nutzern,
- Figur 8: Ein Beispiel für Nutzdaten, die Bestandteil eines Datensatzes sind,
- Figur 9: zwei dynamisch und unabhängig voneinander generierte Hierarchien, entlang welcher einerseits Zugriffsrechte und andererseits Eignerrechte über eine Kaskade von DV-Systemen vergeben wurden, und
- Figur 10: ein Flussdiagramm eines Verfahrens zur Übertragung von Eignerrechten und Zugriffsrechten von einem DV-System auf ein anderes.

### Ausführliche Beschreibung

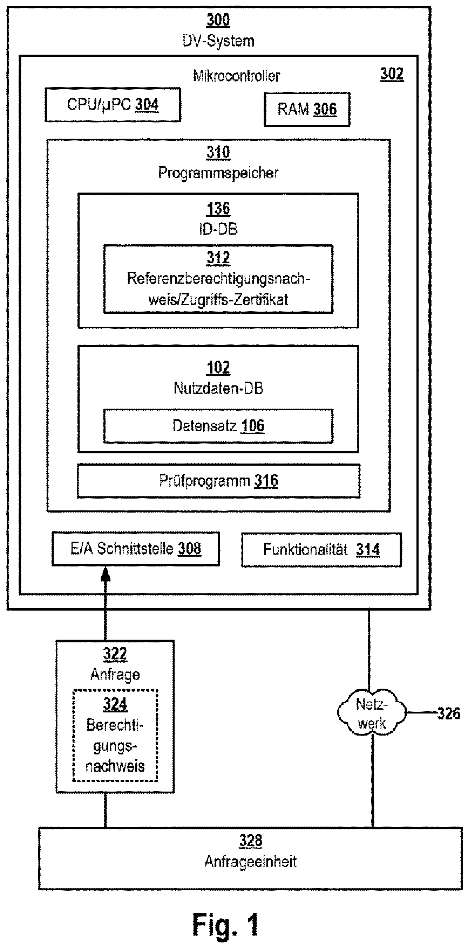

**Figur** 1 zeigt ein Blockdiagramm einer Ausführungsform eines erfindungsgemäßen DV-Systems 300. Das DV-System 300 kann insbesondere als Endknoten einer loT-Anwendung ausgebildet sein, z.B. als sogenanntes "embedded System". Das DV System beinhaltet ein oder mehrere Eingabe/Ausgabe-Ports 308, über welchen das DV-System 300 Daten mit einem oder mehreren anderen DV-Systemen, zum Beispiel eine Anfrageeinheit 328, über ein Netzwerk 326 austauschen kann. Bei dem Netzwerk 326 kann es sich insbesondere um eine Internetverbindung handeln, die zum Beispiel über ein Mobilfunknetz oder andere Telekommunikationstechnologien realisiert werden kann.

Beispielsweise kann das DV-System 300 dazu dienen, die Kühlwasserpumpe eines Kraftwerks kontinuierlich zu überwachen und bei einer Abweichung der Pumpleistung, die größer ist als eine vordefinierte zulässige Maximalabweichung, eine Warnung an übergeordnete Systeme senden und/oder durch das Erzeugen und Senden entsprechender Steuerbefehle an die Pumpe das Problem selbstständig beheben.

Das DV-System 300 beinhaltet zumindest einen Mikrocontroller 302, auf welchem sich ein oder mehrere Mikroprozessoren 304, ein Arbeitsspeicher 306 sowie ein nichtflüchtiger Programmspeicher 310 befinden. Der Programmspeicher beinhaltet zumindest einen oder mehrere Referenzberechtigungsnachweise 312 in Form von numerischen Datenwerten sowie ein Prüfprogramm 316. Das Prüfprogramm 316 ist dazu ausgebildet, Anfragen, die das DV-System 300 über ein Netzwerk 326 empfängt, zu prüfen und in Abhängigkeit des Prüfergebnisses zu beantworten bzw. nicht zu beantworten.

Beispielsweise kann ein hier als Anfrageeinheit 328 bezeichnetes weiteres DV-System 328 eine Anfrage 322 zum lesenden Zugriff auf einen bestimmten Datensatz 106 des DV-Systems 300 über das Netzwerk 326 an das DV-System 300 senden. Die Anfrage beinhaltet einen Berechtigungsnachweis 324 in Form eines numerischen Datenwertes.

Das Prüfprogramm 316 ist dazu konfiguriert, in Antwort auf den Empfang der Anfrage 322 zunächst nur eine erste Prüfung durchzuführen. Die erste Prüfung besteht darin, zu prüfen, ob in dem DV-System 300 ein numerischer Datenwert, hier als Referenzberechtigungsnachweis 312 bezeichnet, gespeichert ist, der identisch ist zu dem empfangenen Berechtigungsnachweis 324. Beispielsweise kann der Referenzberechtigungsnachweis 312 innerhalb einer ID-Datenbank 136 gespeichert sein und der Datensatz 106, auf den sich die Zugriffsanfrage bezieht, innerhalb einer Nutzdaten-Datenbank 102 gespeichert sein. Sowohl die ID-Datenbank 136 als auch die Nutzdaten-Datenbank können auf dem Programmspeicher 310 des Microcontrollers 302 gespeichert sein.

Falls diese erste Prüfung ergibt, dass das DV-System 300 keinen zu dem Berechtigungsnachweis 324 identischen Wert gespeichert hat, reagiert das DV-System 300 nicht auf die Anfrage. Insbesondere sendet das keine Fehlermeldung an die Anfrageeinheit 328, sodass ein potentieller Angreifer in Antwort auf eine Anfrage keinerlei Informationen über das DV-System 300 erhält.

Das Prüfprogramm 316 ist dazu konfiguriert, nur dann, falls die erste Prüfung ergibt, dass das DV-System 300 einen zu dem Berechtigungsnachweis 324 identischen Wert gespeichert hat, eine weitere Prüfung durchzuführen. Beispielsweise kann die weitere Prüfung rechnerisch deutlich aufwendiger sein und eine Prüfung beinhalten, ob in der Anfrage weitere Datenwerte enthalten sind, die dem anfragenden System dazu berechtigen, die angefragte Funktionalität durchzuführen bzw. die angefragten Daten zu lesen oder schreibend zu verändern. Nur falls auch die weitere Prüfung ergibt, dass das anfragende System die entsprechenden Rechte hat, führt das DV-System 300 die angeforderte Funktionalität 314 aus. Beispielsweise kann die Funktionalität 314 darin bestehen, den angefragten Datensatz 106 auszulesen und über das Netzwerk an die Anfrageeinheit zurückzugeben.

Beispielsweise können in der Nutzdaten-Datenbank 102 die kontinuierlich über einen längeren Zeitraum von mehreren Jahren erfassten Leistungszahlen (Schwingungsparameterwerte, Umdrehungen pro Minute, Temperatur, Strömungswiderstand etc.) der Pumpe gespeichert sein. Die von der Anfrageeinheit in der Anfrage 322 angeforderte Funktionalität 314 kann darin bestehen, dass das DV-System 300 die innerhalb eines bestimmten Zeitraums erfassten Leistungszahlen der Pumpe, zum Beispiel die Leistungszahlen des letzten Monats, oder nur diejenigen Leistungszahlen, die außerhalb eines vorgegebenen Normbereichs waren, auszulesen und zurückzugeben.

In anderen Ausführungsformen kann die Funktionalität 314 aber auch darin bestehen, dass das DV-System 300 einen Steuerbefehl an die Pumpe sendet, welche die Pumpe dazu veranlasst, ihre Tätigkeit einzustellen oder zu erhöhen. Derartige Manipulationen an wichtigen Komponenten sicherheitskritischer Infrastrukturobjekte, wie zum Beispiel Kraftwerken, müssen sicher vor unberechtigten Zugriffen geschützt werden. Ausführungsformen der Erfindung können vorteilhaft sein, weil sie ein sehr komplexes und dabei gleichzeitig sicheres System und Verfahren bieten können, um solche Komponenten vor unberechtigten Zugriff zu schützen. Gleichzeitig können DV-Systeme gemäß Ausführungsformen der Erfindung auch vorteilhaft sein, weil sie verlässlichen Schutz vor DOS Angriffen bieten können.

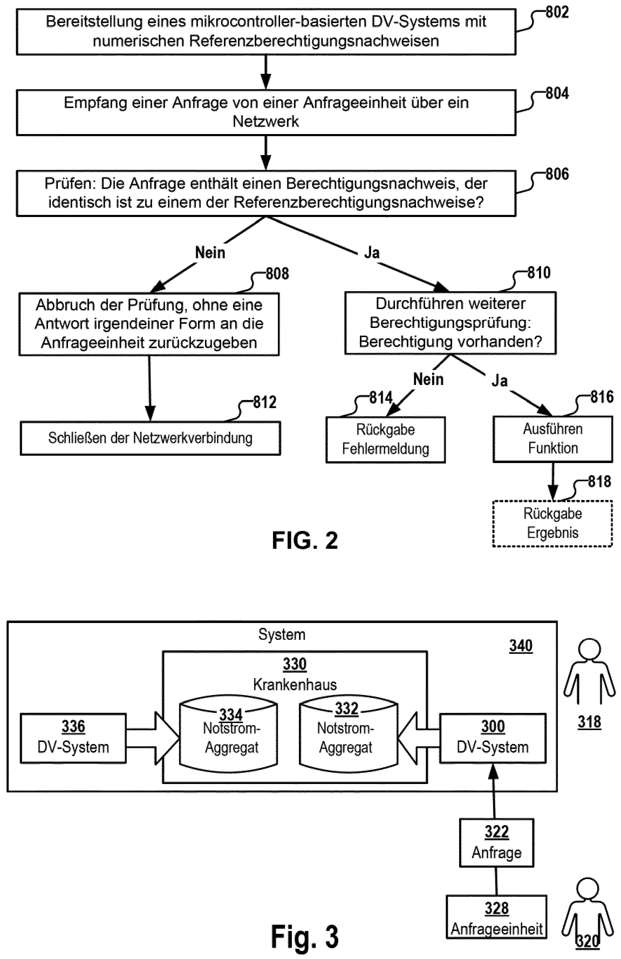

**Figur 2** zeigt ein Flussdiagramm einer Ausführungsform eines erfindungsgemäßen Verfahrens zum Betrieb eines mikrocontroller-basierten DV Systems, wie dies z.B. in Figur 1 dargestellt ist.

In einem ersten Schritt 802 wird das mikrocontroller-basierte DV-System und optional weitere DV-Systeme bereitgestellt. Beispielsweise kann das DV-System ein IoT Endknoten sein, der mit weiteren IoT Endknoten über ein Netzwerk verbunden ist und zusammen mit diesem bereitgestellt wird. Beispielsweise kann die Bereitstellung in der Auslieferung des DV-Systems an einen Kunden oder die Installation beim Kunden umfassen.

In einem nächsten Schritt 804 empfängt das DV-System 300 eine Anfrage 322 von einer Anfrageeinheit 328. Bei der Anfrageeinheit kann es sich um eine vertrauenswürdiges DV-System handeln, das zusammen mit dem DV-System 300 bereitgestellt wurde und zusammen mit diesem ein IoT bildet. Es kann sich aber auch um ein Gerät eines Angreifers handeln, dessen Ziel es ist, in das DV-System einzudringen oder dieses funktional durch einen DOS oder DDOS Angriff außer Betrieb zu setzen.

Zum Schutz gegen solche Angriffe führt das DV-System 300 in Schritt 806 eine erste Prüfung durch, die sehr schnell und mit minimaler Rechenlasst durchgeführt werden kann. Die erste Prüfung umfasst lediglich eine Analyse, ob in der Anfrage ein Berechtigungsnachweis 324 in Form eines numerischen Datenwerts enthalten ist, der identisch ist zu einem in dem DV-System 300 gespeicherten Referenzberechtigungsnachweis.

Falls dies nicht der Fall ist, bricht das DV-System 300 in Schritt 808 die Prüfung ab, ohne eine Antwort, Fehlermeldung oder sonstige Nachricht an die Anfrageeinheit zu senden. Vorzugsweise wird zudem die Netzwerkverbindung zu der Anfrageeinheit zumindest für eine gewisse Zeit unterbrochen. Ein Angreifer erhält also keinerlei Information über das DV-System 300, er weiß letztlich noch nicht einmal, ob das DV-System 300 überhaupt existiert.

Falls die erste Prüfung jedoch zu einem positiven Ergebnis führt, führt das DV-System in Schritt 810 eine weitere Prüfungen durch, die rechenintensiver ist als die erste Prüfung und beispielsweise die Prüfung weiterer Merkmale mit kryptographischen Methoden und/oder Zertifikatskettenprüfung beinhaltet. Führt diese Prüfung zu dem Ergebnis, dass die Anfrageeinheit die erforderlichen Rechte zur Durchführung der angefragten Funktion nicht besitzt, kann das DV-System in Schritt 814 eine Fehlermeldung zurückgeben. Beispielsweise kann das DV-System davon ausgehen, dass die Anfrageeinheit an sich vertrauenswürdig ist, da die Anfrage ja immerhin den Berechtigungsnachweis enthielt. Es kann aber eine Fehlkonfiguration vorliegen oder die benötigten weiteren Rechte könnten mittlerweile durch Zeitablauf oder aufgrund eines aktiven Entzugs von Rechten nicht (mehr) vorhanden sein. In diesem Fall kann es sinnvoll sein, den Grund für das negative Ergebnis der weiteren Prüfung an die Anfrageeinheit mitzuteilen, sodass diese den Fehler ggf. beheben und z.B. ein neues Nutzer-Zertifikat für die Anfrageeinheit ausstellen lassen kann.

Für den Fall dass auch die weitere Prüfung positiv verläuft, also zum Ergebnis hat, dass die weiteren benötigten Rechte vorliegen, ermöglicht das DV-System 300 in Schritt 816 es einer Person oder der Anfrageeinheit, die angefragte Funktion auszuführen. Alternativ kann das DV-System die Funktion auch selbst ausführen.

In einem weiteren optionalen Schritt 818 gibt das DV-System das Ergebnis der Funktionsausführung an die Anfrageeinheit zurück. Beispielsweise kann die Funktion das Absenden eines Steuerbefehls an eine Maschine oder Maschinenkomponente beinhalten und das zurückgegebene Ergebnis beinhaltet eine Nachricht, dass der Steuerbefehl abgegeben und umgesetzt wurde.

**Figur 3** zeigt ein Blockdiagramm eines Systems 340, das ein sicherheitskritisches Infrastrukturobjekt, z.B. ein Krankenhaus 330, und ein oder mehrere DV-Systeme 336, 300 beinhaltet. Das bzw. die DV-Systeme sind dazu ausgebildet, Komponenten des Infrastrukturobjekts zu überwachen und/oder zu steuern, wobei die DV-Systeme miteinander vernetzt sind und Daten mittels Anfragen austauschen.

In einem Beispiel beinhaltet ein Krankenhausgebäude 330 mehrere Notstromaggregate 334, 332, die jeweils von einem der vernetzten DV-Systeme überwacht und gesteuert werden. Bei Ausfall der normalen Stromversorgung soll nur eines 332 der beiden Notstromaggregate aktiviert werden, das zweite 334 soll nur dann aktiviert werden, falls das erste Notstromaggregat sich nicht aktivieren lässt oder ausfällt. Die beiden Notstromaggregate werden jeweils von einem der DV-Systeme überwacht. Um sicherzustellen, dass bei Ausfall der normalen Stromversorgung erst das erste Notstromaggregat 332 und erst bei dessen Ausfall bzw. Nicht-Aktivierbarkeit das zweite Notstromaggregat 334 aktiviert wird, tauscht das erste DV-System 300, das das erste Notstromaggregat 332 kontrolliert, kontinuierlich Daten mit dem zweiten DV-System 336, das das zweite Aggregat 334 kontrolliert, aus. Beispielsweise kann das erste DV-System in regelmäßigen Abständen, z.B. einmal in der Sekunde, Anfragen an das zweite DV-System 336 schicken, wobei jede Anfrage, die vom zweiten DV-System 334 in einem in Figur 2 dargestellten mehrstufigen Prüfprozess als valide eingestuft wird, eine "Unterdrückungsfunktion" aktiviert. Das bedeutet, das ein "normal" funktionierendes erstes DV-System 300 die Aktivierung des zweiten DV-Systems 336 und damit auch die Aktivierung des zweiten Notstromaggregats 334 aktiv unterdrückt. Der erfolgreiche Funktionsaufruf bewirkt hier also eine Unterdrückung der Aktivierung des zweiten Notstromaggregats. Falls sich jedoch das erste DV-System bzw. das erste Notstromaggregat 332 nicht aktivieren lässt oder während des Betriebs ausfällt, kann das erste DV-System 300 keine "Unterdrückungsanfragen" mehr an das zweite DV-System 336 senden. Das zweite DV-System ist dazu konfiguriert, bei Ausbleiben einer Unterdrückungsanfrage für eine gewissen Mindestzeitdauer über seine Steuereinheit 344 einen Steuerbefehl an das zweite Notstromaggregat 334 zu senden. Der Steuerbefehl führt zur Aktivierung des Aggregats 334.

Dies ist nur ein Beispiel, wie die direkte Kommunikation zwischen IoT Endknoten gerade im Kontext von sicherheitskritischen Infrastrukturobjekten und Notfallsituationen besonders vorteilhaft sein kann: beim Ausfall wichtiger Komponenten wie z.B. der normalen Stromversorgung ist eine zentrale Steuerung mehrerer Komponenten durch einen zentralen Computer möglicherweise nicht möglich. Dadurch, dass die einzelnen DV-Systeme, die vorzugweise batteriebetrieben und damit weitgehend autonom arbeiten können, direkt miteinander kommunizieren, wird das gesamte System erheblich robuster. Durch das beschriebene mehrstufige Prüfverfahren können Ausführungsformen der Erfindung sicherstellen, dass sensible Funktionen nur von berechtigten DV-Systemen ausgelöst werden können und/oder dass die Interoperabilität der DV-Systeme nicht mit dem Nachteil einhergeht, für DoS Angriffe ein leichtes Ziel zu bieten.

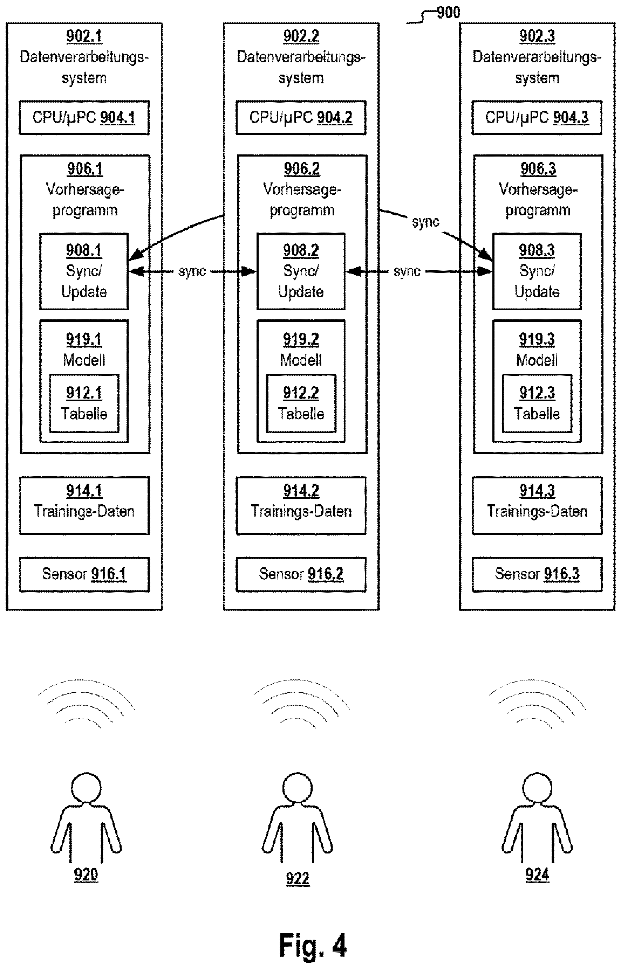

**Figur 4** zeigt ein Blockdiagramm eines verteilten Systems 900 mit mehreren DV-Systemen 902.1, 902.2, 902.3, die jeweils über ein Netzwerk, zum Beispiel das Internet, miteinander verbunden sind. Jedes der DV-Systeme beinhaltet einen Mikrocontroller mit einem oder mehreren Mikroprozessoren 904.1, 904.2, 904.3.

Die DV-Systeme können im Wesentlichen gleichen oder ähnlichen Typs sein. Beispielsweise kann es sich bei den DV-Systemen jeweils um sogenannte "Smart Speaker" mit eingebautem Mikrophon, hier als Sensor 916.1, 916.2, 916.3 repräsentiert, handeln. Ähnliche Systeme werden im Handel von mehreren Herstellern angeboten, zum Beispiel Amazons Alexa oder Medion P61110. Auf den SmartSpeakern können jeweils virtuelle KI-Assistenten installiert sein oder einfachere Softwareprodukte, die darauf beschränkt sind, spezifische Einzelaufgaben zu lösen.

Beispielsweise kann auf jedem der DV-Systeme ein Vorhersageprogramm 906.1, 906.2, 906.3 beinhalten. Jedes der Vorhersageprogramme beinhaltet mehrere Module und/oder Funktionen, um verschiedene Aufgaben wahrzunehmen. Beispielsweise beinhaltet jedes Vorhersageprogramm ein statistisches Modell 919.1, 919.2, 919.3, welches dazu verwendet werden kann, ein bestimmtes Vorhersageproblem zu lösen. Bei dem statistischen Modell kann es sich insbesondere um ein prädiktives Modell handeln, das im Rahmen eines Trainingsprozesses auf der Basis von Trainingsdaten gelernt hat, statistische Zusammenhänge und Korrelationen innerhalb der Trainingsdaten zu erkennen und das so erlernte Wissen in dem Modell zu speichern, dass das Modell in der Lage ist, auf der Basis neuer, im Trainingsdatensatz nicht enthaltene Eingabedaten, eine verlässliche Vorhersage zu berechnen. Die Vorhersageprogramme 906.1, 906.2, 906.3 können also jeweils verschiedene Funktionen und insbesondere Machine-learning-(ML)-Algorithmen beinhalten, die zum Trainieren des Modells (auch als ML-Modell bezeichnet) während der Trainingsphase verwendet werden können.

Gemäß Ausführungsformen der Erfindung beinhaltet jedes der Vorhersageprogramme auch ein Modul bzw. eine Funktion zum kontinuierlichen Erfassen und Speichern von Daten, die als Trainingsdaten 914.1, 914.2, 914.3 im Zuge des Trainingsprozesses der ML-Modelle verwendet werden. Beispielsweise kann es sich bei den erfassten Daten um Spracheingaben verschiedener Personen 920, 922, 924 handeln, wobei die Spracheingaben jeweils von einem Mikrofon 916.1, 916.2, 916.3 des jeweiligen DV-Systems erfasst werden.

Beispielsweise kann jedes der DV-Systeme einer Person spezifisch zugeordnet sein. Beispielsweise kann DV-System 902.1 sich in der Wohnung der Person 920 befinden, DV-Systeme 902.2 in der Wohnung von Person 922, und DV-System 902.3 in der Wohnung von Person 924. Im Laufe der Zeit werden die verschiedenen DV-Systeme also unterschiedliche Trainingsdaten sammeln in Abhängigkeit davon, welche Spracheingaben die einzelnen Personen in ihr jeweiliges DV-Systeme eingeben. Die Unterschiedlichkeit der Spracheingaben kann sich zum Beispiel auf den Inhalt, also die Semantik der Wörter und Sätze beziehen, aber auch auf Unterschiede bezüglich der Betonung, Stimmhöhe, des Dialekts oder sonstiger Charakteristika der Aussprache und Stimme einer bestimmten Person. Welche dieser Merkmale im Zuge des Trainingsprozesses ausgewertet und zum Trainieren des Modells verwendet werden hängt vom jeweiligen Modell und der von diesen zu lösenden Vorhersageaufgabe ab.

Beispielsweise kann es sich bei dem Vorhersageproblem um das Problem einer Berechnung einer korrekten Übersetzung eines natürlich sprachlichen Textes, der in eine Ausgangssprache eingegeben wird, in eine Zielsprache handeln. Beispielsweise kann es sich bei jeder der Personen 920, 922, 924 um Übersetzer handeln, die den Ausgangstext in der Ausgangssprache über das Mikrofon eingeben und/oder aufgezeichnete Diktate in der Ausgangssprache als Datei über eine entsprechende Schnittstelle, zum Beispiel USB, einlesen.

Bei jedem der Vorhersageprogramme kann es sich um eine bereits vortrainierte, ML-basierte Übersetzungssoftware handeln, die dazu verwendet wird, den eingegebenen Text von der Ausgangssprache (zum Beispiel Deutsch) in die Zielsprache (zum Beispiel Englisch) zu übersetzen. Der Übersetzer prüft sodann manuell die von dem Vorhersageprogramm berechnete Übersetzung, führt gegebenenfalls Korrekturen durch, und speichert die korrekte Übersetzung des Eingabetextes in einem Datenspeicher des DV-Systems so, dass der Übersetzungstext dem Ausgangstext zugeordnet ist. Beispielsweise können die gespeicherten Daten neben dem Aus-gangstext und der korrekten Übersetzung weitere Daten beinhalten, zum Beispiel Zuordnungen einzelner Wörter und Wortsequenzen der Ausgangssprache zu den entsprechenden Wörtern und Wortsequenzen der Zielsprache, welche im Zuge der automatischen Übersetzung von dem jeweiligen Vorhersageprogramm berechnet wurden. Die Zuordnungen können beispielsweise in Form von ein oder mehreren Tabellen 912.1, 912.2, 912.3 gespeichert werden. Diese im Laufe der Zeit gewonnenen Übersetzungsdaten und Zuordnungen werden als Trainingsdaten 914.1, 914.2, 914.3 jeweils lokal gespeichert.

Gemäß Ausführungsformen für jedes der DV-Systeme in regelmäßigen Abständen ein erneutes Training seines ML-Modells 919.1, 919.2, 919.3 auf dem aufgrund der neu hinzugekommenen Übersetzungsdaten erweiterten Trainingsdatensatz durch. Dies kann den Vorteil haben, dass die Qualität des ML-Modells und damit die Qualität der von diesem erzeugten Übersetzungen zunimmt, denn je umfangreicher der Trainingsdatensatz, desto höher ist im allgemeinen auch die Qualität eines auf diesem trainierten prädiktiven Modells.

Gemäß bevorzugter Ausführungsformen beinhaltet jedes der Vorhersageprogramme ein Modul 908.1, 908.2, 908.3 zur Synchronisation der Trainingsdaten und/oder des trainierten Modells mit den anderen Vorhersageprogrammen. Beispielsweise kann jedes der DV-Systeme in Form eines virtuellen Nutzers mit entsprechenden Account in einer ID-Datenbank des jeweils anderen DV-Systems registriert sein. Außerdem kann jedes der DV-Systeme die von diesen lokal erfassten Trainingsdaten in Form von ein oder mehreren Datensätzen in einer Nutzdaten-Datenbank speichern. Jeder dieser Datensätze kann ein oder mehrere Zugriffs-Zertifikate beinhalten.

In der ID-Datenbank der jeweiligen DV-Systeme können Nutzerzertifikate, Eignerzertifikate und/oder Zugriffszertifikate sowie entsprechende Kettenobjekte, welche Eignerrechte und/oder Zugriffsrechte einzelnen Nutzern (und damit DV-Systemen) zuweisen, gespeichert sein. Im Zuge der Synchronisation sendet jedes der DV-Systeme eine Synchronisations-Anfrage an jedes der anderen DV-Systeme, wobei das als Empfänger dieser Anfrage fungierende DV-System dazu konfiguriert ist, eine Prüfung der Anfrage gemäß den hier beschriebenen Ausführungsformen der Erfindung durchzuführen. Beispielsweise beinhaltet die Synchronisationsanfrage zumindest ein Zugriffs-Zertifikat, welches zum lesenden und/oder schreibenden Zugriff auf einen bestimmten Datensatz des Empfänger-DV-Systems berechtigt. Das Zugriffszertifikat ist ein einfacher numerischer Wert, zum Beispiel "29347293892877172". Das Empfänger-DV-System prüft nach Erhalt der Anfrage zunächst in einem ersten Prüfschritt, ob ein solcher Wert in seiner ID-Datenbank vorhanden ist. Da es sich bei diesem Schritt nur um einen Vergleich einer numerischen Zahl auf Identität handelt, kann dieser Schritt sehr schnell durchgeführt werden.

Falls das Empfänger-DV-System diesen Wert nicht kennt, wird keine weitere Prüfung durchgeführt und die Anfrage nicht beantwortet. Gemäß Ausführungsformen unterbricht das Empfänger-DV-System zumindest für eine gewisse Zeit die Netzwerkverbindung zu dem Sender-DV-System.

Nur für den Fall, dass ein entsprechender Wert in der ID Datenbank enthalten ist, führt das Empfänger-DV-System weitere Prüfschritte durch, die insbesondere eine komplexe Prüfung beinhalten, ob das anfragende DV System die nötigen Rechte hat, die angefragte Zugriffsaktion auf den Datensatz bzw. die Datenbank durchzuführen. Beispielsweise kann im Zuge dieser weiteren Prüfung eine komplexe und rechnerisch aufwändige Zertifikatskettenprüfung durchgeführt werden. Beispielsweise kann die Anfrage neben dem Berechtigungsnachweis "29347293892877172" ein Nutzer-Zertifikat beinhalten, das von einer Zertifizierungsstelle (CA) für das Sende-DV-System ausgestellt wurde.

Das Empfänger-DV-System kann im Zuge der weiteren Prüfung ein Zugriffsermächtigungskettenobjekt innerhalb der ID-Datenbank identifizieren, das diesem Nutzer-Zertifikat das Zugriffs-Zertifikat "29347293892877172" über eine Kette mehrerer weiterer Nutzer-Zertifikate zuweist, wobei die weiteren Nutzerzertifikate für Nutzer bzw. DV-Systeme stehen, die dem Anfrage-DV-System das Zugriffsrecht "29347293892877172" letztlich mittelbar zugewiesen haben. Die Nutzer-Zertifikate dieser Nutzer bzw. DV-Systeme wurden z.B. von der gleichen Zertifizierungsstelle ausgestellt. Durch die Zertifikatskettenprüfung kann das Empfängersystem sicher prüfen, ob das Anfrage-DV-System sein Zugriffsrecht auch wirklich von Nutzern bekommen hat, die dem Empfänger-DV-System bekannt sind und als vertrauenswürdig gelten und die selbst jeweils dieses Zugriffsrecht hatten. Falls auch die weitere Prüfung positiv ist, darf das anfragende DV-System die lokal erfassten Trainingsdaten und/oder das lokal trainierte und verbesserte ML-Modell mit den lokalen Trainingsdaten oder dem Modell des Empfänger-DV-Systems synchronisieren.

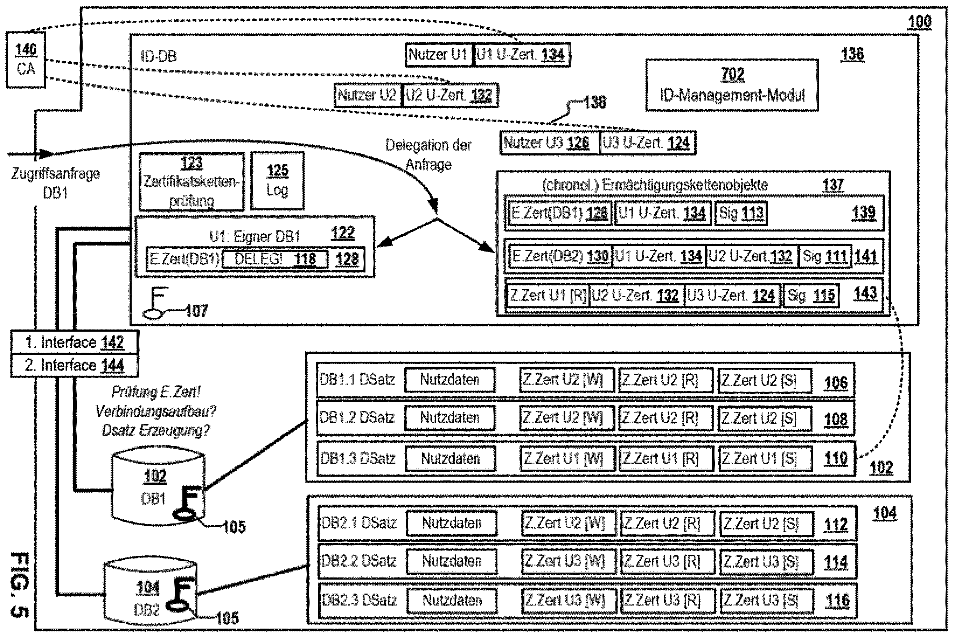

**Figur 5** zeigt ein Blockdiagramm eines DV-Systems 100 mit mehreren Nutzdaten-Datenbanken 102 DB1, 104 DB2 und einer ID-Datenbank 136. Das DV-System beinhaltet ein Zugriffs-Verwaltungssystem in Form einer Zugriffsverwaltungssoftware, die dazu konfiguriert ist, den Zugriff von mehreren Nutzern U1, U2, U3, ..., auf mehrere Datensätze 112, 114, 116 zu kontrollieren. Jeder der Nutzer U1, U2, U3 repräsentiert jeweils ein DV-System, z.B. das vorliegende DV-System 100 sowie externe DV-Systeme.

Beispielsweise ist einem ersten Nutzer- U1 ein Nutzer-Zertifikat 134 zugeordnet. Das Nutzer-Zertifikat 134 wurde von einer Zertifizierungsstelle 140 als ein Root-Zertifikat für den Nutzer-U1 ausgestellt. Nutzer U1 kann z.B. das DV-System 100 repräsentieren, Nutzer U2, U3 könnten jeweils externe DV-Systeme repräsentieren, die ggf. Anfragen an das DV-System 100 senden können, um Nutzdaten in der Nutzdatenbank zu lesen oder zu erstellen oder um die Ausführung einer mit einem Nutzdatensatz verknüpfte Funktionalität zu triggern. In analoger Weise könnten auch den weiteren DV-Systemen Nutzer-Zertifikate 132,124 zugeordnet sein, die von der Zertifizierungsstelle als Root-Zertifikate ausgestellt wurden. Die Nutzer-Zertifikate 134,132,124 können durch Zertifikatskettenprüfung bis zum entsprechenden Rot-Zertifikat der Zertifizierungsstelle geprüft werden.

Der erste Nutzer U1 könnte beispielsweise das DV-System 100 selbst oder ein technischer Administrator für die Nutzdaten-Datenbanken DB1, DB2 des DV-Systems 100 sein. Entsprechend kann dem ersten Nutzer U1 ein Eigner-Zertifikat 128 für die erste Nutzdaten-Datenbank DB1 zugeordnet sein. Die Zuordnung, auch "Verknüpfung" genannt, kann beispielsweise in Form eines Ermächtigungskettenobjekts 139 implementiert und in einer ID-Datenbank 136 gespeichert sein.

Das Zugriffs-Verwaltungssystem ist also dazu ausgebildet, ein erstes Eignerzertifikat, zum Beispiel Eigner-Zertifikat 128 bezüglich DB1 oder Eigner-Zertifikat 130 bezüglich DB2 mit dem ersten Nutzer U1 zu verknüpfen. Dies kann durch Speicherung des Eigner-Zertifikats 128 und des Nutzer-Zertifikat 134 des ersten Nutzers U1 in einem Eignerschaftsermächtigungskettenobjekt 139 erfolgen bzw. durch Speicherung des Eigner-Zertifikat 130 und des Nutzer-Zertifikats 134 des ersten Nutzers U1 in einem Eignerschaftsermächtigungskettenobjekt 141. Ein Eigner-Zertifikat ist ein Zertifikat, welches einer oder mehreren Nutzdaten-Datenbanken zugeordnet ist und jedem Nutzer, mit dem es verknüpft ist, das Recht gewährt, Datensätze in dieser Nutzdaten-Datenbank anzulegen. Beispielsweise gewährt das Eigner-Zertifikat 128 jedem Nutzer, dem es (zum Beispiel durch ein Eignerschaftsermächtigungskettenobjekt) zugeordnet ist, das Recht, einen oder mehrere Datensätze in der Datenbank-DB1 zu erstellen.

Das DV-System 100 beinhaltet eine erste Schnittstelle 142, die es dem ersten Nutzer U1, dem das Eigner-Zertifikat 128 für die Datenbank DB1 zugeordnet ist, ermöglicht, ein zweites Eigner-Zertifikat für die Nutzdaten-Datenbank DB1 zu erstellen und dieses zweite Eigner-Zertifikat mit einem zweiten Nutzer U2 zu verknüpfen. Diese Verknüpfung mit dem zweiten Eigner-Zertifikat ermöglicht es dem zweiten Nutzer, nun seinerseits Datensätze in der Nutzdaten-Datenbank DB1 anzulegen. Auch der zweite Nutzer kann sich, sofern das zweite Eigner-Zertifikat gemäß seines Delegierbarkeitsparameters delegierbar ist, dieser ersten Schnittstelle bedienen um weiteren Nutzern seines Vertrauens identische oder veränderte Kopien des Eigner-Zertifikats für die Datenbank-DB1 auszustellen und in Verbindung mit einem Nutzer-Zertifikat dieser weitere Nutzer in der ID-Datenbank zu speichern, zum Beispiel in Form weiterer Eignerschafts-Ermächtigungskettenobjekte 139, 141.

Das DV-System 100 beinhaltet eine zweite Schnittstelle 144, die es dem zweiten Nutzer U2, der einen Datensatz 106, 108 in der Nutzdaten-Datenbank 102 erstellt hat (nachdem ihm bereits von dem ersten oder einem anderen Nutzer ein Eigner-Zertifikat für die DB1 ausgestellt wurde), ermöglicht, mindestens ein Zugriffs-Zertifikat zu erstellen und mit dem Nutzer-Zertifikat eines Nutzers, dem Zugriff auf diesen Datensatz gewährt werden soll, zu verknüpfen. Bei dem Nutzer, dem Zugriff gewährt werden soll, kann es sich um einen beliebigen anderen Nutzer (z.B. beliebiges anderes DV-System), der bei dem Zugriffs-Verwaltungssystem registriert ist und der das Vertrauen des zweiten Nutzers (Datensatzerstellers) besitzt, handeln. Bei den Zugriffs-Zertifikaten des zweiten Nutzers U2 kann es sich zum Beispiel um ein Schreibzugriffs-Zertifikat Z.Zert_U2[W], ein Lesezugriffs-Zertifikat Z.Zert_U2[R] und/oder ein Indexzugriffs-Zertifikat Z.Zert_U2[S] handeln. Ein Zugriffs-Zertifikat kann also eine Art des Datensatzzugriffs auf den von dem zweiten Nutzer erstellten Datensatz spezifizieren.

Falls nun der erste Nutzer U1 auf einen Datensatz 106, 108, den der zweite Nutzer U2 erstellt hat, zugreifen will, prüft das Zugriffs-Verwaltungssystem die Zugriffsberechtigung des ersten Nutzers auf einen von dem zweiten Nutzer angelegten Datensatz 106, 108. Der gewünschte Zugriff wird dem ersten Nutzer nur dann gewährt, wenn das Zugriffs-Verwaltungssystem feststellt, dass dem ersten Nutzer U1 sowohl ein Eigner-Zertifikat für die Nutzdaten-Datenbank 102 als auch ein Zugriffs-Zertifikat Z.Zert U2 [W] (oder [R] oder [S]) für den Zugriff auf den Datensatz zugeordnet ist.

Die einzelnen Datensätze 106, 108, 110, 112, 114, 116 enthalten lediglich Zugriffs-Zertifikate, die der Nutzer, der den betreffenden Datensatz erstellt hat, diesen Datensätzen im Zuge der Erstellung zuweist. Beispielsweise kann das DV-System 100 während des Vorgangs der Erstellung eines neuen Datensatzes im Hintergrund automatisch prüfen, welche Zugriffs-Rechte für den Nutzer, der gerade einen Datensatz erstellt, in der ID-Datenbank hinterlegt sind. Dies kann insbesondere dann vorteilhaft sein, wenn jedem Nutzer ein vordefinierter Satz an Zugriffs-Zertifikaten (zum Beispiel für Lese-, Schreib-, und Indexzugriffsrechte) zugewiesen ist welcher automatisch auch komplett jedem neu erstellten Datensatz zugewiesen werden soll. Diese Situation ist in Figur 5 dargestellt. Alternativ dazu ist es jedoch auch möglich, dass jedem Nutzer mehrere verschiedene Zugriffs-Zertifikate (der gleichen Zugriffsart, zum Beispiel Lesezugriff) in der ID-Datenbank zugewiesen sind und der Nutzer manuell über eine GUI im Zuge der Datensatzerstellung auswählen kann, welche dieser Zugriffs-Zertifikate dem neuen Datensatz zugewiesen werden sollen. Dies kann vorteilhaft sein, da der Nutzer für eine große Vielzahl von Datensätzen, die er anliegt und die zum Beispiel ähnlichen Inhalts sind oder ein ähnliches Vertraulichkeitsniveau besitzen, den gleichen Satz an Zugriffs-Zertifikaten im Zuge der Erstellung zuweisen kann. Für den Fall aber dass der Nutzer zum Beispiel zehn verschiedene Kreditkarten verwaltet und die vertraulichen Kreditkartennummern in zehn verschiedenen Datensätzen speichert, hat der Nutzer auch die Möglichkeit, jedem dieser Datensätze ein anderes Zugriffs-Zertifikat zuzuweisen. Dies hat den Vorteil, dass der Ersteller jedes dieser Kreditkartennummern-Datensätze weiteren Nutzern selektiv nur für einen bestimmten Kreditkartennummern-Datensatz gewähren kann, also ohne den betreffenden weiteren Nutzern automatisch auch Zugriffsrechte für die anderen Kreditkartendatensätze zu geben. Der Einfachheit halber beziehen sich die meisten der hier beschriebenen Ausführungsformen und Beispiele darauf, das einem Nutzer 3 Zugriffs-Zertifikate für Lese-, Schreib-, und Indexzugriffsrechte zugewiesen sind, die im Zuge einer Datensatzerstellung durch den Nutzer automatisch in diesen Datensatz integriert werden. Diese Beispiele sind jedoch so zu verstehen, dass nach alternativen Ausführungsformen und Beispielen der Nutzer, der einen Datensatz erstellt, auch manuell eine bestimmte Untermenge aus vordefinierten und ihm zugewiesenen Zugriffs-Zertifikaten auswählen und in den erstellten Datensatz integrieren kann.

Die in Figur 5 dargestellten Datensätze zeigen, dass beispielsweise die Datensätze 106, 108, und 112 von dem Nutzer U2 angelegt wurden. Der Datensatz 110 wurde von dem Nutzer U1 angelegt. Der Datensatz 116 wurde von dem Nutzer U3 angelegt. Die vordefinierten Zugriffs-Zertifikate der jeweiligen Ersteller wurden in die Datensätze integriert. Zumindest die Ersteller haben also vollumfänglichen Zugriff auf ihre Datensätze, sofern sie auch über ein Eigner-Zertifikat für die jeweilige Nutzdaten-Datenbank verfügen. Es ist jedoch durchaus möglich, dass weitere Nutzer Zugriff auf einzelne Datensätze haben. Diese Information ist jedoch nicht in der Nutzdaten-Datenbank enthalten, sondern in Form von Zugriffsermächtigungskettenobjekten 143 in der ID-Datenbank gespeichert. So ist beispielsweise aus dem Objekt 143 ersichtlich, dass ein Zugriffs-Zertifikat des Nutzers U1, dass ein Leserecht spezifiziert, von dem Ersteller U1 dem Nutzer U2 zugewiesen wurde, indem das Nutzer-Zertifikat 132 dieses Nutzers U2 innerhalb des Objekts 143 mit dem Lesezugriffs-Zertifikat von U1 verknüpft wurde. Außerdem ist aus dem Objekt 143 ersichtlich, dass der Nutzer U2 dieses Leserecht auf einen weiteren Nutzer U3 übertragen (weitergegeben) hat, indem das Nutzer-Zertifikat 124 des Nutzers U3 innerhalb des Objekts 143 mit dem Lesezugriffs-Zertifikat von U1 verknüpft wurde. Im Zuge jeder Übertragung eines Zugriffsrechts bzw. damit einhergehend im Zuge jeder Zuweisung eines weiteren Nutzer-Zertifikats zu einem bestimmten Zugriffs-Zertifikat wird ein neues Zugriffsermächtigungskettenobjekt in der ID-Datenbank vom Zugriffs-Verwaltungssystem erstellt. Dem menschlichen Nutzer wird vorzugsweise eine intuitive GUI angeboten um Nutzern Zugriffs bzw. Eignerrechte zu übertragen und dadurch im Hintergrund die Erzeugung weiterer Zertifikate oder weiterer Verknüpfungen von Zugriffs-bzw. Eigner-Zertifikaten mit Nutzer-Zertifikaten zu initialisieren. Das Zugriffsermächtigungskettenobjekt 143 impliziert also, dass sowohl Nutzer U2 als auch Nutzer U3 (und selbstverständlich auch Nutzer U1) Lesezugriff auf die von Nutzer-U1 erstellten Datensätze, zum Beispiel Datensatz 110, haben.

In analoger Weise spezifizieren Eignerschaftsermächtigungskettenobjekten 139, 141 eine Kette aus ein oder mehreren Nutzern, die anderen Nutzern Eigner-Zertifikate zugewiesen und dadurch Eigner-Rechte übertragen haben. So geht beispielsweise aus Objekt 139 hervor, dass der Nutzer-U1 Eigner-Rechte im Hinblick auf die Nutzdaten-Datenbank-DB1 besitzt, da das Nutzer-Zertifikat 134 des Nutzers U1 in dem Objekt 139 dem Eigner-Zertifikat 128 der DB1 zugewiesen ist. Das Objekt 141 spezifiziert, dass der Nutzer U1 die Eigner-Rechte für die Datenbank DB2 an einen weiteren Nutzer U2 übertragen hat.

Falls ein Nutzer eine Zugriffsanfrage auf eine bestimmte Nutzdaten-Datenbank 102 absendet, prüft das Zugriffs-Verwaltungssystem 100 oder eine Komponente desselben, zum Beispiel die betreffende Datenbank 102, ob dem Nutzer, von dem die Anfrage stammt, in der ID- Datenbank ein Eigner-Zertifikat zugewiesen ist. Beispielsweise könnte dieser Schritt eine Analyse sämtlicher Eignerschaftsermächtigungskettenobjekte, die sich auf diese Nutzdaten-Datenbank 102 beziehen, umfassen. Nur falls der anfragenden Nutzer diese Eignerrechte hat, wird ihm der Aufbau einer Datenbank Verbindung zu der Nutzdaten-Datenbank 102 gewährt und, falls dies angefragt wird, auch die Erstellung neuer Datensätze in dieser Datenbank. Damit diese Nutzer jedoch auch auf einzelne Datensätze lesend oder schreibend zugreifen kann oder über einen Index unerfahren bringen kann ob ein bestimmter Datensatz überhaupt existiert, müssen ihm (als es einem Nutzer-Zertifikat) in der ID-Datenbank auch die entsprechenden Rechte zugewiesen sein. Das Zugriffs-Verwaltungssystem prüft vor jedem Zugriff eines Nutzers mit Eignerschaftsrechten also zusätzlich, ob der Nutzer über die erforderlichen Zugriffsrechte verfügt.

Nach manchen Ausführungsformen (hier nicht dargestellt) verfügt jeder Datensatz einer bestimmten Nutzdaten-Datenbank über ein oder mehrere zusätzliche Felder für Zugriffs-Zertifikate, die anderen Nutzern oder Funktionen zugewiesen sind (also nicht speziell dem Nutzer, der den Datensatz erstellt hat). Beispielsweise kann es sich bei einer Nutzdaten-Datenbank um eine Datenbank mit Sensordaten handeln, die ein oder mehrere Sensoren des DV-Systems erfasst haben. Um die Sicherheit zu erhöhen, kann zum Beispiel in jedem Datensatz der Sensormesswertedatenbank ein zusätzliches Feld enthalten sein, in welchem ein Sensormesswertetyp-Zertifikat gespeichert ist. Beispielsweise kann das DV-System mehrere Sensoren unterschiedlichen Typs beinhalten, um den aktuellen Zustand des DV-Systems, das z.B. ein Gerät oder ein Bauteil sein kann, zu erfassen. Zu den Sensoren können z.B. Temperatursensoren, Schwingungssensoren, Feuchtigkeitssensoren, Turbinenumdrehungszahl-Sensoren etc. gehören. Falls es sich bei der Nutzdaten-Datenbank um eine generische Sensordatenbank handelt, die die Messwerte all dieser Sensoren umfasst, kann in jedem Datensatz der Sensormesswertdatenbank ein zusätzliches Feld enthalten sein, in welchem ein Sensorytp-Zertifikat gespeichert ist. Es können eine Vielzahl solcher Felder pro Datensatz enthalten sein, und das Zugriffs-Verwaltungssystem kann für bestimmte Typen von Nutzdaten-Datenbanken automatisch im Zuge der Erzeugung eines neuen Datensatzes die entsprechenden Zugriffs-Zertifikate in den Feldern speichern. Beispielsweise wird bei Erzeugung eines neuen Sensormesswert-Datensatzes durch einen Temperatursensor automatisch in das entsprechende Feld ein Temperatursensor-Zertifikat durch das Zugriffs-Verwaltungssystem eingefügt. Ein Nutzer, der auf einen solchen Datensatz zugreifen möchte, muss also zusätzlich zu dem Eignerschaftsrecht bezüglich der Sensormesswert-Datenbank und zusätzlich zu der Zugriffsberechtigung durch den Ersteller oder einer von diesen dazu ermächtigten Nutzer auch noch nachweisen, dass ihm ein Temperatursensor-Zertifikat zugewiesen ist. Dies kann die Sicherheit erhöhen, da so auf relativ generische und globale Art und Weise bestimmten Nutzern der Zugriff auf bestimmte Daten verwehrt werden kann, von welchen davon ausgegangen werden kann, dass sie für die Arbeit des Nutzers nicht notwendig sind. Beispielsweise könnten Temperaturdaten als sensibel angesehen werden, da diese etwas darüber aussagen, in welcher Umgebung das DV-System verwendet wurde, wohingegen die Turbinendrehzahl nur über den Zustand der Turbine Aufschluss gibt. Je nach Einsatzszenario kann es also vorteilhaft sein, dass bestimmte Nutzer bzw. andere DV-Systeme nur auf bestimmte Messwerte zugreifen können, die sicherheitstechnisch als weniger sensibel gelten, auf andere jedoch nicht. Somit kann für loT Anwendungen ein sehr fein granulares Rechtemanagement bereitgestellt werden, deren Prüfung dennoch die Mikroprozessoren der als loT Endknoten verwendeten DV-Systeme nicht übermäßig beansprucht.

Vorzugsweise ist die Gesamtheit der Zugriffs-Zertifikate eines Datensatzes durch ein oder mehrere logische Operatoren wie zum Beispiel "AND" oder "OR" miteinander verbunden, sodass sich ein komplexer, logisch verbundener Ausdruck ergibt, welcher spezifiziert, welche Zugriffs-Zertifikate einem Nutzer zugewiesen sein müssen damit dieser Zugriff auf einen Datensatz hat. Dabei beinhalten die Zugriffs-Zertifikate eines Datensatzes vorzugsweise eine Mischung aus Zugriffs-Zertifikaten, die dem Ersteller des Datensatzes persönlich zugewiesen sind und die anderen Nutzern persönlich zugewiesen werden müssen um diesen Zugriff zu gewähren, und Zugriffs-Zertifikaten, die von dem Zugriffs-Verwaltungssystem oder einem menschlichen Nutzer automatisch oder manuell jedem Datensatz einer bestimmten Nutzdaten-Datenbank bei Erstellung zugewiesen werden (zum Beispiel Sensortypspezifisches-Zugriffszertifikat oder Steuerobjekt-spezifisches-Zugriffszertifikat, wobei ein Steuerobjekt eine hardwarebasierte oder softwarebasierte Einheit ist, die von einer Funktionalität des DV-Systems gesteuert wird). Diese Zugriffs-Zertifikate werden auch als "Attribut-Zertifikate" bezeichnet.

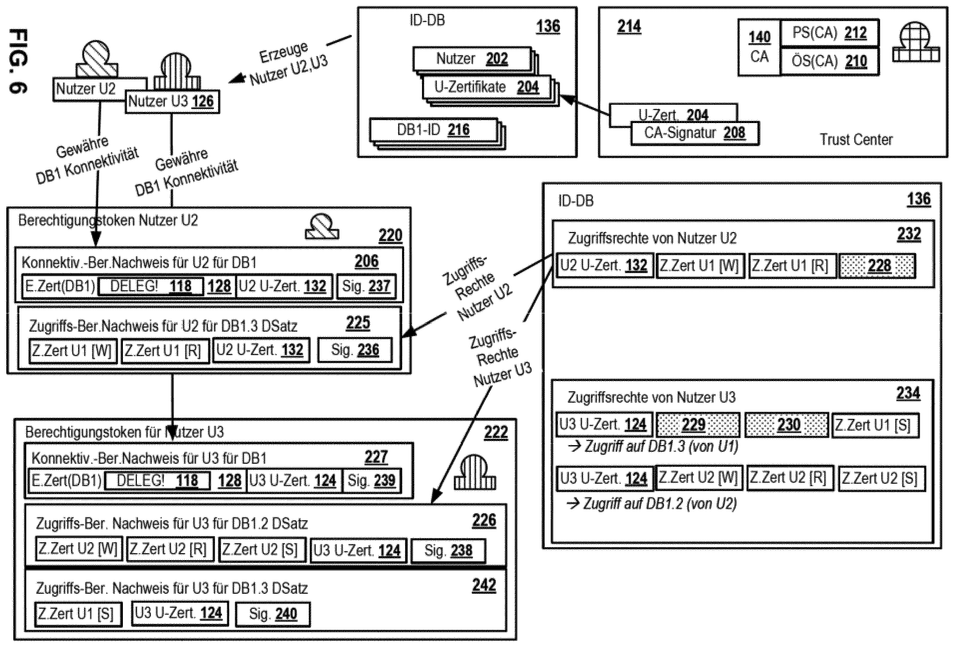

Optional können die einzelnen Ermächtigungsobjekte 139, 141, 143 mit dem privaten Signaturschlüssel 107 des DV-Systems 100 (der z.B. als Signaturschlüssel des darauf instanziierten Zugriffs-Verwaltungssystems implementiert sein kann) signiert werden. Zusätzlich oder alternativ dazu können Berechtigungstoken, die in Antwort auf eine Zugriffsanfrage eines Nutzers (z.B. einer Anfrage der Anfrageeinheit) an eine Nutzdaten-Datenbank von der ID-Datenbank für den anfragenden Nutzer dynamisch erstellt werden, signiert werden (siehe Beschreibung Fig. 6).

**Figur 6** illustriert den Vorgang der Erstellung von Berechtigungstoken für zwei Nutzer U2, U3 gemäß einer weiteren Ausführungsform des erfindungsgemäßen Verfahrens. Bei dem Nutzer U2 kann es sich z.B. um die Anfrageeinheit handeln und bei dem Nutzer U3 um ein weiteres DV-System, das ggf. ebenfalls eine Anfrage an das DV-System 100 schicken kann. Das DV-System U2 und/oder U3 kann z.B. im Wesentlichen so ausgebildet sein wie das DV-System 300 gemäß Figur 1, das die Anfrage empfängt.

In der ID-Datenbank sind einer Vielzahl von Nutzern 202, die z.B. jeweils ein DV-System gemäß Ausführungsformen der Erfindung repräsentieren können, jeweils ein Nutzer-Zertifikat 204 zugewiesen. Die Nutzer-Zertifikate werden vorzugsweise von einer Zertifizierungsstelle 140 herausgegeben und mit einem privaten Signierschlüssel 212 der Zertifizierungsstelle signiert. Die Zertifizierungsstelle stellt zudem einen öffentlichen Signaturprüfschlüssel 210 zur Verfügung (zum Beispiel über entsprechende öffentliche Schlüsselverzeichnisse, die über das Internet einsehbar sind). Das bedeutet, dass die ID-Datenbank 136 die Validität eines Nutzer-Zertifikats durch Zertifikatskettenprüfung unter Einbeziehung des öffentlichen Signaturprüfschlüssels 210 der Zertifizierungsstelle prüfen kann. In der ID-Datenbank können Identifikatoren 216 mehrerer Nutzdaten-Datenbanken gespeichert sein, welchen wiederum jeweils ein oder mehrere eigene-Zertifikate zugewiesen sein können. Vorzugsweise enthält die ID-Datenbank jedoch keine Nutzdaten oder Verweise auf einzelne Datensätze in Nutzdaten-Datenbanken.

Wenn ein Nutzer U2, zum Beispiel über eine entsprechende Anfrage an das DV-System 300, 100, Zugriff auf Datensätze, die in der Nutzdaten-Datenbank-DB1 gespeichert sind, anfordert, wird von dem DV-System 100 automatisch eine Berechtigungsanfrage für diesen Nutzer U2 (der z.B. eine Anfrageeinheit repräsentiert) generiert und an die ID-Datenbank gesendet. Diese analysiert eine Menge an Ermächtigungskettenobjekten 137 um festzustellen, welche Eigner-Zertifikate und Zugriffs-Zertifikate dem Nutzer-Zertifikat 132 des Nutzers U2 zugewiesen sind und erstellt dynamisch in Antwort an diese Berechtigungsanfrage einen Berechtigungstoken 220 für den Nutzer U2. Aus diesem Berechtigungsnachweis geht hervor, dass dem Nutzer U2 ein Eigner-Zertifikat 128 für die Datenbank-DB1 zugewiesen ist, der Nutzer also zum Aufbau einer Datenbank Verbindung zur DB1 berechtigt ist. Außerdem geht aus dem Berechtigungstoken hervor, dass der Nutzer U2 berechtigt ist für den Schreibzugriff auf sämtliche Datensätze, die von dem Nutzer-U1 (der beispielsweise das DV-System 100 oder 300 repräsentiert) erstellt wurden.

Beispielsweise kann der Berechtigungstoken gegliedert sein in einen Konnektivitätsnachweis 206 für den Nutzer U2 im Hinblick auf die Erstellung einer Datenbank Verbindung zur DB1 und in einen Zugriffsberechtigungsnachweis im Hinblick auf eine bestimmte Zugriffsart und im Hinblick auf alle Datensätze, die von einem bestimmten Nutzer erstellt wurden.

Der Berechtigungstoken 220 und/oder die jeweiligen Teil- Berechtigungstoken 206, 225 können eine Signatur 237, 236 enthalten, die mit dem privaten Signierschlüssel 107 der ID-Datenbank dynamisch in Antwort auf die Berechtigungsanfrage erzeugt wurde. Jede der Nutzdaten-Datenbanken beinhaltet einen öffentlichen Signaturprüfschlüssel 105, der mit dem privaten Signierschlüssel 107 ein asymmetrisches kryptographisches Schlüsselpaar bildet. Bevor die Nutzdaten-Datenbank-DB1 dem Nutzer U2 den Aufbau einer Datenbankverbindung und/oder den Zugriff auf einzelne Datensätze erlaubt, wird neben dem Vorhandensein der entsprechenden Zertifikate auch die Validität der Signaturen 237, 236 geprüft und der Verbindungsaufbau bzw. der Datensatzzugriff nur im Falle der Validität der Signatur zugelassen.

In analoger Weise wird in Antwort auf eine Zugriffsanfrage des Nutzers U3 von der ID-Datenbank der Berechtigungstoken 222 generiert und signiert, aus welchem hervorgeht, dass Nutzer U3 zum Verbindungsaufbau zur Datenbank-DB1 berechtigt ist. Außerdem geht aus den Berechtigungstoken 226, 242 hervor, dass der Nutzer U3 auf die von Nutzer U2 erstellten Datensätze lesend und schreibend zugreifen darf und auch eine Indexabfrage um zu erfahren, ob ein bestimmter Datensatz, den der Nutzer erstellt hat, überhaupt existiert, durchführen darf. Außerdem darf Nutzer-U3 eine entsprechende Indexabfrage für Datensätze durchführen, die der Nutzer-U1 erstellt hat, jedoch nicht schreibend oder lesend zugreifen.

Dass der Nutzer U2 auf die Datensätze des Nutzers U1 nur lesend und schreibend, aber nicht per Indexzugriff zugreifen darf, geht aus dem Fehlen eines entsprechenden Zugriffs-Zertifikats in einem entsprechenden Zugriffsermächtigungskettenobjekt hervor. Dieses Fehlen ist durch Box 228 angedeutet.

Dass der Nutzer U3 auf die Datensätze des Nutzers U1 nicht schreibend oder lesend zugreifen darf, geht aus den Boxen 229, 230 hervor. Wenn einem Nutzer in der ID-Datenbank Zugriffsrechte in Form entsprechender Zugriffs-Zertifikate nicht zugewiesen sind, enthält auch der dynamisch erstellte Berechtigungstoken 220, 222 die entsprechenden Rechte nicht.

Vorzugsweise enthalten die dynamisch erstellten Berechtigungstoken 220, 222 nicht die gesamte Kette der Nutzer-Zertifikate derjenigen Nutzer, die anderen Nutzern entsprechende Eigner-Zertifikate oder Zugriffs-Zertifikate zugewiesen haben, sondern nur die dem anfragenden Nutzer zugewiesenen Eigner- und Zugriffs-Zertifikate sowie optional noch das Nutzer-Zertifikat des anfragenden Nutzers. Für den Nachweis der Berechtigung ist eine Dokumentation der Übertragungskette der Rechte nicht relevant. Dadurch, dass die Berechtigungstoken frei sind von den Nutzer-Zertifikaten der Übertragungskette, kann die Größe der Berechtigungstoken reduziert, das Verfahren beschleunigt und der Datenverkehr reduziert werden.

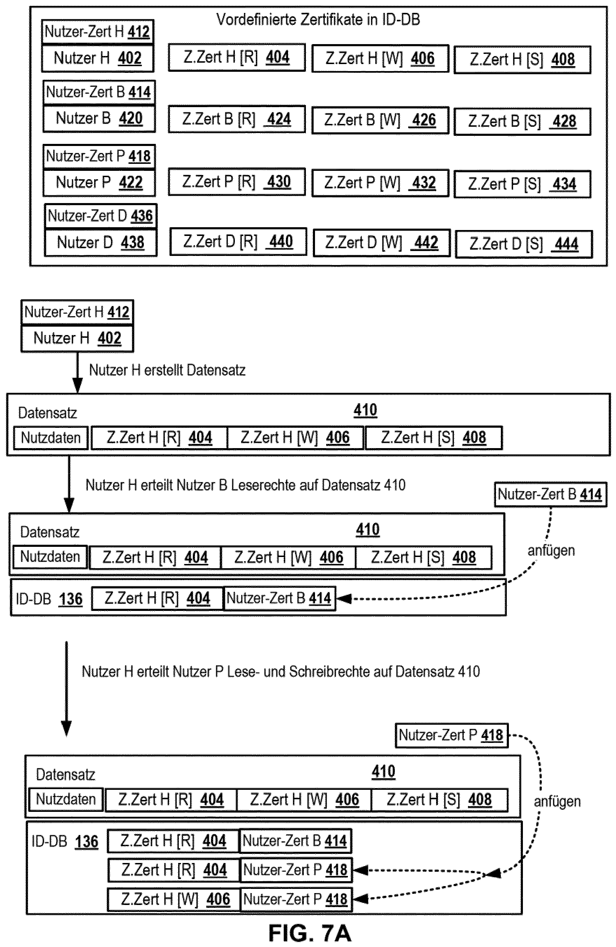

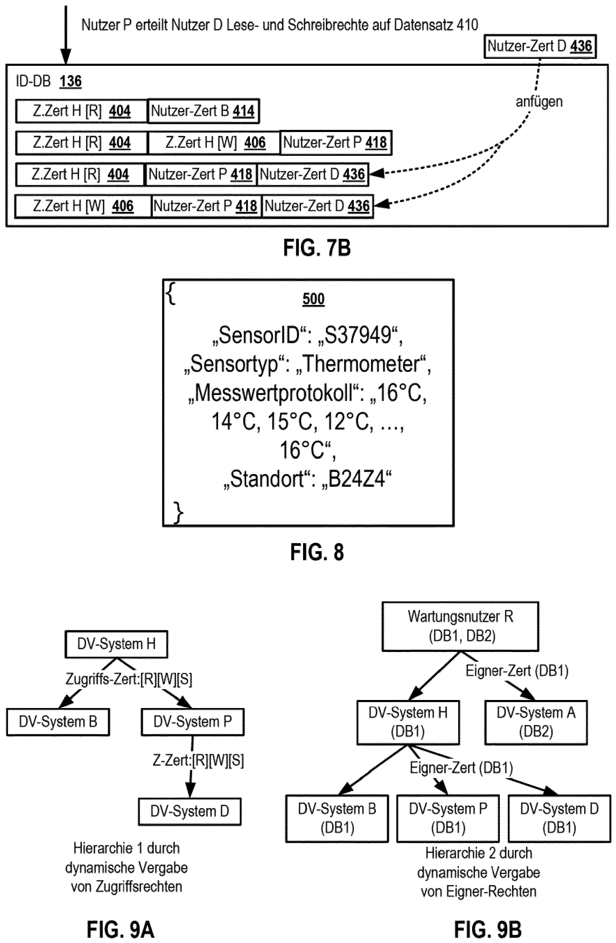

**Figur 7** zeigt beispielhaft für vier Nutzer 402, 420, 422, 438, die jeweils ein DV-System gemäß Ausführungsformen der Erfindung, eine Software, ein Gerät, einen sonstigen IoT Endknoten oder eine natürliche Person repräsentieren können, welche Zugriffs-Zertifikate und Nutzer-Zertifikate diesen Nutzern in der ID-Datenbank jeweils zugewiesen sein können. Beispielsweise ist dem Nutzer 402 ein Nutzer-Zertifikat 412 zugewiesen. Außerdem sind dem Nutzer drei Zugriffs-Zertifikate für unterschiedliche Arten des Zugriffs auf die von diesem Nutzer erstellten Datensätze zugewiesen, nämlich das Zugriffs-Zertifikat 404 für den Lesezugriff, das Zugriffs-Zertifikat 406 für den Schreibzugriff sowie das Zugriffs-Zertifikat 408 für den Zugriff auf einen oder mehrere Indices einer Nutzdaten-Datenbank um zu erfahren, ob und wie viele Datensätze dieser Nutzer in der Nutzdaten-Datenbank erstellt hat. In analoger Weise sind auch den anderen Nutzern 420, 422, 438 entsprechende Nutzer-Zertifikate und Zugriffs-Zertifikate zugewiesen.

Figur 7 illustriert zudem eine mögliche Sequenz der Übertragung von Zugriffs-Rechten über eine Kette mehrerer Nutzer.

In einem ersten Schritt erstellt der Nutzer 402 in einer Nutzdaten-Datenbank DB1 einen Datensatz 410. Im Zuge der Erstellung werden neben den eigentlichen Nutzdaten, wie zum Beispiel in Figur 7 abgebildet, automatisch im Hintergrund auch die drei Zugriffs-Zertifikate 404, 406, und 408, die dem erstellenden Nutzer 402 zugewiesen sind, in entsprechenden Feldern des Datensatzes gespeichert.

In einem nächsten Schritt überträgt der Ersteller 402 mithilfe einer GUI oder einer anderen geeigneten Schnittstelle einem anderen Nutzer 420 Leserechte auf den Datensatz 410 (sowie auf sämtliche anderen Datensätze, die der Nutzer 402 mit diesem speziellen Lesezugriffs-Zertifikat 404 erstellt hat). Dies bedeutet, dass das Zugriffs-Verwaltungssystem in der ID-Datenbank dem Nutzer dieses spezielle Lesezugriffs-Zertifikat 404 zuweist, zum Beispiel in dem dieses Zertifikat 404 mit dem Nutzer-Zertifikat 414 des Nutzers 420 verknüpft gespeichert wird, zum Beispiel innerhalb des gleichen Zugriffsermächtigungskettenobjekts.

Der Ersteller des Datensatzes 410 kann auch einem anderen Nutzer Zugriffsrechte einräumen. So räumt der Nutzer 402 beispielsweise im nächsten Schritt einem anderen Nutzer 422 (Nutzer-Zertifikat 418) Lese-und Schreibrechte für sämtliche von dem Nutzer 402 erstellten Datensätze, die die Zertifikate 404 und 406 beinhalten, ein. Die ID-Datenbank bzw. die Ermächtigungskettenobjekte werden um ein neues Zugriffsermächtigungskettenobjekt je Zugriffs-Zertifikat 404, 406, das dem Nutzer-Zertifikat 418 zugewiesen werden soll, ergänzt, welche spezifizieren, dass der Nutzer 402 dem Nutzer 422 die Zugriffs-Zertifikate 404 und 406 zugewiesen hat. In den neu generierten Zugriffsermächtigungskettenobjekten kann jeweils eine Kopie des oder der zugewiesenen Zugriffs-Zertifikate gespeichert sein, die zumindest im Hinblick auf den Wert eines Delegierbarkeitsparameters von dem ursprünglichen Zugriffs-Zertifikat abweicht. Dadurch kann jeder Nutzer der Kette kontrollieren, ob ein anderer Nutzer, dem er bestimmte Rechte einräumt, diese weitergeben kann oder nicht. In dem in Figur 6 dargestellten Beispiel wurden dem Nutzer 422 die Zugriffsrechte 404 und 406 in delegierbarer Form zugewiesen. Alternativ dazu ist es auch möglich dass nur ein einziges Zugriffsermächtigungskettenobjekt erzeugt wird, welches beide Zugriffs-Zertifikate 404, 406 und das Nutzer-Zertifikat 418 beinhaltet.

Der Nutzer 418 kann diese Rechte also an andere weitergeben, was im nächsten Schritt illustriert ist: der Nutzer 422 weist die ihm zugewiesenen Zugriffs-Rechte 404 und 406 nunmehr auch an den Nutzer 438 zu. Diese Zuweisung bewirkt eine Erstellung eines neuen Zugriffsermächtigungskettenobjekts in der ID-Datenbank für jedes der Zugriffs-Zertifikate 404, 406, in welchen jeweils die in ihnen enthaltene Nutzer-Zertifikatskette durch Anfügen eines weiteren Nutzer-Zertifikats 436 des Nutzers, dem die Rechte zugewiesen wurden, um ein Glied erweitert wird. Nach einer alternativen Implementierung wird für zwei oder mehrere Zugriffs-Zertifikate, die mit der gleichen Kette an Nutzer-Zertifikaten verknüpft sind, insgesamt nur ein neues Zugrifffsermächtigungskettenobjekt pro Rechteübertragung an einen anderen Nutzer erzeugt. Im Beispiel von Figur 7b würden die Zertifikate 404 und 406 im gleichen Zugrifffsermächtigungskettenobjekt gespeichert sein, welches zudem auch die Nutzer-Zertifikate 418 und 436 beinhaltet.

Die in den Ermächtigungskettenobjekten dokumentierte Kette an Nutzer-Zertifikaten dokumentiert gemäß Ausführungsformen der Erfindung die Übertragung von Eigner- oder Zugriffs-Rechten über eine Sequenz mehrerer Nutzer. Die Sequenz kann aus einer bloßen Aneinanderreihung von Nutzer-Zertifikaten bestehen, wobei beispielsweise die Position der Nutzer-Zertifikate innerhalb der Kettenobjekte die zeitliche Reihe der Übertragungen repräsentiert. Optional kann nach manchen Ausführungsformen die Kette von Nutzer-Zertifikaten innerhalb eines Ermächtigungskettenobjekten dadurch generiert werden, dass die ID-Datenbank die den einzelnen Nutzer-Zertifikaten zugeordneten privaten Schlüssel so verwendet, dass das letzte Nutzer-Zertifikat in der Kette das an dieses neuangefügte neue Nutzer-Zertifikat signiert, sodass auch innerhalb der Kette der Nutzer-Zertifikate der einzelnen Ermächtigungskettenobjekte eine Zertifikatskettenprüfung möglich ist.

**Figur 8** zeigt ein Beispiel für Nutzdaten 500, die Bestandteil eines Datensatzes 106, 108 sein können. Die Nutzdaten sind im JSon Format spezifiziert. Es können jedoch auch beliebige andere Datenformate verwendet werden.

**Figur 9** zwei dynamisch und unabhängig voneinander durch mehrere Nutzer generierte Hierarchien, entlang welcher einerseits Zugriffsrechte und andererseits Eignerrechte über eine Kaskade von Nutzern vergeben wurden.

So repräsentiert die in **Figur 9A** abgebildete Hierarchie eine Kaskade von Zugriffsrechten auf ein oder mehrere von DV-System H erstellte Datensätze. Beispielsweise repräsentiert das DV-System H eine Turbine, auf welcher mehrere Sensoren für die Temperatur und mehrere Sensoren für Schwingungszustände sowie ein Sensor für die aktuelle Umdrehungszahl der Turbine enthalten sind. Jeder dieser Sensoren wie auch die Steuerungsplatine der Turbine selbst kann als DV-System gemäß Ausführungsformen der Erfindung implementiert sein, welche mit allen anderen DV-Systemen nach entsprechendem Nachweis der Berechtigung Daten austauschen kann. Beispielsweise können sämtliche Sensoren nach entsprechendem Nachweis einer Schreibberechtigung ihre Messdaten in die Nutzdatenbank der die Kontrollerplatine bzw. des DV-System H schreiben, wobei die Sensoren hier jeweils als Anfrageeinheit auftreten und auf Basis eines Verfahrens nach Ausführungsformen der Erfindung nachweisen müssen, dass Sie die erforderlichen Schreibrechte haben.

Beispielsweise kann das Zugriffs-Recht je nach Sensortyp neben einem Recht zum Schreiben [W] auch ein Recht auf Lesen [R] und Indexzugriff [S] besitzen. Die verschiedenen Zugriffsrechte können mittels dreier unterschiedlicher Zugriffs-Zertifikate auf andere DV-Systeme, z.B. DV-System H, übertragen werden. Für die initiale Berechtigungsprüfung ist es ausreichend, dass zumindest eines der Zugriffs-Zertifikate in der ID-Datenbank des DV-Systems H als Referenzberechtigungsnachweis vorhanden ist. Falls dies der Fall ist, kann im Zuge einer weiteren Berechtigungsprüfung geprüft werden, ob noch weitere Zugriffszertifikate in der Anfrage vorhanden sind und bezüglich welcher Zugriffsarten diese Zertifikate ein Zugriffsrecht einräumen.

Beispielsweise hat im vorliegenden Fall hat das DV-System H einen Datensatz erstellt der drei Zugriffs-Zertifikate für die besagten drei Zugriffsrechten (in der Nutzdaten-Datenbank) enthält. Das DV-System H weist diese Zugriffrechte über die drei Zugriffs-Zertifikate den DV-Systemen B und P zu, wobei DV-System P diese Zugriffsrechte auf die von DV-System H erstellten Datensätze wiederum an das DV-System D weitergibt. Somit bezieht DV-System D seine Zugriffsrechte auf die Daten von DV-System H über das "Mittlersystem" "P".

Die in **Figur 9B** abgebildete Hierarchie bildet eine Kaskade von Eigner-Rechten auf ein oder mehrere Nutzdaten-Datenbanken DB1, DB2 ab. Der für die Wartung der Turbine (DV-System H) und weiterer Turbinen (DV-System A) verantwortliche technische Fachmann (Wartungsnutzer) hat z.B. Eigner-Zertifikate sowohl für Datenbank DB1 als auch DB2. Er überträgt diese Eigner-Rechte derart, dass DV-System H ein Eigner-Zertifikat für die Datenbank DB1 und DV-System A ein Eigner-Zertifikat für Datenbank DB2 zugewiesen wird. DV-System H wiederum überträgt Eignerschafts-Rechte für die Datenbank DB1 an die DV-Systeme B, P und D. Jedem DV-System, das ein Eigner-Zertifikat für z.B. DB1 zugewiesen bekommt, ist damit ermächtigt, eine Datenbankverbindung zu der entsprechenden Nutzdaten-Datenbank aufzubauen und in dieser eigene Datensätze anzulegen. Im vorliegenden Fall hat das DV-System D Eignerschaftsrechte für die Datenbank DB1 über das DV-System H vom Wartungsnutzer erhalten. Die Weitergabe von Zugriffsrechten über Zugriffs-Zertifikate wie in Figur 9A dargestellt und die Weitergabe von Eigner-Rechten über Eigner-Zertifikate wie in Figur 9B dargestellt erfolgen entlang einer dynamisch zwischen menschlichen Nutzern und/oder DV-Systemen definierten Kette des Vertrauens.

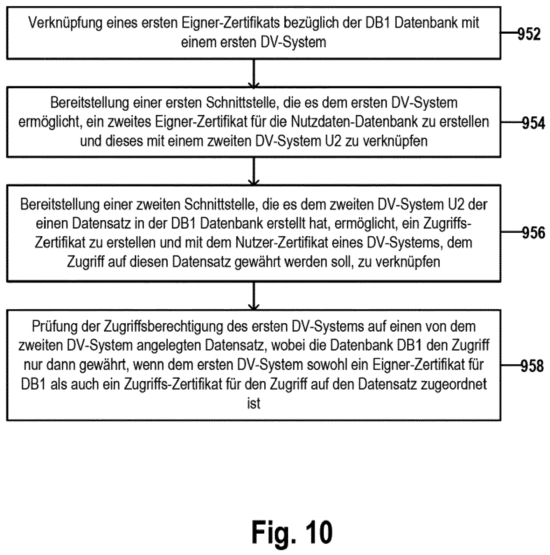

**Figur 10** zeigt ein Flussdiagramm einer weiteren Ausführungsform eines erfindungsgemäßen Verfahrens zur Zugriffskontrolle auf Datensätze 106, 108, 110, 112, 114, 116 mehrerer Nutzdaten-Datenbanken eines Zugriffs-Verwaltungssystems 100. In einem ersten Schritt 952 des Verfahrens wird ein erstes Eigner-Zertifikats 128, 13), das einer Nutzdaten-Datenbank 102 zugeordnet ist, mit einem ersten DV-System U1 verknüpft. Ein Eigner-Zertifikat ist ein Zertifikat, das einer oder mehreren Nutzdaten-Datenbanken zugeordnet ist und das jedem DV-System, mit dem es verknüpft ist, das Recht gewährt, Datensätze in dieser Nutzdaten-Datenbank anzulegen. Die Verknüpfung kann z.B. manuell durch einen menschlichen Nutzer über eine GUI des Zugriffs-Verwaltungssystems eines DV-Systems 100 vorgenommen werden, welches die Nutzdaten-Datenbank und die ID-Datenbank beinhaltet, oder automatisch und implizit durch das Zugriffs-Verwaltungssystem dieses DV-Systems, z.B. dann, wenn ein externes DV-System eine neue Nutzdaten-Datenbank innerhalb des Systems 100 anlegt.

In einem weiteren Schritt 954 wird eine erste Schnittstelle 142 bereitgestellt, die es dem ersten DV-System U1 ermöglicht, ein zweites Eigner-Zertifikat für die Nutzdaten-Datenbank 102 zu erstellen und dieses mit einem zweiten DV-System U2 zu verknüpfen um diesem zu ermöglichen, Datensätze in der Nutzdaten-Datenbank 102 anzulegen. Die erste Schnittstelle kann z.B. in Form einer GUI implementiert sein, welche Zugriff auf die ID-Datenbank hat und die von dem DV-System erstellten Zertifikate und/oder die von einem entsprechend berechtigten Nutzer erstellte Zuweisung von Eigner-Zertifikaten an andere Nutzer in Form von Eigner- und Nutzer-Zertifikatszuweisungen in der ID-Datenbank zu speichert.

In einem weiteren Schritt 956 wird eine zweite Schnittstelle 144 bereitgestellt, die es dem zweiten DV-System U2, der einen Datensatz 106, 108 in der Nutzdaten-Datenbank 102 erstellt hat, ermöglicht, mindestens ein Zugriffs-Zertifikat Z.Zert_U2[W], Z.Zert_U2[R], Z.Zert_U2[S], das eine Art des Datensatzzugriffs auf den von dem zweiten DV-System erstellten Datensatz spezifiziert, zu erstellen und mit dem Nutzer-Zertifikat eines DV-Systems, dem Zugriff auf diesen Datensatz gewährt werden soll, zu verknüpfen. Die zweite Schnittstelle kann z.B. ebenfalls in Form einer GUI oder eines Teils der oben erwähnten GUI implementiert sein. Die Zugriffs-Zertifikate und/oder die von einem entsprechend berechtigten DV-System erstellte Zuweisung von Zugriffs-Zertifikaten an andere DV-Systeme in Form von Zugriffs- und Nutzer-Zertifikatszuweisungen werden in der ID-Datenbank gespeichert.

Das Zugriffs-Verwaltungssystem prüft, in Antwort auf eine Zugriffsanfrage des ersten DV-Systems bezüglich der in der Nutzdaten-Datenbank 102 gespeicherten Datensätze in Schritt 958, ob das erste DV-System eine Zugriffsberechtigung auf einen von dem zweiten DV-System angelegten Datensatz besitzt, ob dem ersten DV-System also von dem zweiten DV-System ein entsprechendes Zugriffs-Zertifikat für die von dem zweiten DV-System erstellten Datensätze zugewiesen wurde. Die Nutzdaten-Datenbank gewährt dem ersten DV-System den Zugriff auf die von dem zweiten DV-System angelegte Datensätze nur dann, wenn dem ersten DV-System in der ID-Datenbank sowohl ein Eigner-Zertifikat für die Nutzdaten-Datenbank 102 als auch ein Zugriffs-Zertifikat für den Zugriff auf den Datensatz zugeordnet ist.

### Bezugszeichenliste

- 100: DV-System
- 102: Nutzdaten-Datenbank DB1
- 104: Nutzdaten-Datenbank DB2
- 105: öffentlicher Signaturprüfschlüssel
- 106: Datensatz
- 107: privater Signierschlüssel
- 108: Datensatz
- 110: Datensatz
- 111: Signatur
- 112: Datensatz
- 113: Signatur
- 114: Datensatz
- 115: Signatur
- 116: Datensatz
- 118: Delegierter-Parameter
- 122: Berechtigungstoken
- 123: Modul zur Zertifikatskettenprüfung
- 124: drittes Nutzer-Zertifikat
- 125: Log
- 126: Nutzer
- 128: Eigner-Zertifikat für Datenbank DB1
- 132: zweites Nutzer-Zertifikat
- 134: erstes Nutzer-Zertifikat
- 136: ID-Datenbank
- 137: Zugriffs-und Eignerschafts-Ermächtigungskettenobjekte
- 138: Zertifikatskette
- 139: Eignerschaftsermächtigungskettenobjekt
- 140: Zertifizierungsstelle
- 141: Eignerschaftsermächtigungskettenobjekt
- 142: erste Schnittstelle
- 143: Zugriffsermächtigungskettenobjekt
- 144: zweite Schnittstelle
- 202: Nutzer, z.B. registrierte DV-Systeme
- 204: Nutzer-Zertifikate
- 206: Konnektivitäts- Berechtigungstoken für best. Nutzer und DB
- 208: Signatur eines privaten Schlüssels einer Zertifizierungsstelle
- 210: öffentlicher Signaturprüfschlüssel einer Zertifizierungsstelle
- 212: privater Signaturschlüssel der Zertifizierungsstelle
- 214: Trust-Center
- 216: IDs von Nutzdaten-Datenbanken
- 220: Berechtigungstoken für Nutzer U2
- 222: Berechtigungstoken für Nutzer U3
- 225: Zugriffs- Berechtigungstoken für best. Nutzer und Datensatz
- 226: Zugriffs- Berechtigungstoken für best. Nutzer und Datensatz
- 227: Konnektivitäts- Berechtigungstoken für best. Nutzer und DB
- 228: Fehlen des [S] Zugriffsrechts für Nutzer U2 bzgl. Daten, die von Nutzer U1 erstellt wurden
- 229: Fehlen des [W] Zugriffsrechts für Nutzer U3 bzgl. Daten, die von Nutzer U1 erstellt wurden
- 230: Fehlen des [R] Zugriffsrechts für Nutzer U3 bzgl. Daten, die von Nutzer U1 erstellt wurden
- 232: [W] und [R] Zugriffsrechte des Nutzers U2 auf Daten, die von Nutzer U1 erstellt wurden
- 234: Zugriffsrechte des Nutzers U3 auf Daten, die von Nutzer U1 und U2 erstellt wurden
- 236: Signatur von Berechtigungstoken 225
- 237: Signatur von Berechtigungstoken 206
- 238: Signatur von Berechtigungstoken 226
- 239: Signatur von Berechtigungstoken 227
- 240: Signatur von Berechtigungstoken 242
- 242: Zugriffs- Berechtigungstoken für best. Nutzer und Datensatz
- 300: DV-System
- 302: Mikrocontroller
- 304: Mikroprozessor(en)
- 306: Arbeitsspeicher
- 308: Eingabe/Ausgabe- Ports
- 310: nicht-volatiler Programmspeicher
- 312: Referenzberechtigungsnachweis
- 314: Hardware- oder Softwarefunktionalität
- 316: Prüfprogramm
- 318: Wartungs-Nutzer
- 320: Angreifer
- 322: Anfrage
- 324: Berechtigungsnachweis innerhalb Anfrage
- 326: Netzwerk
- 328: Anfrageeinheit
- 330: Krankenhausgebäude
- 332: Notstromaggregat
- 334: Notstromaggregat
- 336: DV-System
- 340: System
- 402: Nutzer H
- 404-408: Zugriffs-Zertifikate für von H erstellte Daten
- 410: Datensatz
- 412: Nutzer-Zertifikat für Nutzer H
- 420: Nutzer B
- 424-428: Zugriffs-Zertifikate für von B erstellte Daten
- 414: Nutzer-Zertifikat für Nutzer B
- 422: Nutzer P
- 430-434: Zugriffs-Zertifikate für von P erstellte Daten
- 418: Nutzer-Zertifikat für Nutzer P
- 436: Nutzer D
- 440-444: Zugriffs-Zertifikate für von D erstellte Daten
- 438: Nutzer-Zertifikat für Nutzer D
- 500: Nutzdaten
- 702: ID-Management-Modul
- 802-818: Schritte
- 900: Verteiltes System aus mehreren DV-Systemen
- 902: DV-System
- 904: Mikroprozessor
- 906: Vorhersageprogramm
- 908: Modellsynchronisationsmodul
- 914: Trainingsdaten (von lokalem Sensor erfasst)
- 916: Sensor
- 919: Machine-Learning Modell
- 920-924: Nutzer
- 952-958: Schritte

## Patentansprüche

1. Datenverarbeitungssystem (300, 902.1, 902.2, 902.3), hier als DV-System bezeichnet, umfassend:
- zumindest eine Recheneinheit, wobei die Recheneinheit ausgebildet ist als Mikroprozessor (304, 904.1, 904.2, 904.3) und/oder Mikrocontroller;
- ein nicht-flüchtiges Speichermedium (310) mit einem oder mehreren Referenzberechtigungsnachweisen (312), wobei jeder Referenzberechtigungsnachweis in Form eines numerischen Datenwerts ausgebildet ist;
- eine Schnittstelle (308) zum Empfang von Anfragen über ein Netzwerk;
wobei das DV-System ausgebildet ist zum:
• Empfang (804) einer Anfrage (322) über die Schnittstelle von einer Anfrageeinheit (328);
• Prüfen (806), ob die Anfrage einen Berechtigungsnachweis (324) enthält, der identisch ist zu einem der Referenzberechtigungsnachweise, durch die zumindest eine Recheneinheit;
• Falls die Prüfung ergibt, dass die Anfrage diesen Berechtigungsnachweis nicht enthält, Abbruch (808) der Prüfung, ohne eine Antwort irgendeiner Form an die Anfrageeinheit zurückzugeben, und Trennung (812) der Netzwerkverbindung zu der Anfrageeinheit durch das DV-System.

2. DV-System nach einem der vorigen Ansprüche, wobei es sich bei dem DV-System um ein eingebettetes System handelt.

3. DV-System nach einem der vorigen Ansprüche, wobei das DV-System ferner umfasst:
- eine software- oder hardwarebasierte Funktionalität (314);
wobei das DV-System ausgebildet ist zum:
- nur falls die Prüfung ergibt, dass die Anfrage diesen Berechtigungsnachweis enthält, Durchführen (810) einer weiteren Berechtigungsprüfung durch die zumindest eine Recheneinheit und Ausführen (816) der Funktionalität nur dann, wenn die weitere Berechtigungsprüfung ergibt, dass die Anfrageeinheit zur Veranlassung der Ausführung der Funktionalität berechtigt ist.

4. DV-System nach Anspruch 3, wobei das Speichermedium des DV-Systems beinhaltet:
- Eine erste Nutzdaten-Datenbank (102, 104), wobei die Nutzdaten-Datenbank mehrere Datensätze (106, 108, 110, 112, 114, 116) beinhaltet, wobei ein Zugriff auf zumindest einen der Datensätze zur Durchführung der Funktion erforderlich ist;
- eine ID-Datenbank (136), wobei in der ID-Datenbank eine Vielzahl von Nutzer-Zertifikaten (412, 414, 418, 436, 412, 414) und eine Vielzahl von Zugriffs-Zertifikaten (404, 406, 408, 424, 426, 444) gespeichert sind,
• wobei ein Nutzer-Zertifikat ein einem Nutzer eindeutig zugewiesener Datenwert ist,
• wobei ein Zugriffs-Zertifikat (Z.Zert_U2[W], Z.Zert_U2[R], Z.Zert_U2[S]), ein numerischer Datenwert ist, der einem Nutzer durch Zuweisung dieses Zugriffs-Zertifikat an dessen Nutzer-Zertifikat in der ID-Datenbank eine bestimmte Art des Datensatzzugriffs auf Datensätze der Nutzdaten-Datenbank gewährt;
- wobei die weitere Berechtigungsprüfung eine Prüfung umfasst, ob die Anfrage ein Nutzer-Zertifikat enthält, dem in der ID-Datenbank eines der Zugriffs-Zertifikate zugeordnet ist, welches die Anfrageeinheit zur Veranlassung der Ausführung der Funktionalität berechtigt, wobei das DV-System dazu konfiguriert ist, die Ausführung dieser Funktionalität nur dann zu veranlassen, wenn die Anfrage ein solches Nutzer-Zertifikat enthält.

5. DV-System nach Anspruch 4, wobei jeder der Referenzberechtigungsnachweise (312) eines der Zugriffs-Zertifikate der ID-Datenbank ist.

6. DV-System nach Anspruch 4 oder 5, wobei das Zugriffs-Zertifikat ausgewählt ist aus einer Gruppe umfassend:
- ein Lesezugriffs-Zertifikat (Z.Zert_U2[R]), welches einem Nutzer einen lesenden Zugriff auf den zumindest einen Datensatz ermöglicht;
- ein Schreibzugriffs-Zertifikat (Z.Zert_U2[W]), welches einem Nutzer einen modifizierenden Zugriff auf den zumindest einen Datensatzes ermöglicht;
- ein Indexzugriffs-Zertifikat (Z.Zert_U2[S]), welches einem Nutzer Kenntnis der Existenz des zumindest einen Datensatzes in der Nutzdaten-Datenbank und einen lesenden Zugriff auf Metadaten des zumindest einen Datensatzes ermöglicht.

7. DV-System nach einem der Ansprüche 4-6,
- wobei die Anfrage ein Nutzer-Zertifikat, hier als Anfragenutzer-Zertifikat bezeichnet, beinhaltet,
- wobei die Datensätze der Nutzdatenbank jeweils das Zugriffs-Zertifikat desjenigen Nutzers, welcher den Datensatz erstellt hat, als Bestandteil des Datensatzes in einem eigenen Feld des Datensatzes beinhalten;
- wobei in der ID-Datenbank (136) eine Vielzahl Zugriffsermächtigungskettenobjekten (143) gespeichert sind, wobei jedes Zugriffsermächtigungskettenobjekt eines der Zugriffs-Zertifikate und ein oder mehrere der Nutzer-Zertifikate beinhaltet, wobei die Reihung der Nutzer-Zertifikate in dem Zugriffsermächtigungskettenobjekt die Sequenz der Nutzer, die dieses Zugriffs-Zertifikat einem jeweils anderen Nutzer, dessen Nutzer-Zertifikat in dem Zugriffsermächtigungskettenobjekt enthalten ist, zugewiesen haben, widergibt, wobei die Reihung der Nutzer-Zertifikate in dem Zugriffsermächtigungskettenobjekt die Sequenz der Gewährung des in dem Zugriffs-Zertifikat spezifizierten Rechtes ausgehend von dem durch das erste Nutzer-Zertifikat in dem Zugriffsermächtigungskettenobjekt repräsentierten Nutzers angibt;
- wobei die weitere Berechtigungsprüfung eine Prüfung umfasst, ob in der ID-Datenbank ein Zugriffsermächtigungskettenobjekt existiert, das ein Zugriffs-Zertifikat beinhaltet, das identisch ist zu dem in der Anfrage enthaltene Berechtigungsnachweis, wobei dieses Zugriffsermächtigungskettenobjekt dieses Zugriffs-Zertifikat dem Anfragenutzer-Zertifikat direkt oder über eine Kette aus ein oder mehreren weiteren Nutzer-Zertifikaten zuweist, wobei diese Zuweisung die Gewährung des in dem Zugriffs-Zertifikat spezifizierten Rechtes an den durch das Anfragenutzer-Zertifikat repräsentierten Anfrage-Nutzers belegt;
wobei die weitere Berechtigungsprüfung nur dann, wenn die ID-Datenbank ein solches Zugriffsermächtigungskettenobjekt enthält, ergibt, dass die Anfrageeinheit zur Veranlassung der Ausführung der Funktionalität berechtigt ist.

8. DV-System nach einem der Ansprüche 4-7, wobei die Ausführung der Funktionalität eine Erzeugung von einem oder mehreren neuen Datensätzen in der Nutzdaten-Datenbank beinhaltet,
- wobei der Nutzdaten-Datenbank ein Eigner-Zertifikat (128, 130) zugeordnet ist,
- wobei das Eigner-Zertifikat in der ID-Datenbank einem Nutzer-Zertifikat eines Nutzers (U1) zugeordnet ist;
- wobei ein Eigner-Zertifikat ein Zertifikat ist, das einer oder mehreren Nutzdaten-Datenbanken zugeordnet ist und jedem Nutzer, dem es zugeordnet ist, das Recht gewährt, Datensätze in dieser Nutzdaten-Datenbank anzulegen.
- wobei die weitere Berechtigungsprüfung eine Prüfung umfasst, ob die Anfrage ein Nutzer-Zertifikat enthält, welches in der ID-Datenbank dem Eigner-Zertifikat der Nutzdaten-Datenbank zugeordnet ist, wobei die weitere Berechtigungsprüfung nur dann, wenn dies der Fall ist, ergibt, dass die Anfrageeinheit zur Veranlassung der Ausführung der Funktionalität berechtigt ist.

9. DV-System nach Anspruch 8,
- wobei die Nutzdaten-Datenbank des DV-Systems frei ist von Zugriffsermächtigungskettenobjekten und die Datensätze der Nutzdaten-Datenbank neben den Nutzdaten nur die Zugriffs-Zertifikate beinhalten, die dem Nutzer, welcher diesen Datensatz erstellt hat, Zugriff auf diesen Datensatz gewähren.

10. DV-System nach einem der vorigen Ansprüche 4-9, wobei die Anfrage eine Zugriffsanfrage eines Anfrage-Nutzers (U1) auf einen Datensatz (108), den ein Ersteller-Nutzer (U2) in der Nutzdaten-datenbank angelegt hat, umfasst, wobei das DV-System konfiguriert ist zum:
- Ermitteln der Zugriffs-Zertifikate (Z.Zert_U2[W], Z.Zert_U2[R], Z.Zert_U2[S]) des Ersteller-Nutzers, die in der Nutzdaten-Datenbank als Bestandteil des einen Datensatzes (108) gespeichert sind, durch die Nutzdaten-Datenbank;
- Senden des Anfrage-Nutzer-Zertifikats, das dem Nutzer der Anfrageeinheit zugeordnet ist, und der ermittelten Zugriffs-Zertifikate, an die ID-Datenbank;
- In Antwort auf den Empfang des Anfrage-Nutzer-Zertifikats und der ermittelten Zugriffs-Zertifikate, Generierung eines Berechtigungsnachweises (220, 222) durch die ID-Datenbank, wobei der Berechtigungsnachweis angibt, ob der Anfrage-Nutzer dem einen Datensatz (108) durch zumindest eines der Zugriffsermächtigungskettenobjekte zugewiesen ist;
- Übermittlung des Berechtigungsnachweises von der ID-Datenbank an die Nutzdaten-Datenbank;
- Prüfung, durch die Nutzdaten-Datenbank, anhand des Berechtigungsnachweises, ob dem Anfrage-Nutzer ob dem Anfrage-Nutzer die erforderlichen Zugriffsrechte in Form von Zugriffs-Zertifikate in Bezug auf den einen Datensatz (108) zugewiesen sind;
- wobei die Nutzdaten-Datenbank dazu konfiguriert ist, dem Anfrage-Nutzer Zugriff auf den einen Datensatz nur in dem Umfang zu gewähren, welche dem Anfrage-Nutzer die diesem in dem Berechtigungsnachweis zugewiesenen Zugriffs-Zertifikate einräumen.

11. DV-System nach Anspruch 10, wobei die ID-Datenbank einen privaten Signierschlüssel (107) umfasst, wobei die Nutzdaten-Datenbank (102, 104) einen öffentlichen Signaturprüfschlüssel (105) umfasst, welcher zur Prüfung der mit dem Signierschlüssel erstellten Signaturen ausgebildet ist, wobei das DV-System konfiguriert ist zum:
- Signierung des Berechtigungsnachweises durch die ID-Datenbank mit dem Signierschlüssel, wobei der Berechtigungsnachweis in signierter Form an die Nutzdaten-Datenbank übermittelt wird; und
- Prüfung, durch die Nutzdaten-Datenbank mittels des Signaturprüfschlüssels, ob die Signatur des Berechtigungsnachweises valide ist, wobei der Aufbau der Datenbankverbindung zwischen Anfrageeinheit und Nutzdaten-Datenbank und der Datensatzzugriff nur dann gestattet wird, wenn die Signatur valide ist.

12. Verfahren zum Betrieb eines Datenverarbeitungssystems (300, 902.1, 902.2, 902.3), hier als DV-System bezeichnet, umfassend:
- Bereitstellung des DV-Systems, wobei das DV-System umfasst: zumindest eine Recheneinheit (304, 904.1, 904.2, 904.3), wobei die Recheneinheit ausgebildet ist als Mikrokontroller und/oder Mikroprozessor, ein nicht-flüchtiges Speichermedium (310) mit einem oder mehreren Referenzberechtigungsnachweisen (312), wobei jeder Referenzberechtigungsnachweis in Form eines numerischen Datenwerts ausgebildet ist, und eine Schnittstelle (308) zum Empfang von Anfragen über ein Netzwerk;
- Empfang (804) einer Anfrage (322) über die Schnittstelle von einer Anfrageeinheit (328) durch das DV-System;
- Prüfen (806), ob die Anfrage einen Berechtigungsnachweis (324) enthält, der identisch ist zu einem der Referenzberechtigungsnachweise, durch die zumindest eine Recheneinheit;
- Falls die Prüfung ergibt, dass die Anfrage diesen Berechtigungsnachweis nicht enthält, Abbruch (808) der Prüfung durch das DV-System, ohne eine Antwort irgendeiner Form an die Anfrageeinheit zurückzugeben, und Trennung (812) der Netzwerkverbindung zu der Anfrageeinheit durch das DV-System.

13. Verfahren nach Anspruch 12,
- wobei das Verfahren zum Schutz des DV-Systems gegen Denial-of-Service Angriffe verwendet wird.

## Claims

1. A data processing system (300, 902.1, 902.2, 902.3), herein referred to as DP system:
- at least one computing unit, wherein the computing unit is configured as a microprocessor (304, 904.1, 904.2, 904.3) and/or microcontroller;
- a non-volatile storage medium (310) with one or more reference credentials (312), wherein each reference credential is in the form of a numerical data value;
- an interface (308) for receiving requests over a network;
wherein the DP system is configured to:
• receive (804) a request (322) via the interface from a request unit (328);
• check (806) whether the request contains a credential (324) that is identical to one of the reference credential by the at least one computing unit;
• if the check shows that the request does not contain this credential, terminate (808) the check without returning a response of any kind to the request unit, and disconnect (812) the network connection to the request unit by the DP system.

2. The DP system according to claim 1, wherein the DP system is an embedded system.

3. The DP system according to any one of the preceding claims, wherein the DP system further comprises:
- a software or hardware-based functionality (314); wherein the DP system is configured to:
- only if the check shows that the request contains this credential, perform (810) a further authorisation check by the at least one computing unit and execute (816) the functionality only if the further authorisation check shows that the request unit is authorised to initiate the execution of the functionality.

4. The DP system according to claim 3, wherein the storage medium of the DP system includes:
- a first payload database (102, 104), wherein the payload database includes a plurality of data records (106, 108, 110, 112, 114, 116), wherein access to at least one of the data records is required to perform the function;
- an ID database (136), wherein a plurality of user certificates (412, 414, 418, 436, 412, 414) and a plurality of access certificates (404, 406, 408, 424, 426, 444) are stored in the ID database,
• wherein a user certificate is a data value uniquely assigned to a user,
• wherein an access certificate (Z.Zert_U2[W], Z.Zert_U2[R], Z.Zert_U2[S]) is a numerical data value that grants a user a specific type of data record access to data records in the payload database by assigning this access certificate to the user's user certificate in the ID database;
- wherein the further authorisation check comprises a check as to whether the request contains a user certificate to which, in the ID database, one of the access certificates is assigned which authorises the request unit to initiate the execution of the functionality, wherein the DP system is configured to initiate the execution of this functionality only if the request contains such a user certificate.

5. The DP system according to claim 4, wherein each of the reference credentials (312) is one of the access certificates of the ID database.

6. The DP system according to claim 4 or 5, wherein the access certificate is selected from a group comprising:
- a read access certificate (Z.Zert_U2[R]), which enables a user to send access to the at least one data record;
- a write access certificate (Z.Zert_U2[W]), which allows a user modifying access to at least one data record;
- an index access certificate (Z.Zert_U2[S]), which enables a user to know the existence of the at least one data record in the payload database and read access to metadata of the at least one data record.

7. The DP system according to any one of claims 4-6,
- wherein the request includes a user certificate, herein referred to as request user certificate,
- wherein the data records of the payload database each contain the access certificate of the user who created the data record as part of the data record in a separate field of the data record;
- wherein a plurality of access authorisation chain objects (143) are stored in the ID database (136), wherein each access authorisation chain object includes one of the access certificates and one or more of the user certificates, wherein the order of the user certificates in the access authorisation chain object reflects the sequence of users who have assigned that access certificate to a respective other user whose user certificate is included in the access authorisation chain object, wherein the order of the user certificates in the access authorisation chain object reflects the sequence of the granting of the right specified in the access certificate starting from the user represented by the first user certificate in the access authorisation chain object;
- wherein the further authorisation check comprises a check as to whether, in the ID database, there exits an access authorisation chain object which contains an access certificate that is identical to the credential contained in the request, wherein this access authorisation chain object assigns this access certificate to the request user certificate directly or via a chain of one or more further user certificates, wherein this assignment confirms the granting of the right specified in the access certificate to the request user represented by the request user certificate,
- wherein the further authorisation check only shows that the request unit is authorised to initiate the execution of the functionality if the ID database contains such an access authorisation chain object.

8. The DP system according to any one of claims 4-7, wherein the execution of the functionality comprises a generation of one or more new data records in the payload database,
- wherein an owner certificate (128, 130) is assigned to the payload database,
- wherein the owner certificate is assigned to a user certificate of a user (U1) in the ID database;
- wherein an owner certificate is a certificate that is assigned to one or more payload databases and grants each user to whom it is assigned the right to create data records in this payload database,
- wherein the further authorisation check comprises a check as to whether the request contains a user certificate which is assigned to the owner certificate of the payload database in the ID database, wherein only if this is the case will the further authorisation check show that the request unit is authorised to initiate the execution of the functionality.

9. The DP system according to claim 9,
- wherein the payload database of the DP system is free of access authorisation chain objects and the data records of the payload database, in addition to the payload, only contain the access certificates that grant the user who created this data record access to this data record.

10. The DP system according to any one of preceding claims 4-9, wherein the request comprises an access request of a request user (U1) to a data record (108) created by a creator user (U2) in the payload database, wherein the DP system is configured to:
- determine the access certificates (Z.Zert_U2[W], Z.Zert_U2[R], Z.Zert_U2[S]) of the creator user, which are stored in the payload database as part of the one data record (108), by the payload database;
- send the request user certificate, which is assigned to the user of the request unit, and the determined access certificates to the ID database;
- in response to receiving the request user certificate and the determined access certificates, generate a credential (220, 222) by the ID database, wherein the credential indicates whether the request user is assigned to the one data record (108) by at least one of the access authorisation chain objects;
- transmit the credential from the ID database to the payload database;
- check by the payload database, on the basis of the credential, whether the request user has been assigned the necessary access rights in the form of access certificates in relation to the data record (108) ;
- wherein the payload database is configured to grant the request user access to the one data record only to the extent that the access certificates assigned to the request user in the credential grant said user access.

11. The DP system according to claim 10, wherein the ID database comprises a private signature key (107), wherein the payload database (102, 104) comprises a public signature verification key (105), which is configured to verify the signatures created with the signature key, wherein the DP system is configured to:
- sign the credential by the ID database with the signature key, wherein the credential is transmitted in signed form to the payload database; and
- check by the payload database using the signature verification key whether the signature of the credential is valid, wherein the establishment of the database connection between the request unit and the payload database and data record access is only permitted if the signature is valid.

12. A method for operating a data processing system (300, 902.1, 902.2, 902.3), referred to here as a DP system, said method comprising the steps of
- providing the DP system, wherein the DP system comprises: at least one computing unit (304, 904.1, 904.2, 904.3), wherein the computing unit is configured as a microcontroller and/or microprocessor, a non-volatile storage medium (310) with one or more reference credentials (312), wherein each reference credential is in the form of a numerical data value, and an interface (308) for receiving requests over a network;
- receiving (804) a request (322) via the interface from a request unit (328) by the DP system;
- checking (806) whether the request contains a credential (324) that is identical to one of the reference credentials by the at least one computing unit;
- if the check shows that the request does not contain this credential, terminating (808) the check by the DP system without returning a response of any kind to the request unit, and disconnecting (812) the network connection to the request unit by the DP system.

13. The method according to claim 12,
- wherein the method is used to protect the DP system against denial-of-service attacks.

## Revendications

1. Système de traitement de données (300, 902.1, 902.2, 902.3), appelé dans la suite système DP :
- au moins une unité de calcul, dans lequel l'unité de calcul est configurée en tant que
microprocesseur (304, 904.1, 904.2, 904.3) et/ou microcontrôleur ;
- un support de stockage non volatil (310) avec un ou plusieurs éléments d'authentification de référence (312), dans lequel chaque élément d'authentification de référence est sous la forme d'une valeur de données numérique ;
- une interface (308) destinée à recevoir des requêtes sur un réseau ;
dans lequel le système DP est configuré pour :
• recevoir (804) une requête (322) par l'intermédiaire de l'interface à partir d'une unité de requête (328) ;
• contrôler (806) si la requête contient un élément d'authentification (324) qui est identique à l'un des éléments d'authentification de référence par le biais de l'au moins une unité de calcul ;
• si le contrôle démontre que la requête ne contient pas cet élément d'authentification, terminer (808) le contrôle sans renvoyer de réponse de quelque sorte que ce soit à l'unité de requête, et déconnecter (812) la connexion réseau à l'unité de requête par le système DP.

2. Système DP selon la revendication 1, dans lequel le système DP est un système embarqué.

3. Système DP selon l'une quelconque des revendications précédentes, dans lequel le système DP comprend en outre :
- une fonctionnalité à base logicielle ou matérielle (314) ;
dans lequel le système DP est configuré pour :
- uniquement si le contrôle démontre que la requête contient cet élément d'authentification, réaliser (810) un contrôle d'autorisation supplémentaire par le biais de l'au moins une unité de calcul et exécuter (816) la fonctionnalité uniquement si le contrôle d'autorisation supplémentaire démontre que l'unité de requête est autorisée à initier l'exécution de la fonctionnalité.

4. Système DP selon la revendication 3, dans lequel le support de stockage du système DP inclut :
- une première base de données de charges utiles (102, 104), dans lequel la base de données de charges utiles inclut une pluralité de dossiers de données (106, 108, 110, 112, 114, 116), dans lequel l'accès à l'au moins un des dossiers de données est exigé pour réaliser la fonction ;
- une base de données d'ID (136), dans lequel une pluralité de certificats utilisateurs (412, 414, 418, 436, 412, 414) et une pluralité de certificats d'accès (404, 406, 408, 424, 426, 444) sont stockés dans la base de données d'ID,
• dans lequel un certificat utilisateur est une valeur de données attribuée de manière unique à un utilisateur,
• dans lequel un certificat
d'accès (Z.Zert_U2[W], Z.Zert_U2[R],
Z.Zert_U2[S] est une valeur de données numérique qui confère à un utilisateur un type spécifique d'accès à des dossiers de données dans la base de données de charges utiles en attribuant ce certificat d'accès au certificat utilisateur de l'utilisateur dans la base de données d'ID ;
- dans lequel le contrôle d'autorisation supplémentaire comprend un contrôle visant à déterminer si la requête contient un certificat utilisateur auquel, dans la base de données d'ID, l'un des certificats d'accès qui autorise l'unité de requête à initier l'exécution de la fonctionnalité est attribué, dans lequel le système DP est configuré pour initier l'exécution de cette fonctionnalité uniquement si la requête contient un tel certificat utilisateur.

5. Système DP selon la revendication 4, dans lequel chacun des éléments d'authentification de référence (312) est l'un des certificats d'accès de la base de données d'ID.

6. Système DP selon la revendication 4 ou 5, dans lequel le certificat d'accès est choisi dans un groupe comprenant :
- un certificat d'accès en lecture (Z.Zert_U2[R]), qui permet à un utilisateur d'envoyer un accès à l'au moins un dossier de données ;
- un certificat d'accès en écriture (Z.Zert_U2[W]), qui permet à un utilisateur de modifier un accès à au moins un dossier de données ;
- un certificat d'accès d'indexation (Z.Zert_U2[S]), qui permet à un utilisateur de connaître l'existence de l'au moins un dossier de données dans la base de données de charges utiles et d'accéder en lecture aux métadonnées de l'au moins un dossier de données.

7. Système DP selon l'une quelconque des revendications 4 à 6,
- dans lequel la requête inclut un certificat utilisateur, appelé dans la suite certificat utilisateur de requête,
- dans lequel les dossiers de données de la base de données de charges utiles contiennent chacun le certificat d'accès de l'utilisateur qui a créé le dossier de données en tant que partie du dossier de données dans un champ séparé du dossier de données ;
- dans lequel une pluralité d'objets de chaîne d'autorisation d'accès (143) sont stockés dans la base de données d'ID (136), dans lequel chaque objet de chaîne d'autorisation d'accès inclut l'un des certificats d'accès et un ou plusieurs des certificats utilisateurs, dans lequel l'ordre des certificats utilisateurs dans l'objet de chaîne d'autorisation d'accès reflète la séquence d'utilisateurs qui ont attribué ce certificat d'accès à un autre utilisateur respectif dont le certificat utilisateur est inclus dans l'objet de chaîne d'autorisation d'accès, dans lequel l'ordre des certificats utilisateurs dans l'objet de chaîne d'autorisation d'accès reflète la séquence de l'action de conférer le droit spécifié dans le certificat d'accès en commençant par l'utilisateur représenté par le premier certificat utilisateur dans l'objet de chaîne d'autorisation d'accès ;
- dans lequel le contrôle d'autorisation supplémentaire comprend un contrôle visant à déterminer si, dans la base de données d'ID, il existe un objet de chaîne d'autorisation d'accès qui contient un certificat d'accès qui est identique à l'élément d'authentification contenu dans la requête, dans lequel cet objet de chaîne d'autorisation d'accès attribue ce certificat d'accès aux certificats utilisateurs de requête directement ou par l'intermédiaire d'une chaîne d'un ou de plusieurs certificats utilisateurs supplémentaires, dans lequel cette attribution confirme l'action de conférer le droit spécifié dans le certificat d'accès à l'utilisateur de requête représenté par le certificat utilisateur de requête,
- dans lequel le contrôle d'autorisation supplémentaire démontre uniquement que l'unité de requête est autorisée pour initier l'exécution de la fonctionnalité si la base de données d'ID contient un tel objet de chaîne d'autorisation d'accès.

8. Système DP selon l'une quelconque des revendications 4 à 7, dans lequel l'exécution de la fonctionnalité comprend une génération d'un ou de plusieurs nouveaux dossiers de données dans la base de données de charges utiles,
- dans lequel un certificat propriétaire (128, 130) est attribué à la base de données de charges utiles,
- dans lequel le certificat propriétaire est attribué à un certificat utilisateur d'un utilisateur (U1) dans la base de données d'ID ;
- dans lequel un certificat propriétaire est un certificat qui est attribué à une ou plusieurs bases de données de charges utiles et confère à chaque utilisateur auquel il est attribué le droit de créer des dossiers de données dans cette base de données de charges utiles,
- dans lequel le contrôle d'autorisation supplémentaire comprend un contrôle visant à déterminer si la requête contient un certificat utilisateur qui est attribué au certificat propriétaire de la base de données de charges utiles dans la base de données d'ID, dans lequel, uniquement si c'est le cas, le contrôle d'autorisation supplémentaire démontrera que l'unité de requête est autorisée à initier l'exécution de la fonctionnalité.

9. Système DP selon la revendication 9,
- dans lequel la base de données de charges utiles du système DP est exempte d'objets de chaîne d'autorisation d'accès et les dossiers de données de la base de données de charges utiles, en plus de la charge utile, contiennent uniquement les certificats d'accès qui confèrent à l'utilisateur qui a créé ce dossier de données l'accès à ce dossier de données.

10. Système DP selon l'une quelconque des revendications 4 à 9 précédentes, dans lequel la requête comprend une requête d'accès d'un utilisateur de requête (U1) à un dossier de données (108) créé par un utilisateur créateur (U2) dans la base de données de charges utiles, dans lequel le système DP est configuré pour :
- déterminer les certificats d'accès (Z.Zert_U2[W], Z.Zert_U2[R], Z.Zert_U2[S]) de l'utilisateur créateur, qui sont stockés dans la base de données de charges utiles en tant que partie du dossier de données (108) concerné, par le biais de la base de données de charges utiles ;
- envoyer le certificat utilisateur de requête, qui est attribué à l'utilisateur de l'unité de requête, et les certificats d'accès déterminés à la base de données d'ID ;
- en réponse à la réception du certificat utilisateur de requête et des certificats d'accès déterminés, générer un élément d'authentification (220, 222) par le biais de la base de données d'ID, dans lequel l'élément d'authentification indique si l'utilisateur de requête est attribué au dossier de données (108) concerné par le biais d'au moins l'un des objets de chaîne d'autorisation d'accès ;
- transmettre l'élément d'authentification à partir de la base de données d'ID à la base de données de charges utiles ;
- contrôler par le biais de la base de données de charges utiles, sur la base de l'élément d'authentification, si l'utilisateur de requête s'est vu attribuer les droits d'accès nécessaires sous la forme de certificats d'accès en lien avec le dossier de données (108) ;
- dans lequel la base de données de charges utiles est configurée pour conférer l'accès au dossier de données concernées à l'utilisateur de requête uniquement dans la limite où les certificats d'accès attribués à l'utilisateur de requête dans l'élément d'authentification confèrent l'accès audit utilisateur.

11. Système DP selon la revendication 10, dans lequel la base de données d'ID comprend une clé de signature privée (107), dans lequel la base de données de charges utiles (102, 104) comprend une clé de vérification de signatures publiques (105), qui est configurée pour vérifier les signatures créées avec la clé de signature, dans lequel le système DP est configuré pour :
- signer l'élément d'authentification par le biais de la base de données d'ID avec la clé de signature, dans lequel l'élément d'authentification est transmis sous forme signée à la base de données de charges utiles ; et
- contrôler par le biais de la base de données de charges utiles en utilisant la clé de vérification de signatures si la signature de l'élément d'authentification est valide, dans lequel l'établissement de la connexion à la base de données entre l'unité de requête et la base de données de charges utiles et l'accès au dossier de données est uniquement permis si la signature est valide.

12. Procédé de fonctionnement d'un système de traitement de données (300, 902.1, 902.2, 902.3), appelé ici un système DP, ledit procédé comprenant les étapes consistant à
- fournir le système DP, dans lequel le système DP comprend : au moins une unité de calcul (304, 904.1, 904.2, 904.3), dans lequel l'unité de calcul est configurée en tant que microcontrôleur et/ou microprocesseur, un support de stockage non volatil (310) avec un ou plusieurs éléments d'authentification de référence (312), dans lequel chaque élément d'authentification de référence est sous la forme d'une valeur de données numérique, et une interface (308) destinée à recevoir les requêtes sur un réseau ;
- recevoir (804) une requête (322) par l'intermédiaire de l'interface à partir d'une unité de requête (328) par le biais du système DP ;
- contrôler (806) si la requête contient un élément d'authentification (324) qui est identique à l'un des éléments d'authentification de référence par le biais de l'au moins une unité de calcul ;
- si le contrôle démontre que la requête ne contient pas cet élément d'authentification, terminer (808) le contrôle par le système DP sans renvoyer de réponse de quelque sorte que ce soit à l'unité de requête, et déconnecter (812) la connexion réseau à l'unité de requête par le système DP.

13. Procédé selon la revendication 12,
- dans lequel le procédé est utilisé pour protéger le système DP contre les attaques par déni de service.
